# EUROPEAN PATENT APPLICATION

(11) **EP 4 791 041 A1**
(43) Date of publication of application: **12.08.2026**
(21) Application number: 24874708.1
(22) Date of filing: 03.10.2024
(51) Int. Cl.: H04S 7/00, H04R 3/00

(54) **ACOUSTIC PROCESSING DEVICE, THRESHOLD SPECIFYING DEVICE, AND ACOUSTIC PROCESSING METHOD**

(30) Priority: 06.10.2023 JP 2023174706
(71) Applicant: Panasonic Intellectual Property Corporation of America, Torrance, CA 90504 (US)
(72) Inventor: MIYASAKA, Shuji, Neyagawa-shi, Osaka 572-0004 (JP); NAKAHASHI, Kota, Kadoma-shi, Osaka 571-0057 (JP); ISHIKAWA, Tomokazu, Kadoma-shi, Osaka 571-0057 (JP); EHARA, Hiroyuki, Kadoma-shi, Osaka 571-0057 (JP); USAMI, Hikaru, Kadoma-shi, Osaka 571-0057 (JP); ENOMOTO, Seigo, Kadoma-shi, Osaka 571-0057 (JP)
(74) Representative: Novagraaf International SA
(86) International application number: PCT/JP2024/035511
(87) International publication number: WO 2025/075108

(57) **Abstract**

An acoustic processing device (1001) includes a circuit (1402) and a memory (1404). Using the memory (1404), the circuit (1402): obtains sound space information on a sound space; obtains a sound volume ratio between a sound volume of a direct sound and a sound volume of a reflected sound, the direct sound being generated from a sound source in the sound space, the reflected sound being generated in the sound space in response to the direct sound; obtains information on additional processing; and controls whether to select the reflected sound, based on the information on the additional processing and the sound volume ratio.

## Description

### [Technical Field]

The present disclosure relates to an acoustic processing device and the like.

### [Background Art]

In recent years, the spread of products and services that utilize extended reality (ER) (may be also expressed as "XR") including virtual reality (VR), augmented reality (AR), and mixed reality (MR) has advanced. Accompanying this, there has been growing demand for acoustic processing technologies that provide listeners with immersive audio that, in a virtual space or a real-world space, assigns acoustic effects that are generated in accordance with the environment of the space to sounds emitted from a virtual sound source.

Note that "listener" can also be expressed as "user". Furthermore, Patent Literature (PTL) 1, PTL 2, PTL 3, PTL 4, Non Patent Literature (NPL) 1, and NPL 2 disclose techniques that relate to the acoustic processing device and the acoustic processing method of the present disclosure.

### [Citation List]

### [Patent Literature]

[PTL 1] Japanese Patent No. 6288100
[PTL 2] Japanese Unexamined Patent Application Publication No. 2019-22049
[PTL 3] WO Publication No. 2021/180938
[PTL 4] WO Publication No. 2023/083780

### [Non Patent Literature]

[NPL 1] B. C. J. Moore, "An Introduction to the Psychology of Hearing", Seishin Shobo, 1994/4/20, Chapter 6: Space Perception, p. 225.
[NPL 2] Fabian Brinkmann et al., "The FABIAN head-related transfer function data base", 2020/1/22, https://sofacoustics.org/data/database/tu-berlin/FABIAN_Documentation.pdf

### [Summary of Invention]

### [Technical Problem]

For example, PTL 1 discloses a technique that applies signal processing to an object audio signal for presentation to a listener. Accompanying the spread of ER technologies and the diversification of services that use ER technologies, there is a demand for acoustic processing that is adapted to differences in, for example, the acoustic quality required for services, the signal processing capabilities of the terminals to be used, and the sound quality that can be produced in sound-presenting devices. Furthermore, providing this requires further improvements in acoustic processing techniques.

Here, the improvement of acoustic processing techniques refers to changing existing acoustic processing. For example, the improvement of acoustic processing techniques provides processing that assigns new acoustic effects, a reduction in the amount of processing performed for acoustic processing, an improvement in the audio quality obtained by acoustic processing, a reduction in the amount of data for information used in performing acoustic processing, simplification of the acquisition or generation of information used in performing acoustic processing, or the like. Alternatively, the improvement of acoustic processing techniques may provide any combination of two or more of these.

In particular, these improvements are required in apparatuses and services that enable a listener to freely move within a virtual space. However, the above-described effects that can be obtained by improvements in acoustic processing techniques are merely examples. One or more aspects understood based on the present disclosure may be an aspect arrived at based on a viewpoint that is different from that described above, an aspect that achieves an object that is different from that described above, or an aspect that enables obtaining an effect that is different from those described above.

### [Solution to Problem]

An acoustic processing device according to one aspect understood based on the present disclosure includes a circuit and a memory, wherein using the memory, the circuit: obtains sound space information on a sound space; obtains, based on the sound space information, a sound volume ratio between a sound volume of a direct sound and a sound volume of a reflected sound, the direct sound being generated from a sound source in the sound space, the reflected sound being generated in the sound space in response to the direct sound; obtains information on additional processing; and controls whether to select the reflected sound, based on the information on the additional processing and the sound volume ratio.

Note that these comprehensive or specific aspects may be implemented as a system, a device, a method, an integrated circuit, a computer program, or a non-transitory computer-readable recording medium such as a CD-ROM, or may be implemented as any combination of these.

### [Advantageous Effects of Invention]

For example, one aspect of the present disclosure may make it possible to provide processing that assigns new acoustic effects, a reduction in the amount of processing performed for acoustic processing, an improvement in the audio quality obtained by acoustic processing, a reduction in the amount of data for information used in performing acoustic processing, simplification of the acquisition or generation of information used in performing acoustic processing, or the like. Alternatively, one aspect of the present disclosure may make it possible to provide any combination of these. Consequently, one aspect of the present disclosure enables contributing to improving the acoustic experience of a listener by providing acoustic processing adapted to the listener's usage environment.

In particular, the above-described effects can be obtained in apparatuses and services that allow a listener to freely move within a virtual space. However, the above-described effects are merely examples of the effects of various aspects that are understood based on the present disclosure. Each of one or more aspects identified based on the present disclosure may be an aspect arrived at based on a viewpoint that is different from that described above, an aspect that achieves an object that is different from that described above, or an aspect that enables an effect different from those described above to be obtained.

### [Brief Description of Drawings]

[FIG. 1]

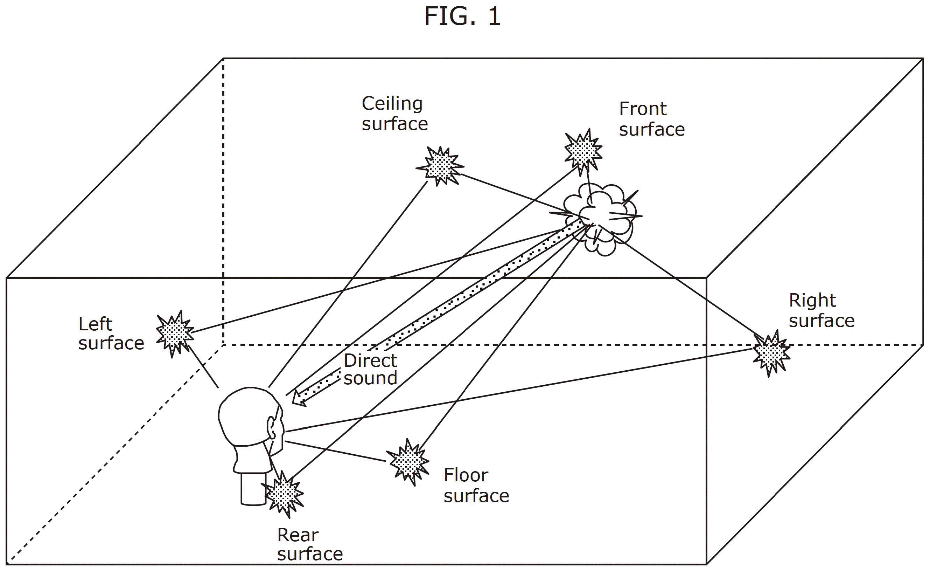

   FIG. 1 is a diagram for illustrating a first example of a direct sound and reflected sounds generated in a sound space.
[FIG. 2]

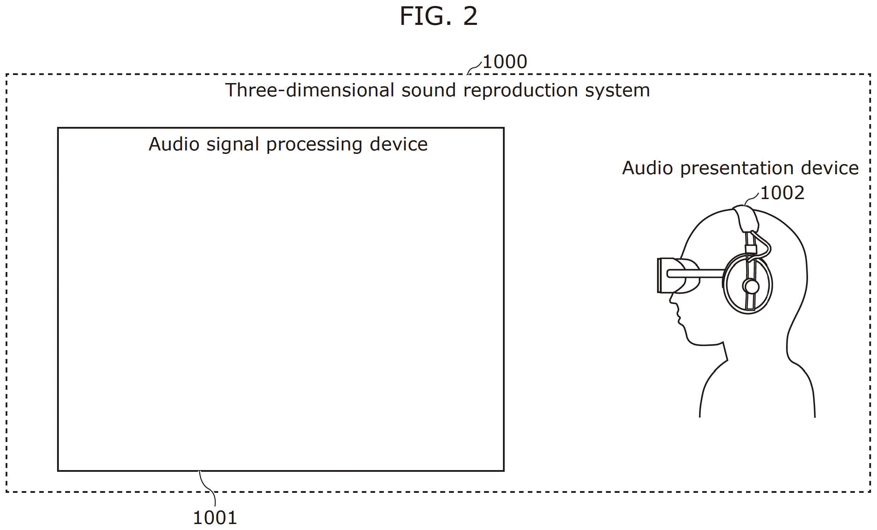

   FIG. 2 is a diagram for illustrating a three-dimensional sound reproduction system according to an embodiment.
[FIG. 3A]

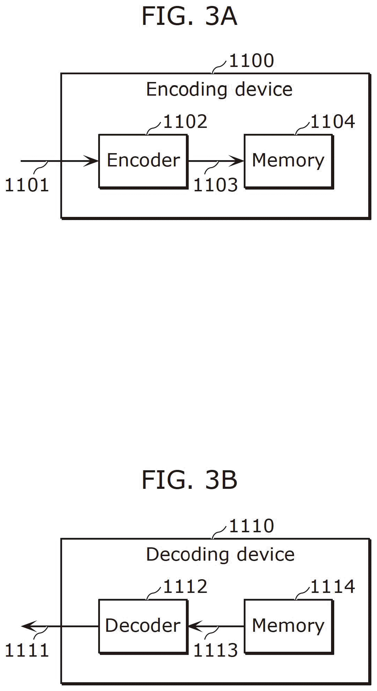

   FIG. 3A is a block diagram for illustrating a configuration example of an encoding device according to an embodiment.
[FIG. 3B]
   FIG. 3B is a block diagram for illustrating a configuration example of a decoding device according to an embodiment.
[FIG. 3C]

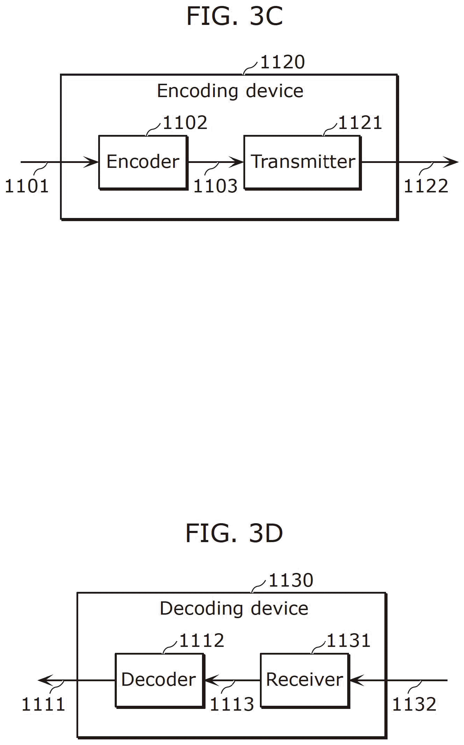

   FIG. 3C is a block diagram for illustrating another configuration example of an encoding device according to an embodiment.
[FIG. 3D]
   FIG. 3D is a block diagram for illustrating another configuration example of a decoding device according to an embodiment.
[FIG. 4A]

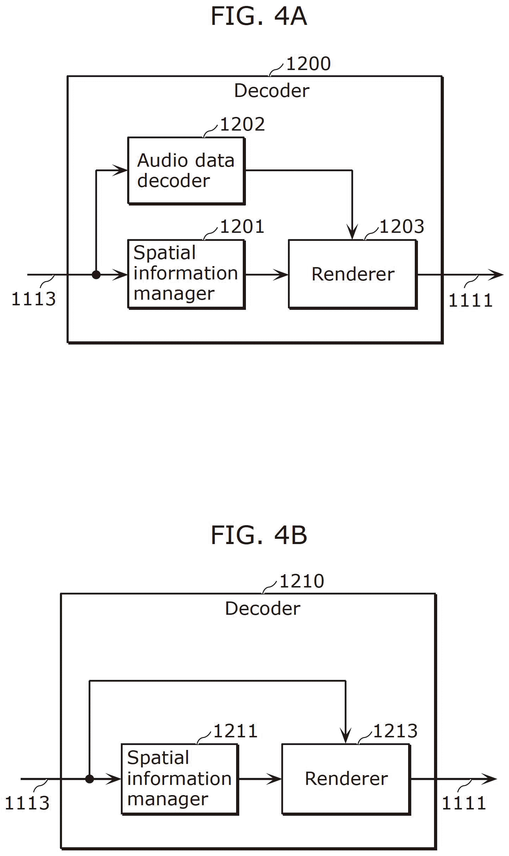

   FIG. 4A is a block diagram for illustrating a configuration example of a decoder according to an embodiment.
[FIG. 4B]
   FIG. 4B is a block diagram for illustrating another configuration example of a decoder according to an embodiment.
[FIG. 5]

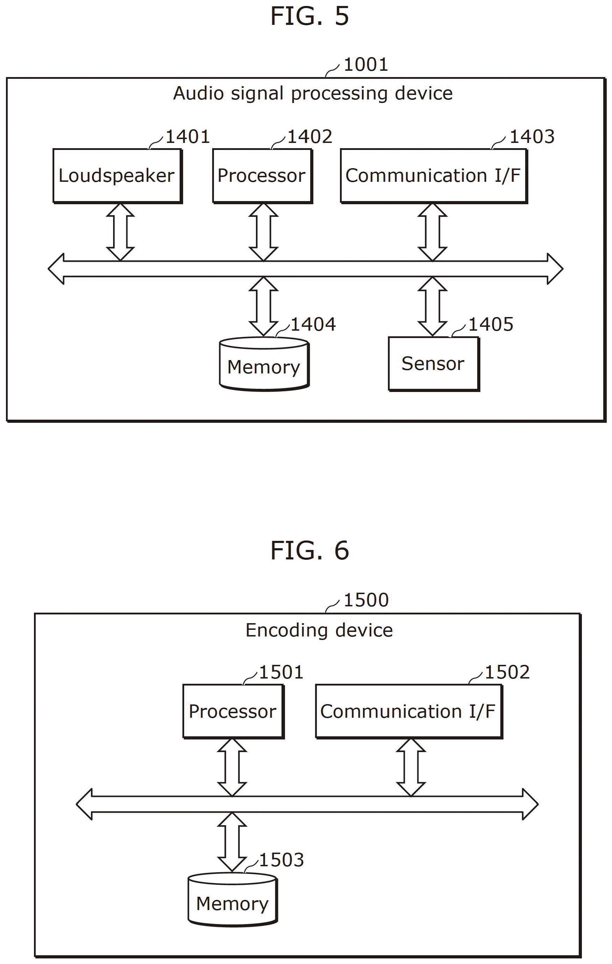

   FIG. 5 is a diagram for illustrating an example of a physical configuration of an audio signal processing device according to an embodiment.
[FIG. 6]
   FIG. 6 is a diagram for illustrating an example of a physical configuration of an encoding device according to an embodiment.
[FIG. 7]

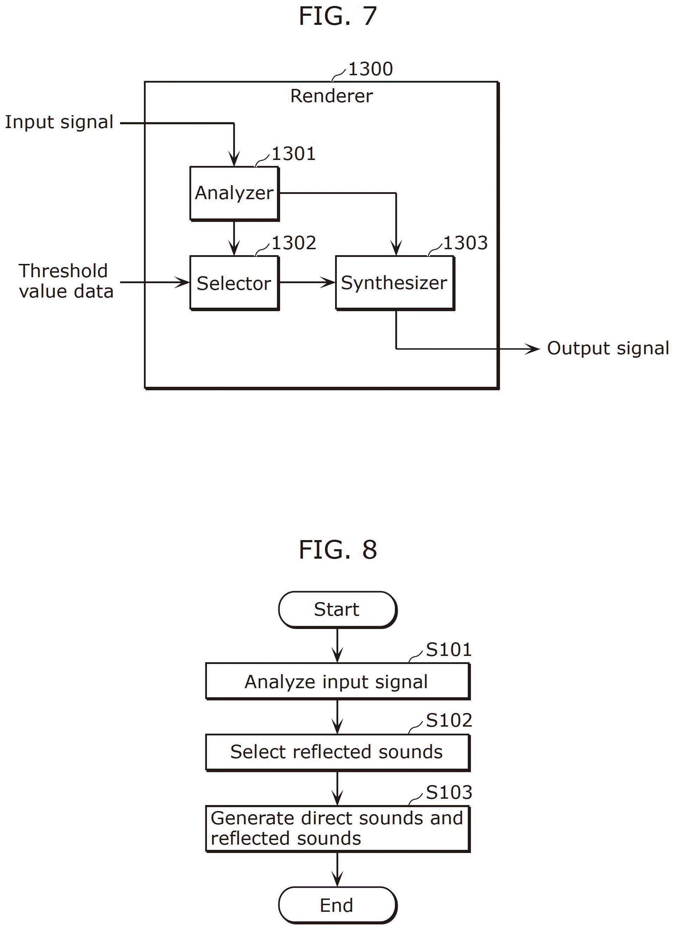

   FIG. 7 is a block diagram for illustrating a configuration example of a renderer according to an embodiment.
[FIG. 8]
   FIG. 8 is a flowchart for illustrating an operation example of an audio signal processing device according to an embodiment.
[FIG. 9]

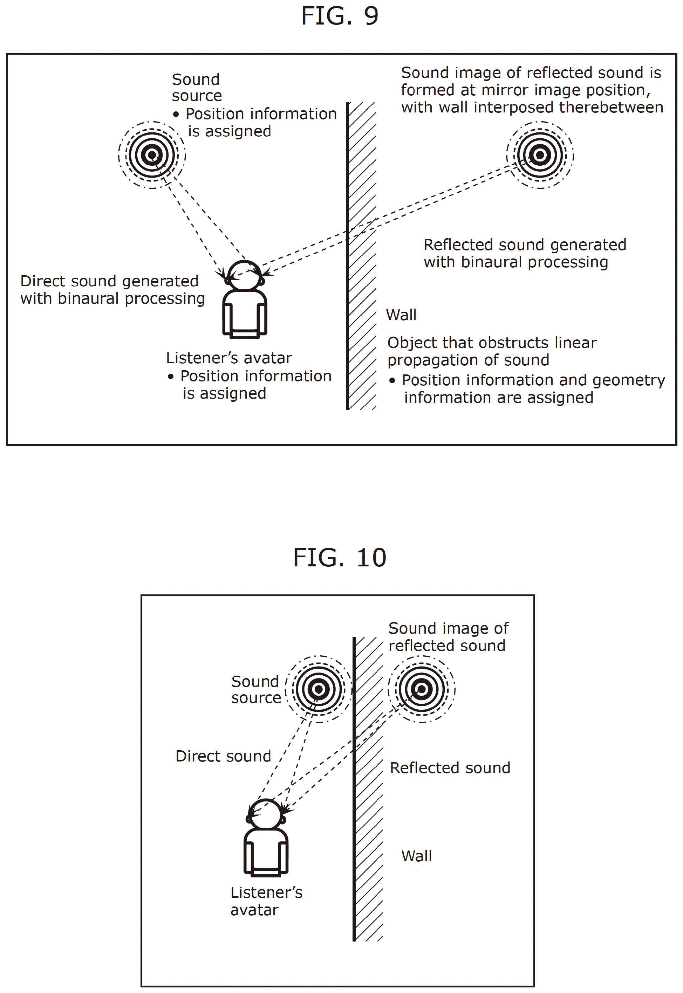

   FIG. 9 is a diagram for illustrating a comparatively distant positional relationship between a listener and an obstacle object.
[FIG. 10]
   FIG. 10 is a diagram for illustrating a comparatively close positional relationship between a listener and an obstacle object.
[FIG. 11]

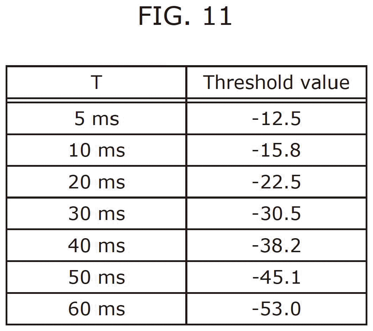

   FIG. 11 is a diagram for illustrating relationships between time differences between direct sounds and reflected sounds, and threshold values.
[FIG. 12A]

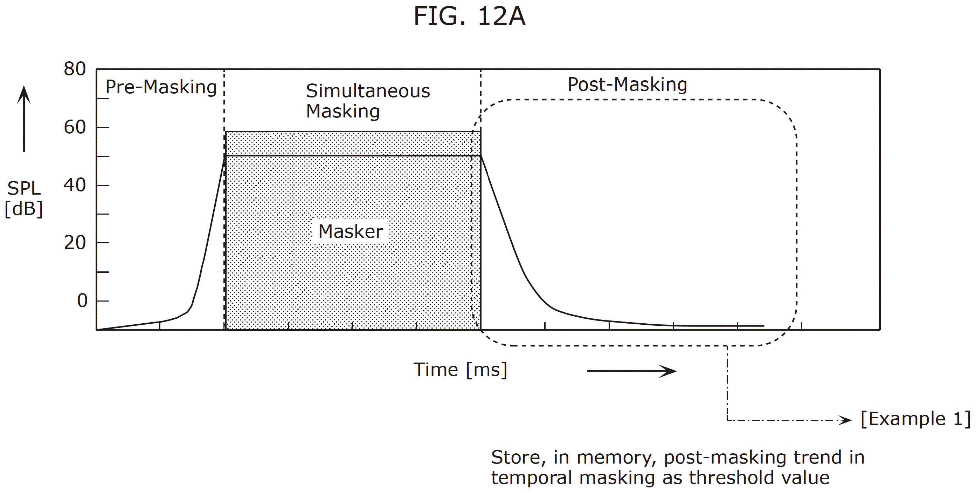

   FIG. 12A is a diagram for illustrating a part of an example of a method for setting threshold value data.
[FIG. 12B]

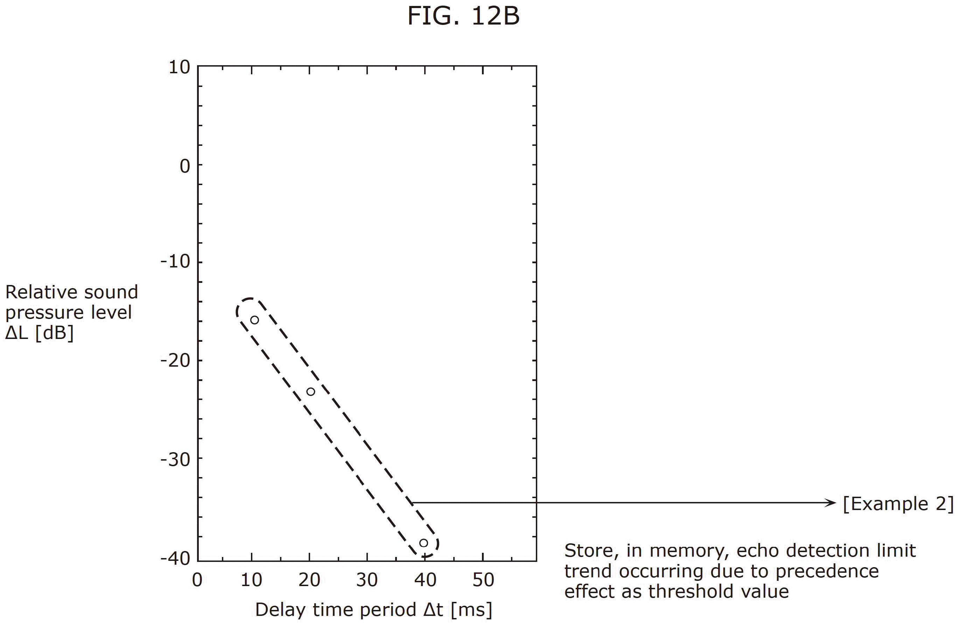

   FIG. 12B is a diagram for illustrating a part of an example of a method for setting threshold value data.
[FIG. 12C]

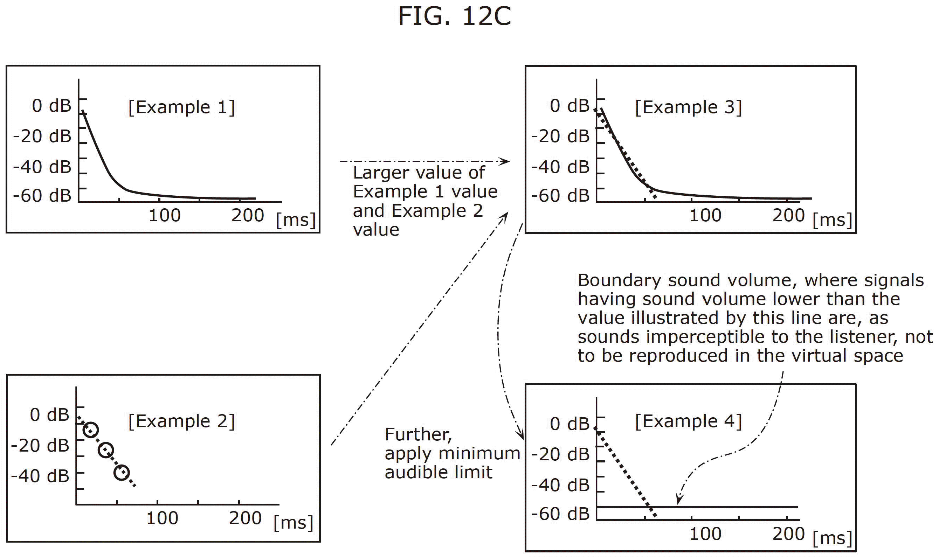

   FIG. 12C is a diagram for illustrating a part of an example of a method for setting threshold value data.
[FIG. 13]

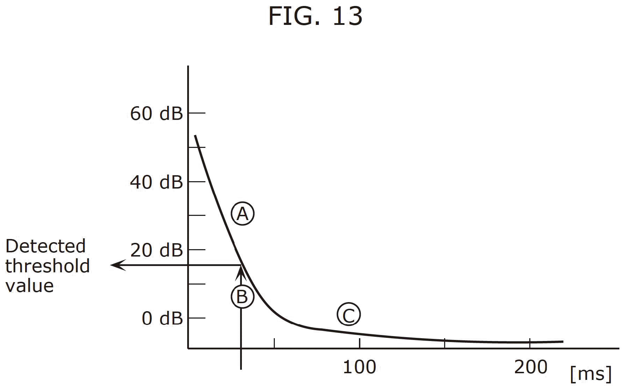

   FIG. 13 is a diagram for illustrating an example of a threshold value setting method.
[FIG. 14]

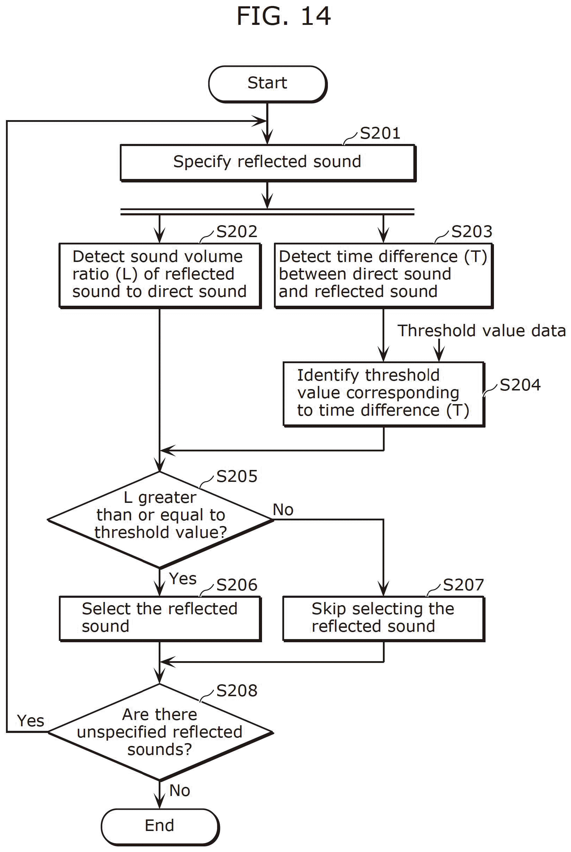

   FIG. 14 is a flowchart for illustrating an example of selection processing.
[FIG. 15]

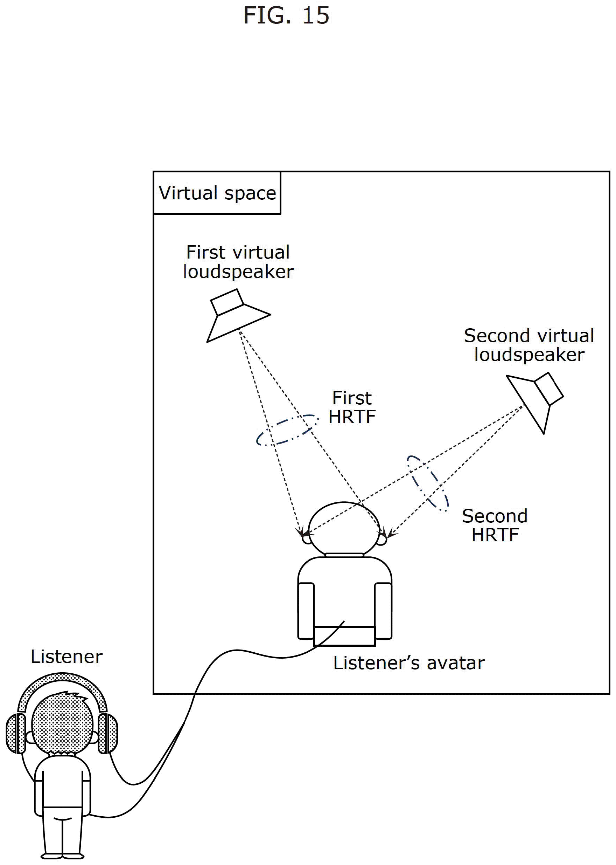

   FIG. 15 is a diagram for illustrating an auditory test of the precedence effect using leading and lagging sounds.
[FIG. 16]

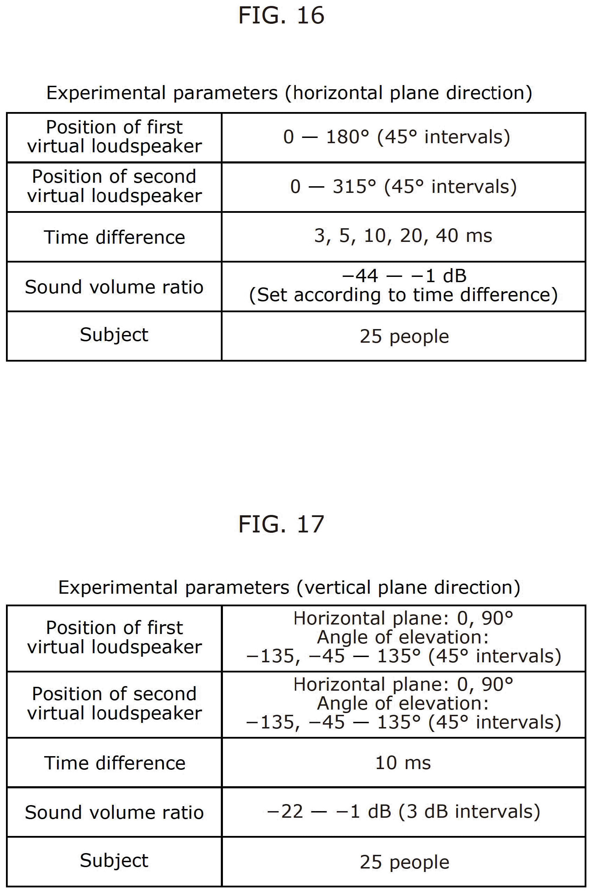

   FIG. 16 is a diagram for illustrating experimental parameters in a horizontal plane direction.
[FIG. 17]
   FIG. 17 is a diagram for illustrating experimental parameters in a vertical plane direction.
[FIG. 18]

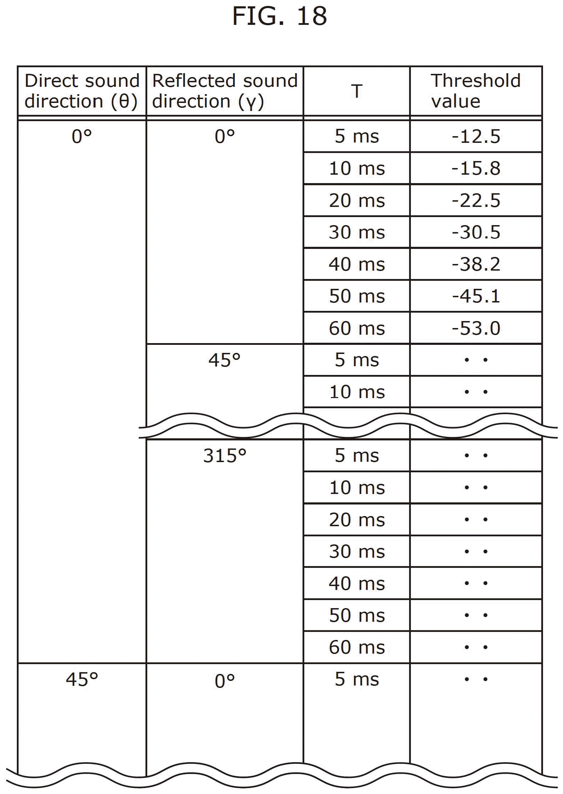

   FIG. 18 is a diagram for illustrating relationships between directions of direct sounds, directions of reflected sounds, time differences, and threshold values.
[FIG. 19]

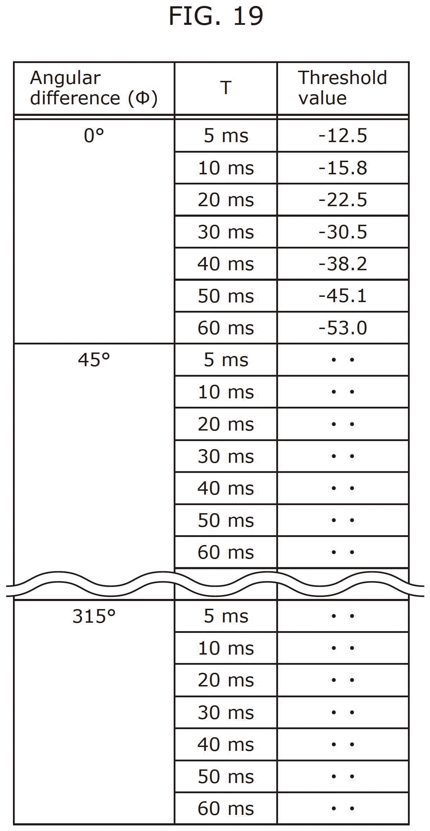

   FIG. 19 is a diagram for illustrating relationships between angular differences, time differences, and threshold values.
[FIG. 20]

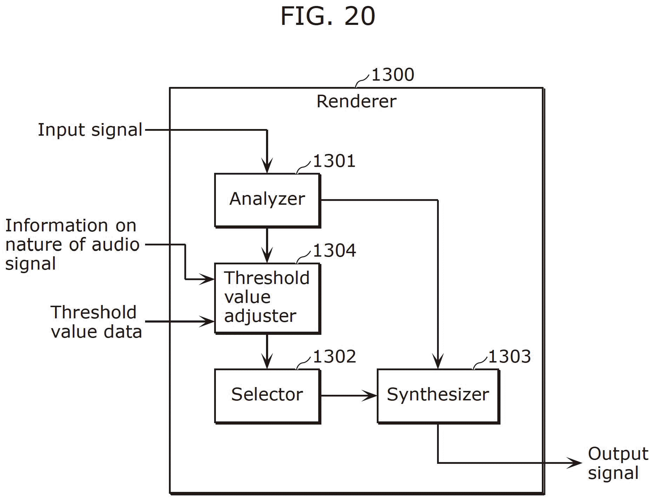

   FIG. 20 is a block diagram for illustrating another configuration example of a renderer.
[FIG. 21]

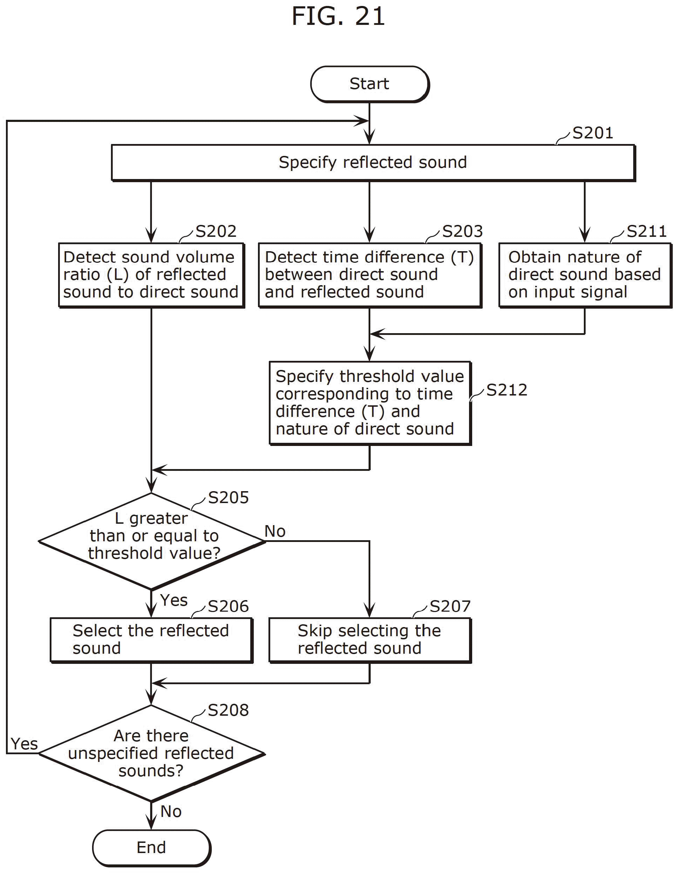

   FIG. 21 is a flowchart for illustrating another example of selection processing.
[FIG. 22]

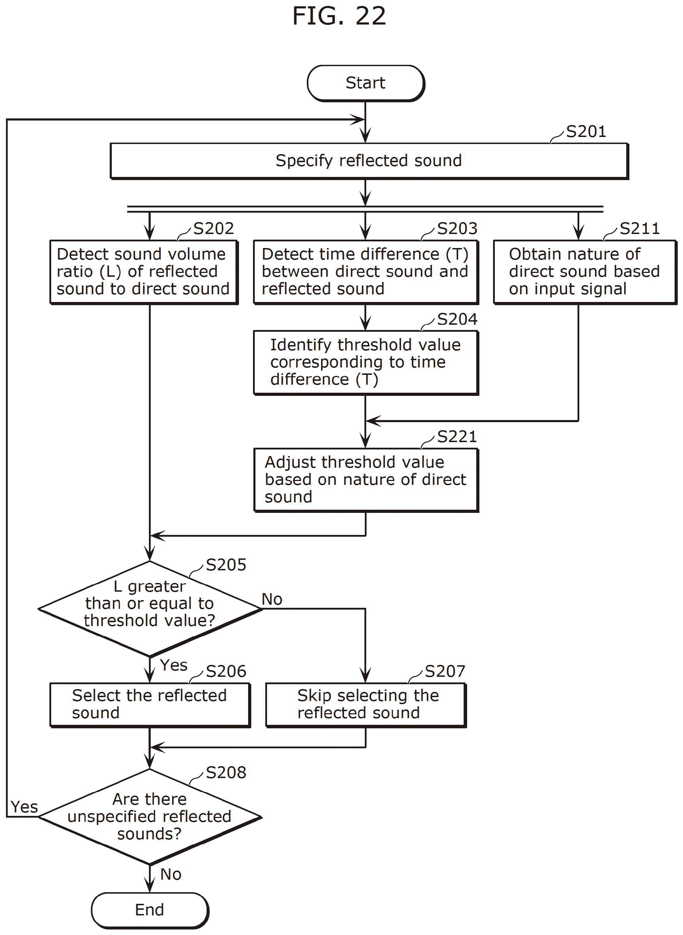

   FIG. 22 is a flowchart for illustrating yet another example of selection processing.
[FIG. 23]

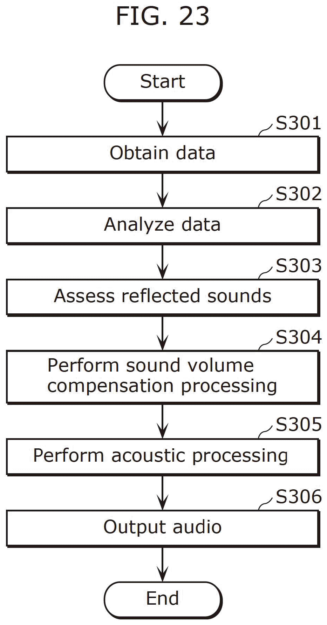

   FIG. 23 is a flowchart for illustrating a first variation of operations of an audio signal processing device according to an embodiment.
[FIG. 24]

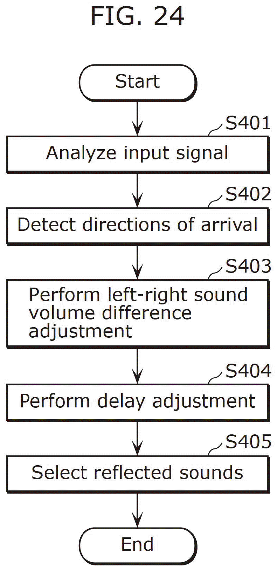

   FIG. 24 is a flowchart for illustrating a second variation of operations of an audio signal processing device according to an embodiment.
[FIG. 25]

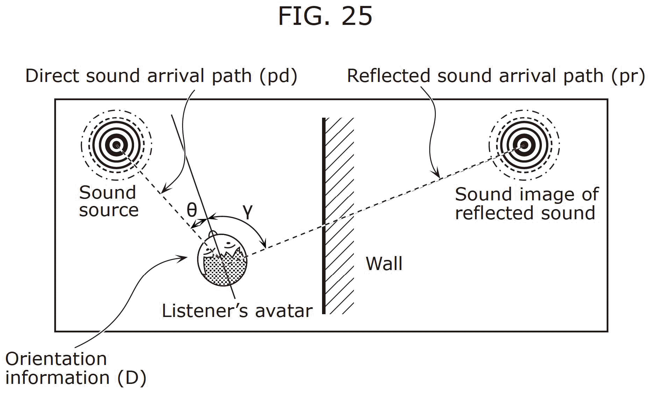

   FIG. 25 is a diagram for illustrating an arrangement example of an avatar, a sound source object, and an obstacle object.
[FIG. 26]

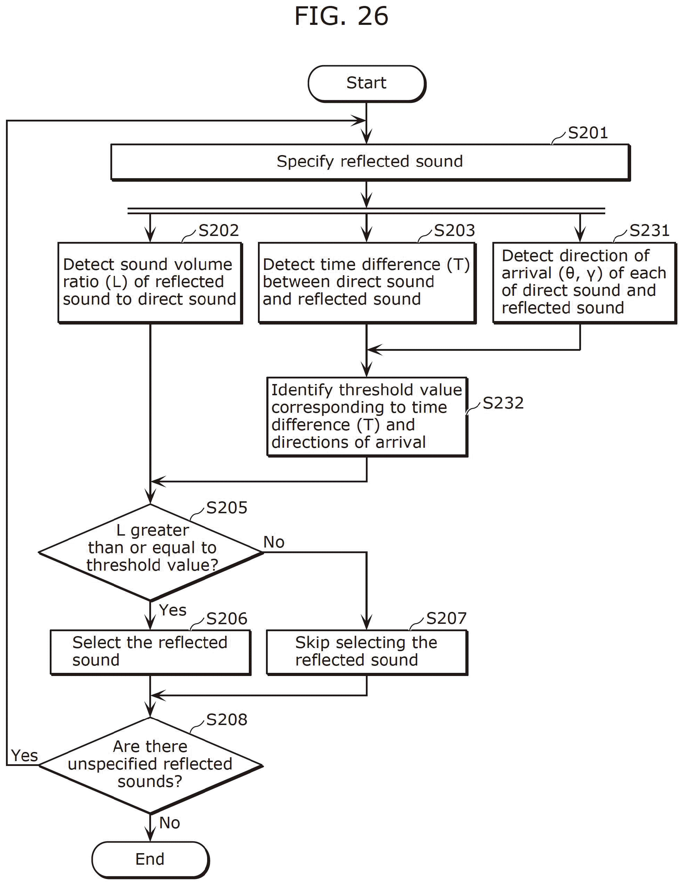

   FIG. 26 is a flowchart for illustrating yet another example of selection processing.
[FIG. 27]

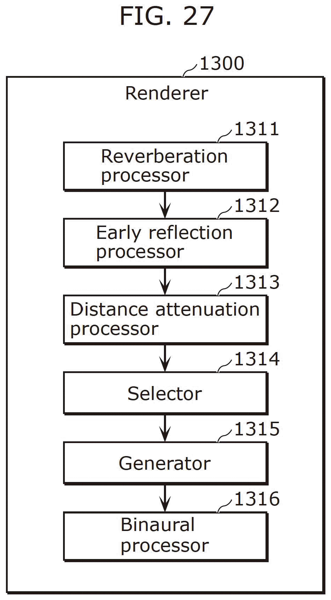

   FIG. 27 is a block diagram for illustrating a configuration example for a renderer to perform pipeline processing.
[FIG. 28]

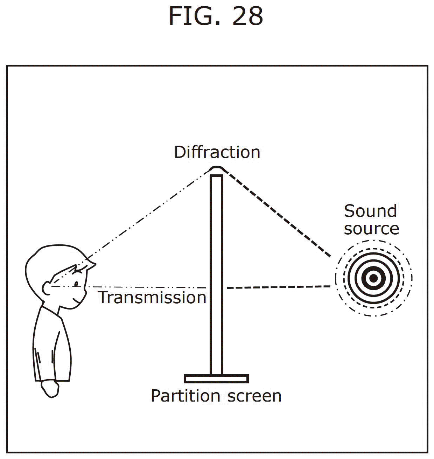

   FIG. 28 is a diagram for illustrating transmission and diffraction of sound.
[FIG. 29]

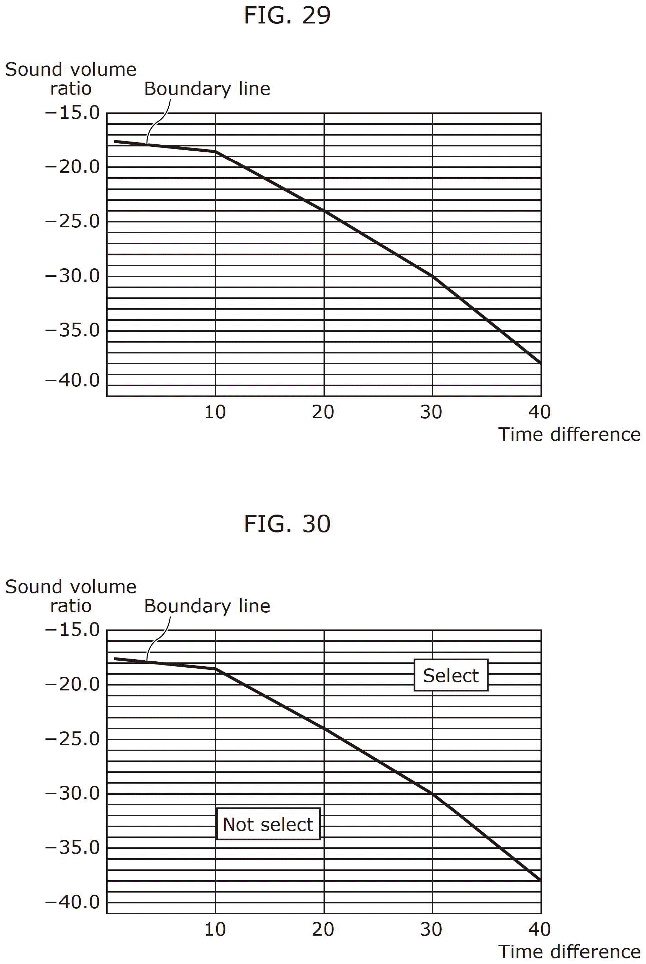

   FIG. 29 is a graph showing threshold values.
[FIG. 30]
   FIG. 30 is a diagram for illustrating a first use example of threshold values.
[FIG. 31]

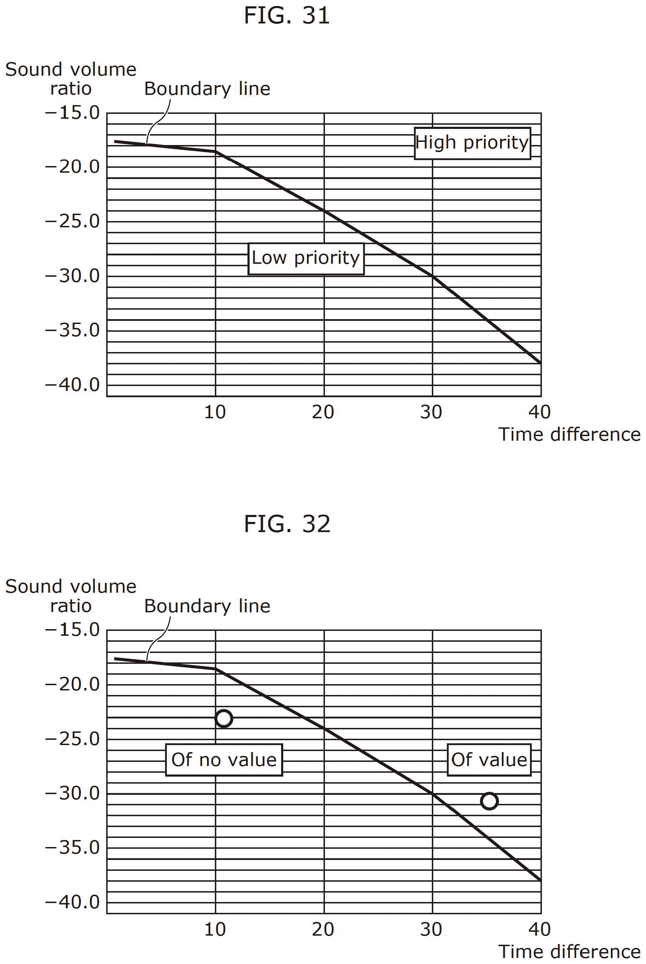

   FIG. 31 is a diagram for illustrating a second use example of threshold values.
[FIG. 32]
   FIG. 32 is a diagram for illustrating a third use example of threshold values.
[FIG. 33]

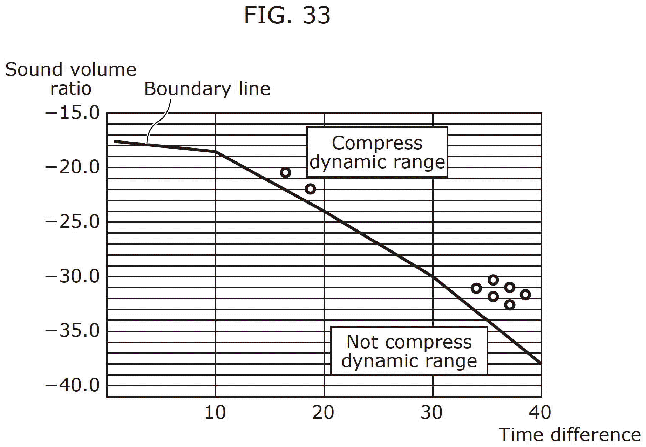

   FIG. 33 is a diagram for illustrating a fourth use example of threshold values.
[FIG. 34]

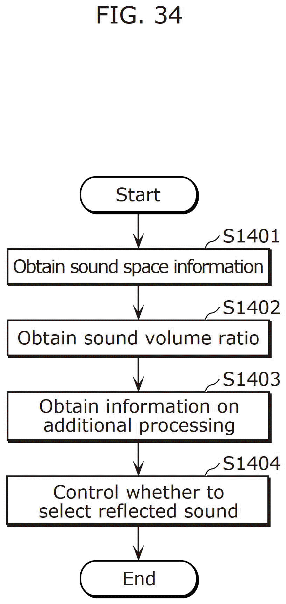

   FIG. 34 is a flowchart for illustrating a first basic operation example of an audio signal processing device according to an embodiment.
[FIG. 35]

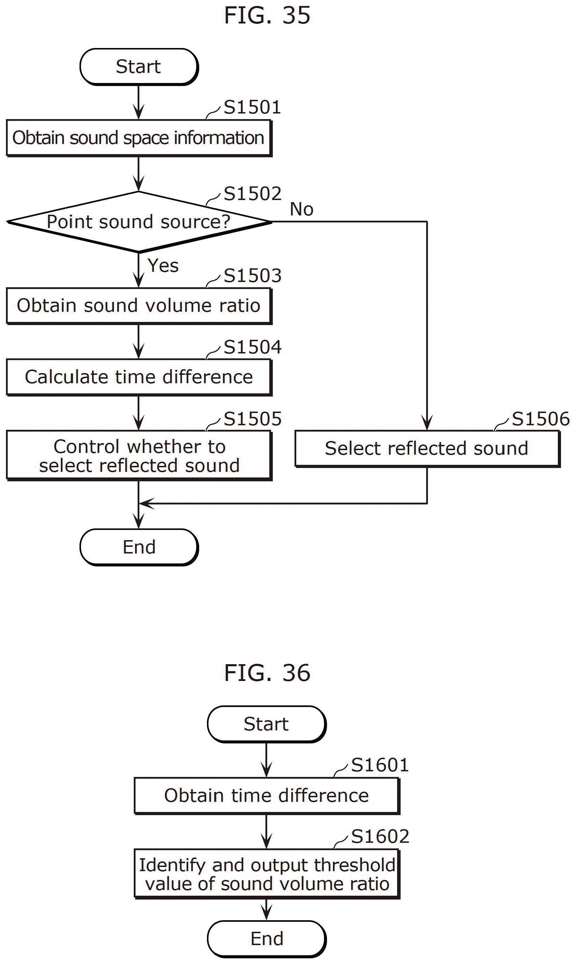

   FIG. 35 is a flowchart for illustrating a second basic operation example of an audio signal processing device according to an embodiment.
[FIG. 36]
   FIG. 36 is a flowchart for illustrating a third basic operation example of an audio signal processing device according to an embodiment.

### [Description of Embodiments]

### (Underlying Knowledge Forming Basis of the Present Disclosure)

FIG. 1 is a diagram for illustrating a first example of a direct sound and reflected sound generated in a sound space. In acoustic processing in which characteristics of a virtual space are expressed by a sound, it is effective to reproduce not only direct sounds, but also reflected sounds in order to express the size of the space, the material of the walls, and the like, as well as to allow for accurately grasping the location of the sound source (the positioning of the sound image).

For example, when a sound is heard in a rectangular parallelepiped room such as that in FIG. 1, six primary reflected sounds, corresponding to the six walls, are generated for one sound source. Reproducing these reflected sounds provides a clue for appropriate understanding of the space and the sound image. Furthermore, for each reflected sound, a secondary reflected sound is generated by a surface other than the reflection surface that generated that reflected sound. These reflected sounds are also effective sensory clues.

However, even when consideration is given no further than to secondary reflection, one direct sound and 36 (6 + 6 × 5) reflected sounds are generated for one sound source. Thus, 37 sound rays are generated, and processing these sound rays requires a significant amount of computation.

Furthermore, in applied products in recent years for which metaverses are imagined, such as virtual meetings, virtual shopping, virtual concerts, and the like, a plurality of sound sources are present out of necessity, whereby an even greater amount of computation is required.

Moreover, the listener hearing the sounds in a virtual space uses headphones or VR goggles. In order to provide three-dimensional sound to such a listener, binaural processing that assigns a sound pressure ratio and a phase difference between the two ears and reproduces the direction of arrival and distance sensation of the sounds is performed on each sound ray. Thus, if an attempt were made to reproduce every reflected sound that is generated, the amount of computation would become immense.

On the other hand, in light of convenience, a small storage battery is sometimes used as the battery for the VR goggles worn by the listener who experiences the virtual space. Lessening the computational load resulting from the above-described processing makes it possible to further extend the life of the storage battery. To this end, the number of sound rays, which are emitted on a scale of hundreds, is desirably reduced, within a scope at which grasping the space and the positioning of the sounds is not harmed.

Furthermore, in a system that reproduces acoustics, a degree of freedom such as 6DoF (6 degrees of freedom) or the like may be allowed with respect to the position and orientation of the listener. In this case, the positional relationship between the listener, the sound sources, and the objects that reflect sounds cannot be fixed until the time of reproduction (the time of rendering). For this reason, the reflected sounds as well cannot be fixed until the time of reproduction. Thus, it is difficult to determine the reflected sounds to be processed beforehand.

Therefore, during reproduction, properly selecting one or more reflected sounds, from a plurality of reflected sounds that are generated in a sound space, that are to be processed or are not to be processed is useful in appropriately reducing the amount of computation and the computational load.

Accordingly, the present disclosure has the object of providing an acoustic processing device and the like that can appropriately control whether to select sounds that are generated in a sound space.

Note that controlling whether to select a sound corresponds to assessing whether to select the sound. Furthermore, selecting a sound may be selecting the sound as a sound to be processed, or may be selecting the sound as a sound that is not to be processed.

### (Overview of Disclosure)

An acoustic processing device according to a first aspect understood based on the present disclosure includes: a circuit; and a memory, wherein using the memory, the circuit: obtains sound space information on a sound space; obtains, based on the sound space information, a characteristic regarding a first sound, the first sound being a sound generated from a sound source in the sound space; and controls, based on the characteristic regarding the first sound, whether to select a second sound generated in the sound space in response to the first sound.

The device according to the above-described aspect is, based on the characteristic regarding the first sound generated in the sound space, able to appropriately control whether to select the second sound generated in the sound space in response to the first sound. In other words, the device according to the above-described aspect is able to appropriately control whether to select a sound generated in a sound space. Thus, the amount of computation and the computational load can be appropriately reduced.

An acoustic processing device according to a second aspect understood based on the present disclosure is the acoustic processing device according to the first aspect, in which the first sound may be a direct sound, and the second sound may be a reflected sound.

The device according to the above-described aspect is able to appropriately control whether to select a reflected sound, based on a characteristic regarding the reflected sound.

An acoustic processing device according to a third aspect understood based on the present disclosure is the acoustic processing device according to the second aspect, in which the characteristic regarding the first sound may be a sound volume ratio between a sound volume of the direct sound and a sound volume of the reflected sound, and the circuit may: calculate the sound volume ratio based on the sound space information; and control whether to select the reflected sound based on the sound volume ratio.

The device according to the above-described aspect is able to appropriately select a reflected sound that has a large degree of influence on the listener's perception, based on the sound volume ratio between the sound volume of the direct sound and the sound volume of the reflected sound.

An acoustic processing device according to a fourth aspect understood based on the present disclosure is the acoustic processing device according to the third aspect, in which when the reflected sound is selected, the circuit may generate sounds that respectively arrive at both ears of a listener by applying binaural processing to the reflected sound and the direct sound.

The device according to the above-described aspect is able to appropriately select a reflected sound having a large degree of influence on the listener's perception and apply binaural processing to the reflected sound selected.

An acoustic processing device according to a fifth aspect understood based on the present disclosure is the acoustic processing device according to the third or fourth aspect, in which the circuit may: calculate a time difference between an end time of the direct sound and an arrival time of the reflected sound, based on the sound space information; and control whether to select the reflected sound, based on the time difference and the sound volume ratio.

The device according to the above-described aspect is able to more appropriately select a reflected sound that has a large degree of influence on the listener's perception, based on the time difference between the end time of the direct sound and the arrival time of the reflected sound and on the sound volume ratio between the sound volume of the direct sound and the sound volume of the reflected sound. Thus, the device according to the above-described aspect is able to more appropriately select a reflected sound having a large degree of influence on the listener's perception, based on the post-masking effect.

An acoustic processing device according to a sixth aspect understood based on the present disclosure is the acoustic processing device according to the fifth aspect, in which when the sound volume ratio is greater than or equal to a threshold value, the circuit may select the reflected sound, and a first threshold value may be greater than a second threshold value, the first threshold value being used as the threshold value when the time difference is a first value, the second threshold value being used as the threshold value when the time difference is a second value that is greater than the first value.

The device according to the above-described aspect is able to increase the likelihood of a reflected sound for which there is a large time difference between the end time of the direct sound and the arrival time of the reflected sound being selected. Thus, the device according to the above-described aspect is able to appropriately select a reflected sound having a large degree of influence on the listener's perception.

An acoustic processing device according to a seventh aspect understood based on the present disclosure is the acoustic processing device according to the third or fourth aspect, in which the circuit may: calculate a time difference between an arrival time of the direct sound and an arrival time of the reflected sound, based on the sound space information; and control whether to select the reflected sound, based on the time difference and the sound volume ratio.

The device according to the above-described aspect is able to more appropriately select a reflected sound that has a large degree of influence on the listener's perception, based on the time difference between the arrival time of the direct sound and the arrival time of the reflected sound and on the sound volume ratio between the sound volume of the direct sound and the sound volume of the reflected sound. Thus, the device according to the above-described aspect is able to more appropriately select a reflected sound having a large degree of influence on the listener's perception, based on the precedence effect.

An acoustic processing device according to an eighth aspect understood based on the present disclosure is the acoustic processing device according to the seventh aspect, in which when the sound volume ratio is greater than or equal to a threshold value, the circuit may select the reflected sound, and a first threshold value may be greater than a second threshold value, the first threshold value being used as the threshold value when the time difference is a first value, the second threshold value being used as the threshold value when the time difference is a second value that is greater than the first value.

The device according to the above-described aspect is able to increase the likelihood of a reflected sound for which there is a large time difference between the arrival time of the direct sound and the arrival time of the reflected sound being selected. Thus, the device according to the above-described aspect is able to appropriately select a reflected sound having a large degree of influence on the listener's perception.

An acoustic processing device according to a ninth aspect understood based on the present disclosure is the acoustic processing device according to the eighth aspect, in which the circuit may adjust the threshold value based on a direction of arrival of the direct sound and a direction of arrival of the reflected sound.

The device according to the above-described aspect is able to appropriately select a reflected sound that has a large degree of influence on the listener's perception, based on the direction of arrival of the direct sound and the direction of arrival of the reflected sound.

An acoustic processing device according to a tenth aspect understood based on the present disclosure is the acoustic processing device according to any one of the second to ninth aspects, in which when the reflected sound is not selected, the circuit may correct a sound volume of the direct sound based on a sound volume of the reflected sound.

The device according to the above-described aspect is able to, with a low amount of computation, appropriately decrease the sense of incongruity that occurs when the reflected sound is not selected and the sound volume of the reflected sound is consequently absent.

An acoustic processing device according to an eleventh aspect understood based on the present disclosure is the acoustic processing device according to any one of the second to ninth aspects, in which when the reflected sound is not selected, the circuit may synthesize the reflected sound in the direct sound.

The device according to the above-described aspect is able to more accurately reflect the characteristic of the reflected sound in the direct sound. Thus, the device according to the above-described aspect is able to decrease the sense of incongruity that occurs when the reflected sound is not selected and the reflected sound is consequently absent.

An acoustic processing device according to a twelfth aspect understood based on the present disclosure is the acoustic processing device according to any one of the third to ninth aspects, in which the sound volume ratio may be a sound volume ratio between the sound volume of the direct sound at a first time and the sound volume of the reflected sound at a second time, the second time being different from the first time.

When the time at which a direct sound is perceived and the time at which a reflected sound is perceived are different, the device according to the above-described aspect is able to appropriately select a reflected sound having a large degree of influence on the listener's perception, based on the sound volume ratio between the direct sound and the reflected sound, at the different times.

An acoustic processing device according to a thirteenth aspect understood based on the present disclosure is the acoustic processing device according to the first or second aspect, in which the circuit may set a threshold value based on the characteristic regarding the first sound, and control whether to select the second sound based on the threshold value.

The device according to the above-described aspect is able to appropriately control whether to select the second sound, based on the threshold value set based on the characteristic regarding the first sound.

An acoustic processing device according to a fourteenth aspect understood based on the present disclosure is the acoustic processing device according to any one of the first, second, and thirteenth aspects, in which the characteristic regarding the first sound may be one or a combination of two or more of: a sound volume of the sound source; a visual property of the sound source; or a positionality of the sound source.

The device according to the above-described aspect is able to appropriately control whether to select the second sound, based on the sound volume of the sound source, the visual property of the sound source, or the positionality of the sound source.

An acoustic processing device according to a fifteenth aspect understood based on the present disclosure is the acoustic processing device according to any one of the first, second, and thirteenth aspects, in which the characteristic regarding the first sound may be a frequency characteristic of the first sound.

The device according to the above-described aspect is able to appropriately control whether to select the second sound generated in response to the first sound, based on the frequency characteristic of the first sound.

An acoustic processing device according to a sixteenth aspect understood based on the present disclosure is the acoustic processing device according to any one of the first, second, and thirteenth aspects, in which the characteristic regarding the first sound may be a characteristic indicating intermittency of an amplitude of the first sound.

The device according to the above-described aspect is able to appropriately control whether to select the second sound generated in response to the first sound, based on the characteristic indicating the intermittency of the amplitude of the first sound.

An acoustic processing device according to a seventeenth aspect understood based on the present disclosure is the acoustic processing device according to any one of the first, second, thirteenth, and sixteenth aspects, in which the characteristic regarding the first sound may be a characteristic indicating a duration of a sound portion of the first sound or a duration of a silent portion of the first sound.

The device according to the above-described aspect is able to appropriately control whether to select the second sound generated in response to the first sound, based on the characteristic indicating the duration of the sound portion of the first sound or the duration of the silent portion of the first sound.

An acoustic processing device according to an eighteenth aspect understood based on the present disclosure is the acoustic processing device according to any one of the first, second, thirteenth, sixteenth, and seventeenth aspects, in which the characteristic regarding the first sound may be a characteristic indicating, in chronological order, a duration of a sound portion of the first sound and a duration of a silent portion of the first sound.

The device according to the above-described aspect is able to appropriately control whether to select the second sound generated in response to the first sound, based on the characteristic indicating, in chronological order, the duration of the sound portion of the first sound or the duration of the silent portion of the first sound.

An acoustic processing device according to a nineteenth aspect understood based on the present disclosure is the acoustic processing device according to any one of the first, second, thirteenth, and fifteenth aspects, in which the characteristic regarding the first sound may be a characteristic indicating variation in a frequency characteristic of the first sound.

The device according to the above-described aspect is able to appropriately control whether to select the second sound generated in response to the first sound, based on the characteristic indicating variation in the frequency characteristic of the first sound.

An acoustic processing device according to a twentieth aspect understood based on the present disclosure is the acoustic processing device according to any one of the first, second, thirteenth, fifteenth, and nineteenth aspects, in which the characteristic regarding the first sound may be a characteristic indicating stationarity of a frequency characteristic of the first sound.

The device according to the above-described aspect is able to appropriately control whether to select the second sound generated in response to the first sound, based on the characteristic indicating the stationarity of the frequency characteristic of the first sound.

An acoustic processing device according to a twenty-first aspect understood based on the present disclosure is the acoustic processing device according to any one of the first, second, and thirteenth to twentieth aspects, in which the characteristic regarding the first sound may be obtained from a bitstream.

The device according to the above-described aspect is able to appropriately control whether to select the second sound generated in response to a first sound, based on the information obtained from the bitstream.

An acoustic processing device according to a twenty-second aspect understood based on the present disclosure is the acoustic processing device according to any one of the first, second, and thirteenth to twenty-first aspects, in which the circuit may: calculate a characteristic regarding the second sound; and control whether to select the second sound based on the characteristic regarding the first sound and the characteristic regarding the second sound.

The device according to the above-described aspect is able to appropriately control whether to select the second sound generated in response to the first sound, based on the characteristic regarding the first sound and the characteristic regarding the second sound.

An acoustic processing device according to a twenty-third aspect understood based on the present disclosure is the acoustic processing device according to the twenty-second aspect, in which the circuit may: obtain a threshold value indicating a sound volume corresponding to a boundary that demarcates whether a sound is audible; and control whether to select the second sound based on the characteristic regarding the first sound, the characteristic regarding the second sound, and the threshold value.

The device according to the above-described aspect is able to appropriately control whether to select the second sound, based on the characteristic regarding the first sound, the characteristic regarding the second sound, and the threshold value corresponding to whether a sound is audible.

An acoustic processing device according to a twenty-fourth aspect understood based on the present disclosure is the acoustic processing device according to the twenty-third aspect, in which the characteristic regarding the second sound may be a sound volume of the second sound.

The device according to the above-described aspect is able to appropriately control whether to select the second sound, based on the sound volume of the second sound.

An acoustic processing device according to a twenty-fifth aspect understood based on the present disclosure is the acoustic processing device according to the first or second aspect, in which the sound space information may include information on a position of a listener in the sound space, a plurality of second sounds may be generated in the sound space in response to the first sound, the plurality of second sounds each being the second sound, and by controlling whether to select each of the plurality of second sounds based on the characteristic regarding the first sound, the circuit may select, from the plurality of second sounds, one or more sounds to be processed to which binaural processing is to be applied.

The device according to the above-described aspect is able to, based on the characteristic regarding the first sound generated in the sound space, appropriately select, from the plurality of second sounds generated in the sound space in response to the first sound, one or more sounds to be processed to which binaural processing is to be applied.

An acoustic processing device according to a twenty-sixth aspect understood based on the present disclosure is the acoustic processing device according to the twenty-fifth aspect, in which a timing of obtaining the characteristic regarding the first sound may be at least one of: a time of creating the sound space; a start time for processing of the sound space; or a time when an information update thread is created during the processing of the sound space.

The device according to the above-described aspect is able to appropriately select one or more sounds to be processed to which binaural processing is to be applied, based on information obtained at an adaptive timing.

An acoustic processing device according to a twenty-seventh aspect understood based on the present disclosure is the acoustic processing device according to the twenty-sixth aspect, in which the characteristic regarding the first sound may be periodically obtained after starting processing of the sound space.

The device according to the above-described aspect is able to appropriately select one or more sounds to be processed to which binaural processing is to be applied, based on information obtained periodically.

An acoustic processing device according to a twenty-eighth aspect understood based on the present disclosure is the acoustic processing device according to the first or second aspect, in which the characteristic regarding the first sound may be a sound volume of the first sound, and the circuit may: calculate an evaluation value of the second sound based on the sound volume of the first sound; and control whether to select the second sound based on the evaluation value.

The device according to the above-described aspect is able to appropriately control whether to select the second sound, based on the evaluation value calculated for the second sound based on the sound volume of the first sound.

An acoustic processing device according to a twenty-ninth aspect understood based on the present disclosure is the acoustic processing device according to the twenty-eighth aspect, in which the sound volume of the first sound may have a transition.

The device according to the above-described aspect is able to appropriately control whether to select the second sound, based on the evaluation value calculated based on a sound volume that has a transition.

An acoustic processing device according to a thirtieth aspect understood based on the present disclosure is the acoustic processing device according to the twenty-eighth or twenty-ninth aspect, in which the circuit may calculate the evaluation value to increase a likelihood of the second sound being selected as the sound volume of the first sound is greater.

The device according to the above-described aspect is able to appropriately control whether to select the second sound, based on the evaluation value that is set to make the second sound more likely to be selected as the sound volume of the first sound is greater.

An acoustic processing device according to a thirty-first aspect understood based on the present disclosure is the acoustic processing device according to the first or second aspect, in which the sound space information may be scene information that includes: information on the sound source in the sound space; and information on a position of a listener in the sound space, a plurality of second sounds may be generated in the sound space in response to the first sound, the plurality of second sounds each being the second sound, and the circuit may: obtain a signal of the first sound; calculate the plurality of second sounds based on the scene information and the signal of the first sound; obtain the characteristic regarding the first sound from the information on the sound source; and select, from the plurality of second sounds, one or more second sounds to which binaural processing is not to be applied, by controlling, based on the characteristic regarding the first sound, whether to select each of the plurality of second sounds as a sound to which the binaural processing is not to be applied.

The device according to the above-described aspect is able to appropriately select, from the plurality of second sounds generated in the sound space in response to the first sound, one or more second sounds to which binaural processing is not to be applied, based on the characteristic regarding the first sound.

An acoustic processing device according to a thirty-second aspect understood based on the present disclosure is the acoustic processing device according to the thirty-first aspect, in which the scene information may be updated based on input information, and the characteristic regarding the first sound may be obtained in accordance with an update of the scene information.

The device according to the above-described aspect is able to appropriately select one or more second sounds to which binaural processing is not to be applied, based on information obtained in accordance with an update to the scene information.

An acoustic processing device according to a thirty-third aspect understood based on the present disclosure is the acoustic processing device according to the thirty-first or thirty-second aspect, in which the scene information and the characteristic regarding the first sound may be obtained from metadata included in a bitstream.

The device according to the above-described aspect is able to appropriately select one or more second sounds to which binaural processing is not to be applied, based on the information obtained from the metadata included in the bitstream.

An acoustic processing method according to a thirty-fourth aspect understood based on the present disclosure includes: obtaining sound space information on a sound space; obtaining, based on the sound space information, a characteristic regarding a first sound, the first sound being a sound generated from a sound source in the sound space; and controlling, based on the characteristic regarding the first sound, whether to select a second sound generated in the sound space in response to the first sound.

The method according to the above-described aspect can achieve similar effects to those of the acoustic processing device according to the first aspect.

A program according to a thirty-fifth aspect understood based on the present disclosure is a program for causing a computer to execute the acoustic processing method according to the thirty-fourth aspect.

The program according to the above-described aspect can, by using a computer, achieve similar effects to those of the acoustic processing method according to the thirty-fourth aspect.

An acoustic processing device according to a thirty-sixth aspect understood based on the present disclosure is the acoustic processing device according to any one of the third to ninth aspects and the twelfth aspect, and may include: an adding unit that applies additional processing to the second sound; an adding amount of increase or decrease obtaining unit that obtains an amount of increase or decrease in amplitude in the adding unit; and a sound volume ratio adjusting unit that adjusts the sound volume ratio, based on the amount of increase or decrease obtained by the adding amount of increase or decrease obtaining unit.

The device according to the above-described aspect makes it possible to appropriately adjust the sound volume ratio according to the amplitude that is increased or decreased by the additional processing.

An acoustic processing device according to a thirty-seventh aspect understood based on the present disclosure is the acoustic processing device according to any one of the fifth to ninth aspects, and may include: an adding unit that applies additional processing to the second sound; an adding delay amount obtaining unit that obtains an amount of increase or decrease in delay in the adding unit; and a time difference adjusting unit that adjusts the time difference, based on the amount of increase or decrease obtained by the adding delay amount obtaining unit.

The device according to the above-described aspect makes it possible to appropriately adjust the time difference according to the delay that is increased or decreased by the additional processing.

An acoustic processing device according to a thirty-eighth aspect understood based on the present disclosure is the acoustic processing device according to the thirty-sixth or thirty-seventh aspect, in which the additional processing may be processing not applied to the first sound.

The device according to the above-described aspect makes it possible to apply, to the second sound, the additional processing not applied to the first sound. Accordingly, the device according to the above-described aspect makes it possible to apply, to the second sound, the additional processing suitable for the second sound.

An acoustic processing device according to a thirty-ninth aspect understood based on the present disclosure is the acoustic processing device according to the thirty-sixth or thirty-seventh aspect, in which the adding unit may be a filtering unit that auditorily enhances sound diffusion.

The device according to the above-described aspect makes it possible to apply the additional processing to the second sound using the filtering unit that auditorily enhances the sound diffusion.

An acoustic processing device according to a fortieth aspect understood based on the present disclosure includes a circuit and a memory, in which using the memory, the circuit may: obtain sound space information on a sound space; obtain a sound volume ratio between a sound volume of a direct sound and a sound volume of a reflected sound, based on the sound space information, the direct sound being generated from a sound source in the sound space, the reflected sound being generated in the sound space in response to the direction sound; obtain information on additional processing; and control whether to select the reflected sound, based on the information on the additional processing and the sound volume ratio.

The device according to the above-described aspect makes it possible to appropriately control whether to select the reflected sound, based on the information on the additional processing and the sound volume ratio between the direct sound and the reflected sound. In other words, it is possible to appropriately control whether to select the reflected sound generated in response to the direct sound generated from the sound source in the sound space. Thus, it is possible to appropriately reduce the amount of computation and the computational load.

An acoustic processing device according to a forty-first aspect understood based on the present disclosure is the acoustic processing device according to the fortieth aspect, in which the circuit may adjust the sound volume ratio according to the information on the additional processing, and control whether to select the reflected sound, based on the sound volume ratio adjusted.

The device according to the above-described aspect makes it possible to appropriately control whether to select the reflected sound, based on the sound volume ratio into which the impact of the additional processing is incorporated.

An acoustic processing device according to a forty-second aspect understood based on the present disclosure is the acoustic processing device according to the fortieth or forty-first aspect, in which the circuit may calculate a time at which a sound emitted from the sound source arrives as the reflected sound, and control whether to select the reflected sound, based on the time, the information on the additional processing, and the sound volume ratio.

The device according to the above-described aspect makes it possible to more appropriately select a reflected sound having a large degree of influence on the listener's perception, based on the arrival time of the reflected sound, the information on the additional processing, and the sound volume ratio between the direct sound and the reflected sound.

An acoustic processing device according to a forty-third aspect understood based on the present disclosure is the acoustic processing device according to any one of the fortieth to forty-second aspects, in which the circuit may: calculate a time difference between an arrival time of the direct sound and an arrival time of the reflected sound, based on the sound space information; and control whether to select the reflected sound, based on the time difference, the information on the additional processing, and the sound volume ratio.

The device according to the above-described aspect makes it possible to more appropriately select a reflected sound having a large degree of influence on the listener's perception, based on the time difference between the arrival time of the direct sound and the arrival time of the reflected sound, the information on the additional processing, and the sound volume ratio between the direct sound and the reflected sound. Thus, the device according to the above-described aspect makes it possible to more appropriately select a reflected sound having a large degree of influence on the listener's perception, based on the precedence effect.

An acoustic processing device according to a forty-fourth aspect understood based on the present disclosure is the acoustic processing device according to any one of the fortieth to forty-second aspects, in which the circuit may: calculate a time difference between an end time of the direct sound and an arrival time of the reflected sound, based on the sound space information; and control whether to select the reflected sound, based on the time difference, the information on the additional processing, and the sound volume ratio.

The device according to the above-described aspect makes it possible to more appropriately select a reflected sound having a large degree of influence on the listener's perception, based on the time difference between the end time of the direct sound and the arrival time of the reflected sound, the information on the additional processing, and the sound volume ratio between the direct sound and the reflected sound. Thus, the device according to the above-described aspect makes it possible to more appropriately select a reflected sound having a large degree of influence on the listener's perception, based on the post-masking effect.

An acoustic processing device according to a forty-fifth aspect understood based on the present disclosure is the acoustic processing device according to any one of the fortieth to forty-fourth aspects, in which the additional processing may be processing involving increasing or decreasing an amplitude of the reflected sound, the information on the additional processing may be information indicating an amount of increase or decrease in the amplitude of the reflected sound in the processing involving the increasing or decreasing the amplitude of the reflected sound, and the circuit may: adjust the sound volume ratio according to the amount of increase or decrease in the amplitude of the reflected sound; and control whether to select the reflected sound, based on the sound volume ratio adjusted.

The device according to the above-described aspect makes it possible to appropriately adjust the sound volume ratio according to the amplitude that is increased or decreased by the additional processing. In addition, the device according to the above-described aspect makes it possible to appropriately control whether to select the reflected sound, based on the sound volume ratio adjusted by the additional processing.

An acoustic processing device according to a forty-sixth aspect understood based on the present disclosure is the acoustic processing device according to the forty-third or forty-fourth aspect, in which the additional processing may be processing involving increasing or decreasing a delay of the reflected sound, the information on the additional processing may be information indicating an amount of increase or decrease in the delay of the reflected sound in the processing involving the increasing or decreasing the delay of the reflected sound, and the circuit may: adjust the time difference according to the amount of increase or decrease in the delay of the reflected sound; and control whether to select the reflected sound, based on the time difference adjusted and the sound volume ratio.

The device according to the above-described aspect makes it possible to appropriately adjust the time difference according to the delay that is increased or decreased by the additional processing. In addition, the device according to the above-described aspect makes it possible to appropriately control whether to select the reflected sound, based on the time difference adjusted by the additional processing.

An acoustic processing device according to a forty-seventh aspect understood based on the present disclosure is the acoustic processing device according to any one of the fortieth to forty-sixth aspects, in which the additional processing may be processing not applied to the direct sound.

The device according to the above-described aspect makes it possible to apply the additional processing to the reflected sound without applying the additional processing to the direct sound. In other words, the device according to the above-described aspect makes it possible to apply, to the reflected sound, the additional processing not applied to the direct sound. Thus, the device according to the above-described aspect makes it possible to apply, to the reflected sound, the additional processing suitable for the reflected sound.

An acoustic processing device according to a forty-eighth aspect understood based on the present disclosure is the acoustic processing device according to any one of the fortieth to forty-seventh aspects, in which the additional processing may be filter processing that auditorily enhances sound diffusion.

The device according to the above-described aspect makes it possible to appropriately control whether to select the reflected sound, based on information on the filter processing that auditorily enhances the sound diffusion and the sound volume ratio between the direct sound and the reflected sound.

An acoustic processing device according to a forty-ninth aspect understood based on the present disclosure is the acoustic processing device according to the forty-first or forty-fifth aspect, in which when the information on the additional processing indicates that the additional processing is not to be performed, the sound volume ratio need not be adjusted.

The device according to the above-described aspect makes it possible to appropriately control whether to adjust the sound volume ratio, based on whether the additional processing is to be performed.

An acoustic processing device according to a fiftieth aspect understood based on the present disclosure is the acoustic processing device according to the forty-sixth aspect, in which when the information on the additional processing indicates that the additional processing is not to be performed, the time difference need not be adjusted.

The device according to the above-described aspect makes it possible to appropriately control whether to adjust the time difference, based on whether the additional processing is to be performed.

An acoustic processing device according to a fifty-first aspect understood based on the present disclosure includes a circuit and a memory, in which using the memory, the circuit may: obtain sound space information on a sound space; determine whether a sound source in the sound space is a point sound source, based on the sound space information; when the sound source is determined to be the point sound source, (i) obtain, based on the sound space information, a sound volume ratio between a sound volume of a direct sound and a sound volume of a reflected sound, the direct sound being generated from the sound source, the reflected sound being generated in the sound space in response to the direct sound, (ii) calculate, based on the sound space information, a time difference between an arrival time of the direct sound and an arrival time of the reflected sound, and (iii) control whether to select the reflected sound, based on the sound volume ratio and the time difference; and when the sound source is determined not to be the point sound source, select the reflected sound regardless of the sound volume ratio and the time difference.

Even when a distance between the listener and the sound source is not determined and it is difficult to appropriately calculate the sound volume ratio and the time difference between the direct sound and the reflected sound, the device according to the above-described aspect makes it possible to select the reflected sound regardless of the sound volume ratio and the time difference. Thus, the device according to the above-described aspect makes it possible to suppress audio degradation that can occur when the sound source is not the point sound source.

A threshold value identifying device according to a fifty-second aspect understood based on the present disclosure includes a circuit and a memory, in which using the memory, the circuit: obtains a time difference between an arrival time of a leading sound and an arrival time of a lagging sound generated in response to the leading sound; and identifies a threshold value of a sound volume ratio of a sound volume of the lagging sound to a sound volume of the leading sound, based on the time difference, and outputs the threshold value, the threshold value corresponding to a boundary as to whether the lagging sound is impacted by a precedence effect produced by the leading sound, in identifying the threshold value, on a boundary line in a region including a first axis of the time difference and a second axis of the sound volume ratio, the sound volume ratio corresponding to the time difference is identified as the threshold value, the boundary line being defined as a line indicating the boundary, and a domain of the boundary line on the first axis is a time range in which the precedence effect occurs.

The device according to the above-described aspect makes it possible to appropriately identify the threshold value corresponding to the boundary of the precedence effect, based on a relationship between the time difference between the leading sound and the lagging sound and the sound volume ratio between the leading sound and the lagging sound. Additionally, the device according to the above-described aspect makes it possible to efficiently identify the threshold value for the time range in which the precedence effect occurs.

A threshold value identifying device according to a fifty-third aspect understood based on the present disclosure is the threshold value identifying device according to the fifty-second aspect, in which when the first axis is a horizontal axis and the second axis is a vertical axis, the boundary line may be a downward-sloping, upwardly convex curved line in the domain.

The device according to the above-described aspect makes it possible to appropriately identify the threshold value, based on the characteristics of the boundary such that the sound volume ratio decreases with an increase in the time difference and the rate of decrease of the sound volume ratio is higher than the rate of increase of the time difference. Thus, the device according to the above-described aspect makes it possible to provide an appropriate threshold value for determining whether the lagging sound is impacted by the precedence effect.

A threshold value identifying device according to a fifty-fourth aspect understood based on the present disclosure is the threshold value identifying device according to the fifty-second or fifty-third aspect, in which the boundary line may be defined by an equation including the time difference as a variable, and the threshold value may be calculated based on the equation.

The device according to the above-described aspect makes it possible to efficiently identify the threshold value, based on the equation. Thus, the device according to the above-described aspect makes it possible to efficiently provide the threshold value.

An acoustic processing method according to a fifty-fifth aspect understood based on the present disclosure includes: obtaining sound space information on a sound space; obtaining, based on the sound space information, a sound volume ratio between a sound volume of a direct sound and a sound volume of a reflected sound, the direct sound being generated from a sound source in the sound space, the reflected sound being generated in the sound space in response to the direct sound; obtaining information on additional processing; and controlling whether to select the reflected sound, based on the information on the additional processing and the sound volume ratio.

The method according to the above-described aspect makes it possible to produce the same advantageous effects as the acoustic processing device according to the fortieth aspect.

A program according to a fifty-sixth aspect understood based on the present disclosure is a program for causing a computer to execute the acoustic processing method according to the fifty-fifth aspect.

The program according to the above-described aspect produces the same advantageous effects as the acoustic processing method according to the fifty-fifth aspect, using the computer.

Note that these comprehensive or specific aspects may be implemented as a system, a device, a method, an integrated circuit, a computer program, or a computer-readable recording medium such as a CD-ROM, or may be implemented as any combination of a system, a device, a method, an integrated circuit, a computer program, or a recording medium.

Hereinafter, an acoustic processing device, an encoding device, a decoding device, and a three-dimensional sound reproduction system according to the present disclosure will be described in detail with reference to the drawings. The three-dimensional sound reproduction system may be expressed as an audio signal reproduction system.

Note that all of the embodiments described hereinafter illustrate comprehensive or specific examples. The numerical values, shapes, materials, constituent elements, the arrangement and connection of the constituent elements, steps, the processing order of the steps, etc., shown in the following embodiments are mere examples, and thus are not intended to limit the aspects that are understood based on the present disclosure. Furthermore, among the constituent elements described in the following embodiments, constituent elements not included in specific aspects described in the present disclosure and constituent elements not recited in any one of the independent claims that indicate the broadest concepts are described as optional constituent elements.

### [Embodiment]

### (Example of Three-Dimensional Sound Reproduction System)

FIG. 2 is a diagram for illustrating an example of a three-dimensional sound reproduction system. Specifically, FIG. 2 illustrates three-dimensional sound reproduction system 1000, which is an example of a system to which acoustic processing or decoding processing of the present disclosure can be applied. Three-dimensional sound is also expressed as immersive audio. Three-dimensional sound reproduction system 1000 includes audio signal processing device 1001 and audio presentation device 1002.

Audio signal processing device 1001, which is also expressed as an acoustic processing device, applies acoustic processing to an audio signal emitted from a virtual sound source and generates an acoustic-processed audio signal to be presented to the listener. The audio signal is not limited to voices, and is acceptable as long as it is an audible sound. Acoustic processing is, for example, signal processing applied to an audio signal in order to reproduce one or more effects that a sound receives between when the sound is emitted from a sound source and when the sound arrives at the listener.

Audio signal processing device 1001 performs acoustic processing based on spatial information that describes the main factors for bringing about the above-described effects. Spatial information encompasses, for example: information that indicates the location of a sound source, a listener, and objects in the vicinity; information that indicates the shape of a space; parameters regarding sound propagation; and the like. Audio signal processing device 1001 is, for example, a PC (personal computer), a smartphone, a tablet, a game console, or the like.

An acoustic-processed signal is presented from audio presentation device 1002 to the listener. Audio presentation device 1002 is connected to audio signal processing device 1001 via wireless or wired communication. The acoustic-processed audio signal generated by audio signal processing device 1001 is transmitted to audio presentation device 1002 via wireless or wired communication.

When audio presentation device 1002 includes a plurality of devices such as, for example, a device for the right ear and a device for the left ear, or the like, the plurality of devices present sound in synchronization by means of communication between the plurality of devices or communication between each of the plurality of devices and audio signal processing device 1001. Audio presentation device 1002 is, for example, headphones, earphones, or a head-mounted display worn on the head of the listener, surround speakers including a plurality of fixed speakers, or the like.

Note that three-dimensional sound reproduction system 1000 may be used in combination with an image presentation device or a stereoscopic image presentation device that visually provides an ER experience that includes AR/VR. For example, a space handled by spatial information is a virtual space in which the positions of sound sources, the listener, and objects in the space are virtual positions of virtual sound sources, a virtual listener, and virtual objects in a virtual space. The space can also be expressed as a sound space. Furthermore, the spatial information can also be expressed as sound space information.

Furthermore, FIG. 2 illustrates a system configuration example in which audio signal processing device 1001 and audio presentation device 1002 are separate devices, but three-dimensional sound reproduction system 1000 to which the acoustic processing method or the decoding method of the present disclosure can be applied is not limited to the configuration in FIG. 2. For example, audio signal processing device 1001 may be included in audio presentation device 1002, and audio presentation device 1002 may perform both acoustic processing and sound presentation.

Furthermore, audio signal processing device 1001 and audio presentation device 1002 may, in a shared manner, perform the acoustic processing described in the present disclosure. Furthermore, a server connected to audio signal processing device 1001 or audio presentation device 1002 over a network may perform a part or all of the acoustic processing described in the present disclosure.

Furthermore, audio signal processing device 1001 may perform the acoustic processing by decoding a bitstream that has been generated by encoding at least a part of data of the audio signal and the spatial information used in the acoustic processing. Thus, audio signal processing device 1001 may be expressed as a decoding device.

### (Example of Encoding Device)

FIG. 3A is a block diagram for illustrating a configuration example of an encoding device. Specifically, FIG. 3A illustrates the configuration of encoding device 1100, which is an example of the encoding device of the present disclosure.

Input data 1101 is data to be encoded, and includes spatial information and/or an audio signal to be inputted into encoder 1102. Details regarding the spatial information will be described later.

Encoder 1102 encodes input data 1101 to generate encoded data 1103. Encoded data 1103 is, for example, a bitstream generated by means of encoding processing.

Memory 1104 stores encoded data 1103. Memory 1104 may be, for example, a hard disk or an SSD (solid-state drive), or may be another type of memory.

Note that in the above description, a bitstream generated by means of encoding processing was given as an example of encoded data 1103 stored in memory 1104, but encoded data 1103 may be data other than a bitstream. For example, encoding device 1100 may store, in memory 1104, converted data generated by converting the bitstream into a predetermined data format. The converted data may be, for example, a file or multiplexed stream that corresponds to one or more bitstreams.

Here, the file is a file having a file format of, for example, ISO base media file format (ISOBMFF) or the like. Furthermore, encoded data 1103 may be in the form of a plurality of packets generated by splitting the above-described bitstream or file.

For example, the bitstream generated by encoder 1102 may be converted to data that is different from the bitstream. In this case, encoding device 1100 may include a converter, not illustrated, and the converter may perform conversion processing, or conversion processing may be performed by a central processing unit (CPU) that is an example of a processor, described later.

### (Example of Decoding Device)

FIG. 3B is a block diagram for illustrating a configuration example of a decoding device. Specifically, FIG. 3B illustrates the configuration of decoding device 1110, which is an example of the decoding device of the present disclosure.

Memory 1114 stores, for example, the same data as encoded data 1103 generated by encoding device 1100. The stored data is read from memory 1114 and inputted into decoder 1112 as input data 1113. Input data 1113 is, for example, a bitstream that is to be decoded. Memory 1114 may be, for example, a hard disk or an SSD, or may be another type of memory.

Note that decoding device 1110 may not directly input data read from memory 1114 as input data 1113, and may instead convert the data read and then input the converted data into decoder 1112 as input data 1113. The data before conversion may be, for example, multiplexed data that includes one or more bitstreams. Here, the multiplexed data may be, for example, a file having a file format such as ISOBMFF or the like.

Furthermore, the data before conversion may be a plurality of packets generated by splitting the above-described bitstream or file. Data that is different from the bitstream may be read from memory 1114 and then converted into a bitstream. In this case, decoding device 1110 may include a converter, not illustrated, and the converter may perform conversion processing, or conversion processing may be performed by a CPU that is an example of a processor, described later.

Decoder 1112 decodes input data 1113 to generate audio signal 1111 that indicates audio to be presented to the listener.

### (Other Example of Encoding Device)

FIG. 3C is a block diagram for illustrating a configuration example of another encoding device. Specifically, FIG. 3C illustrates the configuration of encoding device 1120, which is another example of the encoding device of the present disclosure. In FIG. 3C, constituent elements that are the same as the constituent elements in FIG. 3A have been given the same reference signs as in FIG. 3A, and description of these constituent elements is omitted.

Encoding device 1100 stores encoded data 1103 in memory 1104. On the other hand, encoding device 1120 is different from encoding device 1100 in the respect that encoding device 1120 includes transmitter 1121 that transmits encoded data 1103 externally.

Transmitter 1121 transmits, to a different device or server, transmission signal 1122 that is generated based on data converted from encoded data 1103 or encoded data 1103 to a different file format. The data used in generating transmission signal 1122 is, for example, the bitstream, multiplexed data, file, or packet described in relation to encoding device 1100.

### (Other Example of Decoding Device)

FIG. 3D is a block diagram for illustrating another configuration example of a decoding device. Specifically, FIG. 3D illustrates the configuration of decoding device 1130, which is another example of the decoding device of the present disclosure. In FIG. 3D, constituent elements that are the same as the constituent elements in FIG. 3B have been given the same reference signs as in FIG. 3B, and description of these constituent elements is omitted.

Decoding device 1110 reads input data 1113 from memory 1114. On the other hand, decoding device 1130 is different from decoding device 1110 in the respect that decoding device 1130 includes receiver 1131, which receives input data 1113 from an external source.

Receiver 1131 receives reception signal 1132 to obtain reception data, and outputs input data 1113 to be inputted into decoder 1112. The reception data may be the same as input data 1113 inputted into decoder 1112, or may be data in a data format that is different from that of input data 1113.

When the data format of the reception data is different from the data format of input data 1113, receiver 1131 may convert the reception data into input data 1113. Alternatively, a converter or a CPU, each not illustrated, of decoding device 1130 may convert the reception data into input data 1113. The reception data is, for example, the bitstream, multiplexed data, file, or packet described in relation to encoding device 1120.

### (Example of Decoder)

FIG. 4A is a block diagram for illustrating a configuration example of a decoder. Specifically, FIG. 4A illustrates the configuration of decoder 1200, which is an example of decoder 1112 in FIG. 3B and FIG. 3D.

Input data 1113 is an encoded bitstream, and includes encoded audio data that is an audio signal that has been encoded, and metadata used in acoustic processing.

Spatial information manager 1201 obtains the metadata included in input data 1113 and analyzes the metadata. The metadata includes information that describes the main factors that act on the sounds arranged in the sound space. Spatial information manager 1201 manages the spatial information that is obtained by analyzing the metadata and is used in the acoustic processing, and provides the spatial information to renderer 1203.

Note that in the present disclosure, the information used in the acoustic processing is expressed as spatial information, but another expression may be used. For example, the information used in the acoustic processing may be expressed as sound space information, or may be expressed as scene information. Furthermore, when the information used in the acoustic processing changes over time, the spatial information inputted into renderer 1203 may be information expressed as a spatial state, a sound space state, a scene state, or the like.

Furthermore, the spatial information may be managed for each sound space or for each scene. For example, when each of a plurality of mutually differing rooms is expressed as a virtual space, the plurality of rooms may be managed as a plurality of scenes that mutually differ. Furthermore, spatial information may be managed such that even the same room is managed as a different scene in accordance with the expressed state.

Thus, a plurality of items of spatial information may be managed with respect to a plurality of sound spaces or a plurality of scenes. In management of a plurality of items of spatial information, an identifier that identifies each item of the plurality of items of spatial information may be assigned to the spatial information.

The spatial information data may be included in a bitstream that is an example of input data 1113. Alternatively, the bitstream may include an identifier of the spatial information, and the spatial information data may be obtained from an information source other than the bitstream. Specifically, when the bitstream includes only the identifier of the spatial information, in the rendering, the spatial information data stored in the memory inside the device or in an external server may be obtained as input data 1113, using the identifier of the spatial information.

Note that the information managed by spatial information manager 1201 is not limited to information included in the bitstream. For example, input data 1113 may include, as data not included in the bitstream, data that indicates the characteristics and structure of a space obtained from a VR or AR software application or server.

Furthermore, input data 1113 may include data that indicates the characteristics, position, and/or the like of the listener or an object. Moreover, input data 1113 may include information on the position of the listener, obtained using a sensor included in a terminal including a decoding device (1110, 1130), or may include information that indicates the position of the terminal, estimated based on information obtained using the sensor.

In other words, spatial information manager 1201 may communicate with an external system or server to obtain spatial information and the position of the listener. Furthermore, spatial information manager 1201 may obtain clock synchronization information from an external system and perform processing to perform synchronization with a clock in renderer 1203.

Note that the space in the above description may be a virtually formed space, i.e., a VR space, or may be a real-world space or a virtual space that corresponds to a real-world space, i.e., an AR space or an MR space. Furthermore, the virtual space may be expressed as a sound field or a sound space. Moreover, the information indicating position in the above description may be information on coordinates or the like that indicate a position in a space, may be information that indicates a relative position with respect to a predetermined reference position, or may be information that indicates movement or acceleration of a position in a space.

Audio data decoder 1202 decodes encoded audio data included in input data 1113 to obtain an audio signal.

The encoded audio data obtained by three-dimensional sound reproduction system 1000 is, for example, a bitstream encoded in a predetermined format such as MPEG-H 3D Audio (ISO/IEC 23008-3). Note that MPEG-H 3D Audio is merely an example of an encoding method that can be used when generating the encoded audio data included in the bitstream. The encoded audio data may be a bitstream encoded by another encoding method.

For example, the encoding method may be a lossy codec such as MPEG-1 Audio Layer III (MP3), Advanced Audio Coding (AAC), Windows Media Audio (WMA), Audio Codec 3 (AC3), Vorbis, or the like. Alternatively, the encoding method may be a lossless codec such as Apple Lossless Audio Codec (ALAC), Free Lossless Audio Codec (FLAC), or the like.

Alternatively, any encoding method other than the above-described may be used. For example, PCM data may be a type of the encoded audio data. In this case, when, for example, the quantization bit rate of the PCM data is N, the decoding processing may be processing in which the N-bit binary number is converted into a numerical format (for example, floating-point format) that can be processed by renderer 1203.

Renderer 1203 obtains the audio signal and the spatial information, applies acoustic processing to the audio signal using the spatial information, and outputs an acoustic-processed audio signal (audio signal 1111).

Before starting the rendering, spatial information manager 1201 reads the metadata of the input signal, detects rendering items such as objects and sounds specified by the spatial information, and transmits the rendering items to renderer 1203. After the start of rendering, spatial information manager 1201 grasps the change over time of the spatial information and the position of the listener, and updates and manages the spatial information. Then, the updated spatial information is transmitted to renderer 1203.

Renderer 1203 generates and outputs an acoustic processing-added audio signal based on the audio signal included in input data 1113 and the spatial information received from spatial information manager 1201.

Update processing of the spatial information and output processing of the acoustic processing-added audio signal may be performed in the same thread. Furthermore, processing may be allocated to spatial information manager 1201 and renderer 1203 in mutually independent threads. When spatial information manager 1201 and renderer 1203 perform the update processing of the spatial information and the output processing of the acoustic processing-added audio signal in different threads, the thread activation frequency may be set separately, or processing may be performed in parallel.

When spatial information manager 1201 and renderer 1203 perform processing in independent threads that are different, renderer 1203 can be preferentially allotted computation resources. This makes it possible to safely execute sound output processing for which even a slight delay is unallowable, i.e., for which a popping noise would be generated with a delay of even one sample (0.02 msec).

At this time, allotment of computation resources to spatial information manager 1201 is limited. However, since compared to the output processing of the audio signal, updating of the spatial information is processing that is infrequent (for example, processing such as updating the orientation of a listener's face), it is not necessary for the output processing of the audio signal to be performed instantaneously. Thus, even when the allotment of computation resources is limited, the acoustic quality is not greatly impacted.

The updating of the spatial information may be periodically performed with each elapse of a preset time period or term, or may be performed when a preset condition is satisfied. Furthermore, the updating of the spatial information may be performed manually by the listener or a sound space manager, or may be performed by being triggered by a change to an external system.

For example, the spatial information may be updated when a controller is being operated by the listener and the position of the listener's avatar is instantaneously warped or time is instantaneously progressed or reversed. Alternatively, the spatial information may be updated when an operation to suddenly change the field environment is performed by the manager of the virtual space. In these cases, the thread for updating the spatial information managed by spatial information manager 1201 may be activated as one-time interrupt processing in addition to the periodic activation.

FIG. 4B is a block diagram for illustrating another configuration example of a decoder. Specifically, FIG. 4B illustrates the configuration of decoder 1210, which is another example of decoder 1112 in FIG. 3B and FIG. 3D.

FIG. 4B is different from FIG. 4A in the respect that input data 1113 includes not encoded audio data, but an unencoded audio signal. Input data 1113 includes an audio signal and a bitstream including metadata.

Spatial information manager 1211 is the same as spatial information manager 1201 in FIG. 4A; therefore, description thereof has been omitted.

Renderer 1213 is the same as renderer 1203 in FIG. 4A; therefore, description thereof has been omitted.

Note that decoders 1112, 1200, and 1210 may be expressed as the acoustic processor that performs the acoustic processing. Furthermore, decoding devices 1110 and 1130 may be audio signal processing device 1001, or may be expressed as the acoustic processing device.

### (Physical Configuration of Audio Signal Processing Device)

FIG. 5 is a diagram for illustrating an example of a physical configuration of audio signal processing device 1001. Note that audio signal processing device 1001 in FIG. 5 may be decoding device 1110 in FIG. 3B or decoding device 1130 in FIG. 3D. A plurality of the constituent elements illustrated in FIG. 3B or FIG. 3D may be implemented by a plurality of the constituent elements illustrated in FIG. 5. Furthermore, a part of the configuration described here may be included in audio presentation device 1002.

Audio signal processing device 1001 in FIG. 5 includes processor 1402, memory 1404, communication interface (I/F) 1403, sensor 1405, and loudspeaker 1401.

Processor 1402 is, for example, a CPU, a digital signal processor (DSP), or a graphics processing unit (GPU). The acoustic processing or the decoding processing of the present disclosure may be performed by the CPU, the DSP, or the GPU executing a program stored in memory 1404. Furthermore, processor 1402 is, for example, a circuit that performs information processing. Processor 1402 may be a dedicated circuit that performs signal processing on audio signals, including the acoustic processing of the present disclosure.

Memory 1404 includes, for example, random access memory (RAM) or read-only memory (ROM). Memory 1404 may include, for example, magnetic storage media, exemplified by a hard disk, or semiconductor memory, exemplified by an SSD. Furthermore, memory 1404 may be an internal memory incorporated into the CPU or GPU. Moreover, spatial information managed by the spatial information manager (1201, 1211), and/or the like may be stored in memory 1404. Furthermore, threshold value data, described later, may be stored.

Communication I/F 1403 is, for example, a communication module that supports a communication method such as Bluetooth (registered trademark) or WiGig (registered trademark). Audio signal processing device 1001 communicates with other communication devices via communication I/F 1403, and obtains a bitstream to be decoded. The obtained bitstream is, for example, stored in memory 1404.

Communication I/F 1403 includes, for example, a signal processing circuit that supports the communication method, and an antenna. The communication method is not limited to Bluetooth (registered trademark) or WiGig (registered trademark), and may be Long Term Evolution (LTE), New Radio (NR), Wi-Fi (registered trademark), or the like.

The communication method is not limited to the wireless communication methods described above, and may be a wired communication method such as Ethernet (registered trademark), Universal Serial Bus (USB), High-Definition Multimedia Interface (HDMI) (registered trademark), or the like.

Sensor 1405 performs sensing to estimate the position or orientation of the listener. Specifically, sensor 1405 estimates the position and/or orientation of the listener based on one or more detection results of one or more of the position, orientation, movement, velocity, angular velocity, acceleration, or the like of a part or all of the listener's body, and generates position/orientation information indicating the position and/or orientation of the listener.

Note that a device outside of audio signal processing device 1001 may include sensor 1405. The part of the body may be the listener's head or the like. The position/orientation information may be information indicating the position and/or orientation of the listener in real-world space, or may be information indicating the displacement of the position and/or orientation of the listener with respect to the position and/or orientation of the listener at a predetermined time point. Furthermore, the position/orientation information may be information indicating a position and/or orientation relative to three-dimensional sound reproduction system 1000 or an external device including sensor 1405.

Sensor 1405 may be, for example, an imaging device such as a camera or a distance measuring device such as a laser imaging detection and ranging (LiDAR) distance measuring device. Sensor 1405 may capture an image of the movement of the listener's head and detect the movement of the listener's head by processing the captured image. Furthermore, a device that performs position estimation using radio waves in any given frequency band such as millimeter waves may be used as sensor 1405.

Furthermore, audio signal processing device 1001 may obtain position information via communication I/F 1403 from an external device including sensor 1405. In this case, audio signal processing device 1001 need not include sensor 1405. Here, the external device refers to, for example, audio presentation device 1002 described in FIG. 2, or a stereoscopic image reproduction device worn on the listener's head. In this case, sensor 1405 is configured as a combination of various sensors, such as a gyro sensor and an acceleration sensor, for example.

As the speed of the movement of the listener's head, sensor 1405 may detect, for example, the angular speed of rotation about at least one of three mutually orthogonal axes in the sound space as the axis of rotation or the acceleration of displacement in at least one of the three axes as the direction of displacement.

As the amount of the movement of the listener's head, sensor 1405 may detect, for example, the amount of rotation about at least one of three mutually orthogonal axes in the sound space as the axis of rotation or the amount of displacement in at least one of the three axes as the direction of displacement. Specifically, sensor 1405 detects 6DoF positions (x, y, z) and angles (yaw, pitch, roll) as the position of the listener. Sensor 1405 is configured as a combination of various sensors used for detecting movement, such as a gyro sensor and an acceleration sensor.

Note that sensor 1405 may implemented by, e.g., a camera or a Global Positioning System (GPS) receiver for detecting the position of the listener. Position information obtained by performing self-position estimation, by using LiDAR or the like as sensor 1405, may be used. For example, when three-dimensional sound reproduction system 1000 is implemented by a smartphone, sensor 1405 is included in the smartphone.

Furthermore, sensor 1405 may include a temperature sensor such as a thermocouple that detects the temperature of audio signal processing device 1001. Moreover, sensor 1405 may include, for example, a sensor that detects the remaining level of a battery included in audio signal processing device 1001 or a battery connected to audio signal processing device 1001.

Loudspeaker 1401 includes, for example, a diaphragm, a driving mechanism such as a magnet or a voice coil, and an amplifier, and presents the acoustic-processed audio signal as sound to the listener. Loudspeaker 1401 operates the driving mechanism according to the audio signal (more specifically, a waveform signal indicating the waveform of the sound) amplified via the amplifier, and vibrates the diaphragm by means of the driving mechanism. In this way, the diaphragm vibrating according to the audio signal generates sound waves, which propagate through the air and are transmitted to the listener's ears, allowing the listener to perceive the sound.

Note that although here, an example in which audio signal processing device 1001 includes loudspeaker 1401 and presents the acoustic-processed audio signal via loudspeaker 1401 was given, the means for providing the audio signal is not limited to this configuration.

For example, the acoustic-processed audio signal may be outputted to external audio presentation device 1002 connected via a communication module. The communication performed by the communication module may be wired or wireless. As another example, audio signal processing device 1001 may include a terminal that outputs an analog audio signal, and may present the audio signal from earphones or the like by connecting the earphone cable to the terminal.

In this case, audio presentation device 1002 may be headphones, earphones, a head-mounted display, neck speakers, wearable speakers, or the like, each worn on the listener's head or a part of the listener's body. Alternatively, audio presentation device 1002 may be surround speakers configured with a plurality of fixed speakers, or the like. Audio presentation device 1002 may reproduce the audio signal.

### (Physical Configuration of Encoding Device)

FIG. 6 is a diagram for illustrating an example of a physical configuration of an encoding device. Encoding device 1500 in FIG. 6 may be encoding device 1100 in FIG. 3A or encoding device 1120 in FIG. 3C, or a plurality of the constituent elements illustrated in FIG. 3A or FIG. 3C may be implemented by a plurality of the constituent elements illustrated in FIG. 6.

Encoding device 1500 in FIG. 6 includes processor 1501, memory 1503, and communication I/F 1502.

Processor 1501 is, for example, a CPU, a DSP, or a GPU. The encoding processing of the present disclosure may be performed by the CPU, the DSP, or the GPU executing a program stored in memory 1503. Furthermore, processor 1501 is, for example, a circuit that performs information processing. Processor 1501 may be a dedicated circuit that performs signal processing on audio signals, including the encoding processing of the present disclosure.

Memory 1503 includes, for example, RAM or ROM. Memory 1503 may include, for example, magnetic storage media, exemplified by a hard disk, or semiconductor memory, exemplified by an SSD. Furthermore, memory 1503 may be an internal memory incorporated into the CPU or GPU.

Communication I/F 1502 is, for example, a communication module that supports a communication method such as Bluetooth (registered trademark) or WiGig (registered trademark). For example, encoding device 1500 communicates with other communication devices via communication I/F 1502, and transmits an encoded bitstream.

Communication I/F 1502 includes, for example, a signal processing circuit that supports the communication method, and an antenna. The communication method is not limited to Bluetooth (registered trademark) or WiGig (registered trademark), and may be LTE, NR, Wi-Fi (registered trademark), or the like. The communication method is not limited to wireless communication methods. The communication method may be a wired communication method such as Ethernet (registered trademark), USB, HDMI (registered trademark), or the like.

### (Configuration of Renderer)

FIG. 7 is a block diagram for illustrating a configuration example of a renderer. Specifically, FIG. 7 illustrates an example of the detailed configuration of renderer 1300, which corresponds to renderers 1203 and 1213 in FIG. 4A and FIG. 4B.

Renderer 1300 includes analyzer 1301, selector 1302, and synthesizer 1303, and adds acoustic processing to sound data included in the input signal and outputs the sound data.

The input signal includes, for example, spatial information, sensor information, and sound data. The input signal may include a bitstream that includes sound data and metadata (control information), and in this case, the spatial information may be included in the metadata.

The spatial information is information related to the sound space (three-dimensional sound field) created by three-dimensional sound reproduction system 1000, and includes information about objects included in the sound space and information about the listener. The objects include sound source objects that emit sound and serve as sound sources, and non-sound-emitting objects that do not emit sound. The sound source objects may be expressed as simply sound sources.

The non-sound-emitting object serves as an obstacle object that reflects sound emitted by the sound source object, but a sound source object may also serve as an obstacle object that reflects sound emitted by another sound source object. The obstacle object may also be expressed as a reflection object.

Information assigned in common to both sound source objects and non-sound-emitting objects includes position information, geometry information, and the attenuation rate of sound volume when the object reflects sound.

The position information is represented by coordinate values of three axes, for example, the X-axis, the Y-axis, and the Z-axis of Euclidean space, but it does not necessarily have to be three-dimensional information. For example, the position information may be two-dimensional information represented by coordinate values of the two axes of the X-axis and the Y-axis. The position information of the object is defined by a representative position of the shape expressed by a mesh or voxel.

The geometry information may include information about the material of the surface.

The attenuation rate may be expressed as a real number greater than or equal to 0 and less than or equal to 1, or may be expressed as a negative decibel value. Since sound volume does not increase from reflection in real-world space, the attenuation rate is set to a negative decibel value. However, for example, to create an eerie atmosphere in a non-realistic space, an attenuation rate greater than or equal to 1, that is, a positive decibel value, may be intentionally set.

Furthermore, the attenuation rate may be set such that each frequency band included in a plurality of frequency bands has a different value, or values may be independently set for each frequency band. Furthermore, when the attenuation rate is set for each type of material of an object surface, the value of the corresponding attenuation rate may be used based on information about the surface material.

Furthermore, the spatial information may include, for example, information indicating whether the object belongs to an animate thing or information indicating whether the object is a mobile body. When the object is a mobile body, the position indicated by the position information may move over time. In this case, information on the changed position or the amount of change is transmitted to renderer 1300.

Information related to the sound source object includes, in addition to information assigned in common to both sound source objects and non-sound-emitting objects, sound data and information necessary for radiating the sound data into the sound space. The sound data is data representing sound perceived by the listener, and indicates information such as the frequency and intensity of the sound.

The sound data is typically a PCM signal, but may also be data compressed using an encoding method such as MP3. In this case, since the signal needs to be decoded at least before arriving at generator 1303, renderer 1300 may include a decoder (not illustrated). Alternatively, the signal may be decoded by audio data decoder 1202.

One item of sound data may be set for one sound source object, or a plurality of items of sound data may be set. Furthermore, identification information for identifying each item of sound data may be assigned to the sound data, or information related to the sound source object may include identification information for the sound data.

As information necessary for radiating sound data into the sound space, for example, information on a reference sound volume that is used as a standard in reproducing the sound data, information indicating the nature (also referred to as a characteristic) of sound data, information related to the position of the sound source object, information related to the orientation of the sound source object (in other words, information related to the directivity of the sound emitted by the sound source object), and the like may be included.

The information on the reference sound volume may be, for example, the root mean square value of the amplitude value of the sound data at the sound source position at the time of radiating the sound data into the sound space, and may be expressed as a floating-point decibel (dB) value.

For example, when the reference sound volume is 0 dB, the information on the reference sound volume may indicate that the sound is to be radiated into the sound space from the position indicated by the information related to the position of the sound source object, at the same sound volume as the signal level indicated by the sound data, without increase or decrease. Furthermore, when the reference sound volume is -6 dB, this may indicate that the sound is to be radiated into the sound space from the position indicated by the information related to the position of the sound source object at approximately half the sound volume of the signal level indicated by the sound data.

The information on the reference sound volume may be assigned to each item of sound data, or may be assigned collectively to a plurality of items of sound data.

Information indicating the nature of sound data is, for example, information on the sound volume of a sound source, and may be information indicating the chronological variation in the sound volume of a sound source.

For example, when the sound space is a virtual conference room and the sound source is a speaker, the sound volume transitions intermittently over short periods of time. In other words, sound portions and silent portions occur alternately. Furthermore, when the sound space is a concert hall and the sound source is a performer, the sound volume is maintained over a certain duration of time. Moreover, when the sound space is a battlefield and the sound source is an explosive, the sound volume of the explosion sound becomes large for only an instant and then continues to be silent or in a quiet state thereafter.

In this way, the sound volume information on the sound source may include not only information on the magnitude of sound but also information on the transition of the sound magnitude. Such information may be used as information indicating the nature of the sound data.

The information on the transition may be expressed by data indicating frequency characteristics in chronological order. The information on the transition may be expressed by data indicating the duration of a sound interval. The information on the transition may be expressed by data indicating the chronological order of durations of sound intervals and durations of silent intervals. The information on the transition may be expressed by, for example, data that enumerates, in chronological order, a plurality of sets of a duration for which the amplitude of the sound signal can be considered stationary (can be considered approximately constant) and the amplitude value of said signal during that duration.

The information on the transition may be expressed by data of a duration during which the frequency characteristics of the sound signal can be considered stationary. The information on the transition may be expressed by, for example, data that enumerates, in chronological order, a plurality of sets of a duration during which the frequency characteristics of the sound signal can be considered stationary and the frequency characteristics during that duration. The information on the transition may be expressed in the format of, for example, data indicating the general shape of a spectrogram.

Furthermore, the sound volume that is used as the standard for the above-mentioned frequency characteristics may be used as the reference sound volume. The information on the reference sound volume and the information indicating the nature of the sound data may be used for calculation processing of the sound volume of direct sound or reflected sound to be perceived by the listener, and/or may be used for selection processing for selecting whether to make the listener perceive the sound. Other examples of and usage methods for information indicating the nature of sound data will be described later.

Information on a sound source object may include, for example, information regarding the orientation of a sound source object (i.e., information regarding the directivity of a sound generated by a sound source object).

Information regarding the orientation of a sound source object (orientation information) is typically expressed in terms of yaw, pitch, and roll. Alternatively, the rotation of roll may be omitted, and the orientation information of a sound source object may be expressed in terms of azimuth (yaw) and elevation (pitch). The orientation information of a sound source object may change over time, and when changed, the orientation information is transmitted to renderer 1300.

Information related to the listener is information regarding the position and orientation of the listener in the sound space. The information regarding the position (position information) is represented by the position on the X-, Y-, and Z-axes of Euclidean space, but need not necessarily be three-dimensional information and may be two-dimensional information. Information regarding the orientation of the listener (orientation information) is typically expressed in terms of yaw, pitch, and roll. Alternatively, the rotation of roll may be omitted, and the listener orientation information may be expressed in terms of azimuth (yaw) and elevation (pitch).

The position information and orientation information regarding a listener may change over time, and when changed, the position information and orientation information are transmitted to renderer 1300.

The sensor information is information that includes, e.g., the rotation amount or displacement amount detected by sensor 1405 worn by the listener, and the position and orientation of the listener. The sensor information is transmitted to renderer 1300, and renderer 1300 updates the information on the position and orientation of the listener based on the sensor information. The sensor information may include position information obtained by performing self-localization estimation by a mobile terminal using GPS, a camera, or LiDAR, for example.

Furthermore, information obtained not from sensor 1405, but from an external source through a communication module, may also be detected as sensor information. Information indicating the temperature of audio signal processing device 1001, and information indicating the remaining level of the battery may be obtained from sensor 1405. Moreover, computational resources (CPU capability, memory resources, PC performance, and the like) of audio signal processing device 1001 or audio presentation device 1002 may be obtained in real time.

Analyzer 1301 analyzes an audio signal included in the input signal and spatial information received from the spatial information managers (1201, 1211) to detect the information required for generating direct sounds and reflected sounds, and the information required for selecting whether to generate reflected sounds.

The information required for generating direct sounds and reflected sounds is, for example, for each of direct sounds and reflected sounds, the path until arriving at the listening position, the time period taken until arrival, and values regarding, e.g., the sound volume at the arrival time.

The information required for selecting a reflected sound to be output is information indicating the relationship between the direct sound and the reflected sound, and is, for example, a value regarding a time difference between the direct sound and the reflected sound, a value regarding a sound volume ratio of the reflected sound to the direct sound at the listening position, and/or the like.

Note that it goes without saying that when the sound volume is expressed in units of decibels on a logarithmic scale (when the sound volume is expressed in the decibel domain), the sound volume ratio between the two signals is expressed as a decibel value difference. Specifically, the sound volume ratio between the two signals may be the difference when the amplitude value of each signal is expressed in the decibel domain. That value may be calculated based on, e.g., an energy value, a power value, or the like. Furthermore, this difference can be referred to as a difference in gain or simply a gain difference, in the decibel domain.

In other words, the sound volume ratio in the present disclosure is essentially the ratio between the amplitudes of signals; thus, the sound volume ratio may be expressed as a loudness ratio, a volume ratio, an amplitude ratio, a sound level ratio, a sound intensity ratio, a gain ratio, or the like. Furthermore, when the unit of sound volume is decibels, it goes without saying that the sound volume ratio in the present disclosure may be rephrased as the sound volume difference.

In the present disclosure, the "sound volume ratio" typically means the gain difference when the sound volume of each of two sounds is expressed in the unit of decibels, and in the examples of the embodiment, the threshold value data is also typically specified by the gain difference expressed in the decibel domain. However, the sound volume ratio is not limited to the gain difference in the decibel domain. When a sound volume ratio that is not expressed by the decibel domain is used, threshold value data specified in the decibel domain may be used by converting the threshold value data into the unit of the sound volume ratio calculated. Alternatively, threshold value data specified beforehand in each unit may be stored in the memory.

In other words, for example, even if a ratio between energy values, power value, or the like is used instead of the sound volume ratio, it is obvious that the algorithm in the present disclosure can be applied to solve the problem of the present disclosure.

The time difference between a direct sound and a reflected sound is, for example, the time difference between an arrival time period (arrival time) of the direct sound and an arrival time period (arrival time) of the reflected sound. The time difference between a direct sound and a reflected sound may be the time difference between the times at which each of the direct sound and the reflected sound arrive at the listening position, the difference in the time periods taken until each of the direct sound and the reflected sound arrive at the listening position, or the time difference between the time when emission of the direct sound ends and the time when the reflected sound arrives at the listening position. The methods for calculating these values will be described later.

Selector 1302 selects whether to generate a reflected sound by using information calculated by analyzer 1301 and the threshold value data. To put it differently, selector 1302 assesses whether to select a reflected sound as a reflected sound to be generated. To put it still differently, selector 1302 selects which reflected sounds to generate, from a plurality of reflected sounds.

The threshold value data is, for example, a graph having a horizontal axis that indicates the time difference between a direct sound and reflected sounds and a vertical axis that indicates the sound volume ratios of reflected sounds to a direct sound, and is expressed as a boundary (threshold value) that demarcates whether each reflected sound is perceived. For example, the threshold value data may be expressed as an approximation formula that includes the time difference between a direct sound and a reflected sound as a variable, or may be expressed as an arrangement that includes values of time differences between direct sounds and reflected sounds as an index, and corresponding threshold values.

Selector 1302 selects the generation of a reflected sound when, for example, at the time difference between the arrival time of a direct sound and the arrival time of a reflected sound, the sound volume ratio of the arrival time sound volume of the reflected sound to the arrival time sound volume of the direct sound is a value that is larger than a threshold value set with reference to threshold value data.

To put it differently, the time difference between the arrival time of a direct sound and the arrival time of a reflected sound is the difference in the amount of time taken for the direct sound and the reflected sound to arrive at the listening position. Furthermore, the time difference between the time point at which emission of the direct sound stops and the time point at which the reflected sound arrives at the listening position may be used as the time difference between the direct sound and the reflected sound. In this case, threshold value data that is different from the threshold value data determined by using, as a reference, the time difference between the direct sound arrival time and the reflected sound arrive time may be used, or common threshold value data may be used.

The threshold value data may be obtained from memory 1404 of audio signal processing device 1001, or may be obtained from an external storage device via a communication module. The threshold value data storage method and the threshold value setting method will be described later.

Synthesizer 1303 synthesizes the audio signals of direct sounds and the audio signals of reflected sounds selected for generation by selector 1302.

Specifically, synthesizer 1303 processes the inputted audio signals to generate direct sounds, based on information on the direct sound arrival time and the direct sound arrival time sound volume calculated by analyzer 1301. Furthermore, synthesizer 1303 processes the inputted audio signals to generate reflected sounds, based on information on the reflected sound arrival time and the reflected sound arrival time sound volume pertaining to the reflected sounds selected by selector 1302. Then, synthesizer 1303 synthesizes and outputs the direct sounds and reflected sounds that were generated.

### (Operation of Renderer)

FIG. 8 is a flowchart for illustrating an operation example of audio signal processing device 1001. FIG. 8 illustrates the processing performed mainly by renderer 1300 of audio signal processing device 1001.

In the analysis processing of the input signal (S101 in FIG. 8), analyzer 1301 analyzes the input signal inputted into audio signal processing device 1001 to detect direct sounds and reflected sounds that may be generated in the sound space. The reflected sounds detected here are candidates for the reflected sounds to be selected by selector 1302 as the reflected sounds to be ultimately generated by synthesizer 1303. Furthermore, analyzer 1301 analyzes the input signal to calculate information necessary for generating direct sound and reflected sound, and information necessary for selecting the reflected sounds to be generated.

First, the characteristics of each of the direct sound and the reflected sound are calculated. Specifically, the arrival time period and the arrival time sound volume when each of the direct sound and the reflected sound arrive at the listener are calculated. When a plurality of objects are present in the sound space as reflection objects, reflected sound characteristics with respect to each of the plurality of objects are calculated.

The direct sound arrival time period (td) is calculated based on the direct sound arrival path (pd). The direct sound arrival path (pd) is a path that connects position information S (xs, ys, zs) of a sound source object with position information A (xa, ya, za) of the listener. The direct sound arrival time period (td) is a value obtained by dividing the length of the path that connects position information S (xs, ys, zs) with position information A (xa, ya, za), by the speed of sound (approximately 340 m/sec).

For example, the path length (X) is determined by the expression ((xs - xa)^2 + (ys - ya)^2 + (zs - za)^2)^0.5. The sound volume attenuates in inverse proportion to the distance. Thus, when the sound volume at position information S (xs, ys, zs) of a sound source object is denoted by N and the unit distance is denoted by U, the direct sound arrival time sound volume (ld) is determined by the expression ld = N * U/X.

Sound volume N at the sound source position may be the reference sound volume described above.

The reflected sound arrival time period (tr) is calculated based on the reflected sound arrival path (pr). The reflected sound arrival path (pr) is a path that connects the position of the sound image of a reflected sound with position information A (xa, ya, za).

Note that the position of the sound image of the reflected sound may be derived by using, for example, a "mirror image method" or a "ray tracing method", or by using any other method for deriving sound image positions. The mirror image method is a method that simulates a sound image by assuming that a reflected wave on the wall in a room has a mirror image in a position symmetrical to the sound source with respect to the wall, and that sound waves are emitted from the position of that mirror image. The ray tracing method is a method that simulates, for example, an image (sound image) observed at a certain point by tracing waves that are transmitted in a linear manner, such as light rays or sound rays.

FIG. 9 is a diagram for illustrating a comparatively distant positional relationship between a listener and an obstacle object. FIG. 10 is a diagram for illustrating a comparatively close positional relationship between a listener and an obstacle object. In other words, each of FIG. 9 and FIG. 10 illustrate an example in which the sound image of a reflected sound is formed in a position symmetrical to the sound source position, with a wall interposed therebetween. Based on such a relationship, by determining the position of the sound image of the reflected sound on the x-, y-, and z-axes, the arrival time period of a reflected sound can be determined in the same manner as the method for calculating the arrival time period of a direct sound.

The reflected sound arrival time period (tr) is a value obtained by dividing the length of the path that connects the position of the sound image of a reflected sound with position information A (xa, ya, za), by the speed of sound (approximately 340 m/sec). The sound volume attenuates in inverse proportion to the distance. Thus, when the sound volume at the sound source position is denoted by N, the unit distance is denoted by U, and the attenuation rate of the sound volume at the reflection is denoted by G, the reflected sound arrival time sound volume (lr) is determined by the expression lr = N * G * U/Y.

As described above, attenuation rate G may be expressed as a real number greater than or equal to 0 and less than or equal to 1, or may be expressed as a negative decibel value. In this case, the sound volume of the signal as a whole attenuates by the amount of G. Furthermore, the attenuation rate may be set for each frequency band included in a plurality of frequency bands. In this case, analyzer 1301 multiplies each frequency component of the signal by the specified attenuation rate. Furthermore, in order to reduce the amount of computation, analyzer 1301 may, by using, as an overall attenuation rate, a representative value, an average value, or the like of a plurality of attenuation rates of a plurality of frequency bands, cause the sound volume of the signal as a whole to attenuate by that amount.

Next, analyzer 1301 calculates the sound volume ratio (L), which is the ratio of the reflected sound arrival time sound volume (lr) to the direct sound arrival time sound volume (ld), and the time difference (T) between the direct sound and the reflected sound, each of the sound volume ratio (L) and the time difference (T) being required for selection of the reflected sound to be generated.

The sound volume ratio (L), which is the ratio of the above-described lr to the direct sound arrival time sound volume (ld), is, for example, L = (N * G * U/Y)/(N * U/X) = G * X/Y. Since the value to be determined is a sound volume ratio, the values of N and U may be any predetermined values.

It should be noted that the sound volume ratio (L) may be adjusted in the following case. For example, in order to remove unnecessary noise or enhance specific components, filter processing that passes or attenuates components in a specific frequency band and shifts a phase may be performed on a sound signal. The filter processing may be, for example, low-pass filtering, high-pass filtering, band-pass filtering, or all-pass filtering, or may be another type of filter processing.

There is a possibility that after the above filter processing is applied, a reflected sound selected regardless of the filter processing is not appropriate as a reflected sound to be generated. In other words, there is a possibility that due to newly applied acoustic effects, a reflected sound is not selected appropriately and a deterioration of quality is caused. In view of this, the sound volume ratio (L) may be adjusted to coordinate the appropriate selection of the reflected sound with the newly applied acoustic effects.

Specifically, when filter processing is applied to a sound signal, a parameter of a set filter coefficient may be obtained, and the sound volume ratio (L) may be adjusted according to the parameter. By adjusting the sound volume ratio (L) according to the parameter of the filter coefficient, it is possible to appropriately select a reflected sound to be outputted, in consideration of the sound volume ratio changed by the filter processing.

Moreover, in the filter processing, as described above, a process of passing or attenuating a sound in a specific frequency band and shifting a phase may be performed, or another process may be performed. For example, in the filter processing, a process of passing sounds in all frequency bands may be performed or a process of shifting only a phase may be performed.

Specifically, renderer 1300 may include at least one of an adding unit (an adder), an adding amount of increase or decrease obtaining unit (an adding amount of increase or decrease obtainer), a sound volume ratio adjusting unit (a sound volume ratio adjuster), an adding amount of delay obtaining unit (an adding amount of delay obtainer), or a time difference adjusting unit (a time difference adjuster).

For example, the adding unit is a filtering unit (a filter) that performs, as an example of the above filter processing, filter processing etc. that auditorily accentuates a variation in phase relative to a reflected sound in order to enhance the spread of a sound or the naturalness of the reflected sound.

The adding amount of increase or decrease obtaining unit obtains the amount of increase or decrease in amplitude in the adding unit. The sound volume ratio adjusting unit adjusts a sound volume ratio according to the amount of increase or decrease obtained by the adding amount of increase or decrease obtaining unit. The adding amount of delay obtaining unit obtains the amount of increase or decrease in delay in the adding unit. The time difference adjusting unit adjusts a time difference according to the amount of increase or decrease obtained by the adding amount of delay obtaining unit.

These units may be implemented by, for example, processor 1402 and memory 1404.

For example, a filter (a spreading filter) that auditorily accentuates a variation in phase of a reflected sound may be applied to the reflected sound. When a spreading filter that greatly varies a phase is applied to a reflected sound, the amplitude of the reflected sound may increase. In view of this, a parameter that controls the degree to which the spreading filter varies the phase may be obtained, and the sound volume ratio (L) may be adjusted by taking the amount of increase or decrease corresponding to the parameter into account.

Furthermore, for example, when a parameter that increases or decreases the amplitude of a filter coefficient of the spreading filter is settable by a user, the set parameter may be obtained, and the sound volume ratio (L) may be multiplied by the amount of increase or decrease in amplitude specified by the parameter.

It should be noted that the above spreading filter may be referred to as, for example, a dispersion filter or a diffusion filter, or may be, for example, a decorrelation filter that varies the phase of a sound signal. In addition, the above spreading filter may be a filter used for a purpose other than the enhancement of sound diffusion. For example, the above spreading filter may be a filter that amplifies, for example, an amplitude or a delay.

Moreover, whether to apply filter processing to a sound signal may be determined, and the sound volume ratio (L) may be adjusted when the filter processing is determined to be applied. In determining whether to apply the filter processing to the sound signal, for example, the spatial information manager (1201, 1211) or the adding unit may analyze metadata included in a bitstream, and may determine that the filter processing is to be applied when information included in the metadata indicates that the filter processing is effective.

Moreover, whether to adjust the sound volume ratio (L) may be determined according to a parameter of a filter coefficient to be applied to the sound signal.

Furthermore, determining whether to apply the filter processing and determining whether to adjust the sound volume ratio (L) may be switched for each of types of a sound. Examples of the types of the sound include a direct sound, an early reflected sound, an n-th reflected sound, a reverberant sound, and a diffracted sound. In other words, the filter processing may be determined to be applied to the early reflected sound, and the filter processing may be determined not to be applied to the diffracted sound.

The time difference (T) between a direct sound and a reflected sound may be, for example, the time difference between the time periods each of the direct sound and the reflected sound takes to arrive at the listening position. For example, the time difference (T) between the time periods taken for each of the direct sound and the reflected sound to arrive at the listening position is determined by T = tr - td.

Furthermore, the time difference (T) may be the difference between the times at which each of a direct sound and a reflected sound arrives at the listening position. Moreover, the time difference (T) may be the time difference between the time at which the emission of the direct sound ends and the time at which the reflected sound arrives at the listening position. In other words, the time difference (T) may be the time difference, at the listening position, between the time at which the direct sound ends and the time at which the reflected sound begins.

It should be noted that the time difference (T) may be adjusted in the following case. For example, in order to remove unnecessary noise or enhance specific components, filter processing that passes or attenuates components in a specific frequency band and shifts a phase may be performed on a sound signal. The filter processing may be, for example, low-pass filtering, high-pass filtering, band-pass filtering, or all-pass filtering, or may be another type of filter processing.

There is a possibility that after the above filter processing is applied, a reflected sound selected regardless of the filter processing is not appropriate as a reflected sound to be generated. In other words, there is a possibility that due to newly applied acoustic effects, a reflected sound is not selected appropriately and a deterioration of quality is caused. In view of this, the sound volume ratio (L) may be adjusted to coordinate the appropriate selection of the reflected sound with the newly applied acoustic effects.

Specifically, when filter processing is applied to a sound signal, a parameter of a set filter coefficient may be obtained, and the time difference (T) may be adjusted according to the parameter. By adjusting the time difference (T) according to the parameter of the filter coefficient, it is possible to appropriately select a reflected sound to be outputted, in consideration of the time difference changed by the filter processing.

Moreover, in the filter processing, as described above, a process of passing or attenuating a sound in a specific frequency band and shifting a phase may be performed, or another process may be performed. For example, in the filter processing, a process of passing sounds in all frequency bands may be performed or a process of shifting only a phase may be performed.

Specifically, renderer 1300 may include at least one of the adding unit (the adder), the adding amount of increase or decrease obtaining unit (the adding amount of increase or decrease obtainer), the sound volume ratio adjusting unit (the sound volume ratio adjuster), the adding amount of delay obtaining unit (the adding amount of delay obtainer), or the time difference adjusting unit (the time difference adjuster).

For example, the adding unit is a filtering unit (a filter) that performs, as an example of the above filter processing, filter processing etc. that auditorily accentuates a variation in phase relative to a reflected sound in order to enhance the spread of sound or the naturalness of the reflected sound.

The adding amount of increase or decrease obtaining unit obtains the amount of increase or decrease in amplitude in the adding unit. The sound volume ratio adjusting unit adjusts a sound volume ratio according to the amount of increase or decrease obtained by the adding amount of increase or decrease obtaining unit. The adding amount of delay obtaining unit obtains the amount of increase or decrease in delay in the adding unit. The time difference adjusting unit adjusts a time difference according to the amount of increase or decrease obtained by the adding amount of delay obtaining unit.

These units may be implemented by, for example, processor 1402 and memory 1404.

For example, a filter (a spreading filter) that auditorily accentuates a variation in phase of a reflected sound may be applied to the reflected sound. When a spreading filter that greatly varies a phase is applied to a reflected sound, the arrival time of the reflected sound (the time it takes for the reflected sound to arrive) may increase or decrease. In view of this, a parameter that controls the diffusion time (a filter length, the order of a filter coefficient, the number of taps) of the spreading filter may be obtained, and the time difference (T) may be adjusted by taking the amount of increase or decrease in arrival time corresponding to the parameter into account.

Furthermore, for example, when a parameter that increases or decreases the filter length of the spreading filter is settable by the user, the set parameter may be obtained, and the time difference (T) may be multiplied by the amount of increase or decrease in filter length specified by the parameter.

It should be noted that the above spreading filter may be referred to as, for example, a dispersion filter or a diffusion filter, or may be, for example, a decorrelation filter that varies the phase of a sound signal. In addition, the above spreading filter may be a filter used for a purpose other than the enhancement of sound diffusion.

Moreover, whether to apply filter processing to a sound signal may be determined, and the time difference (T) may be adjusted when the filter processing is determined to be applied. In determining whether to apply the filter processing to the sound signal, for example, the spatial information manager (1201, 1211) or the adding unit may analyze metadata included in a bitstream, and may determine that the filter processing is to be applied when information included in the metadata indicates that the filter processing is effective.

Moreover, whether to adjust the time difference (T) may be determined according to a parameter of a filter coefficient to be applied to the sound signal.

Furthermore, determining whether to apply the filter processing and determining whether to adjust the time difference (T) may be switched for each of types of a sound. Examples of the types of the sound include a direct sound, an early reflected sound, an n-th reflected sound, a reverberant sound, and a diffracted sound. In other words, the filter processing may be determined to be applied to the early reflected sound, and the filter processing may be determined not to be applied to the diffracted sound.

Metadata of an input signal may include, as information about filter processing, various parameters, and information about these parameters may be used for selection processing.

For example, as described in PTL 4, the metadata may include a flag for switching between on and off of filter processing, a flag for switching between on and off of filter processing for an early reflected sound, a flag for switching between on and off of filter processing on a diffracted sound, a parameter indicating the duration of filter processing, a parameter indicating a gain to be increased or decreased by filter processing, or a parameter of angle information indicating spatial extent. The parameter indicating the duration of the filter processing may indicate the order (the number of taps) of a filter coefficient.

The adding unit may analyze metadata included in an input signal, and may determine whether to perform filter processing. Additionally, the adding amount of increase or decrease obtaining unit or the adding amount of delay obtaining unit may analyze the metadata included in the input signal, and may obtain the amount of increase or decrease in amplitude or the amount of increase or decrease in delay in the adding unit by obtaining a parameter of set filter processing.

The above filter processing is also expressed as additional processing. The additional processing may be processing to be applied to, out of a reflected sound and a direct sound, only the reflected sound, processing to be applied to, out of the reflected sound and the direct sound, only the direct sound, or processing to be applied to both the reflected sound and the direct sound.

Next, in reflected sound selection processing (S102 in FIG. 8), selector 1302 selects whether to generate a reflected sound calculated by analyzer 1301. To put it differently, selector 1302 assesses whether to select a reflected sound as a reflected sound to be generated. When there are a plurality of reflected sounds, selector 1302 selects whether to generate each reflected sound. In other words, selector 1302 may select one or more reflected sounds to be generated from the plurality of reflected sounds.

Note that selector 1302 may select reflected sounds to which other processing is to be applied, not limited to generation processing. For example, selector 1302 may select reflected sounds to which binaural processing is to be applied. Furthermore, selector 1302 fundamentally selects only the one or more reflected sounds that are to be processed. However, selector 1302 may select only one or more reflected sounds that are not to be processed. Processing may then be applied to the one or more reflected sounds that were not selected.

For example, the selection of reflected sounds may be performed based on the sound volume ratio (L) and the time difference (T) calculated by analyzer 1301. Due to the selection processing being performed based on the time difference (T) between direct sounds and reflected sounds, it is possible to more appropriately select reflected sounds that have a large degree of influence on the listener's perception, in comparison to when performing the selection processing based only on the sound volume difference between direct sounds and reflected sounds.

Specifically, the selection of whether to generate a reflected sound is performed by comparing, to a preset threshold value, the sound volume ratio of a reflected sound to a direct sound, the sound volume ratio corresponding to the time difference between the direct sound and the reflected sound. The threshold value is set with reference to the threshold value data. The threshold value data is an indicator indicating the boundary that demarcates whether a reflected sound corresponding to a direct sound is perceived by the listener, and is defined as the ratio of the arrival time sound volume (lr) of a reflected sound to the arrival time sound volume (ld) of a direct sound.

Note that the threshold value corresponds to a value expressed by, e.g., a numerical value determined based at the time difference (T). The threshold value data corresponds to the relationship between the time difference (T) and a threshold value, and corresponds to table data or a relational expression used for specifying or calculating the threshold value at the time difference (T). The format and type of the threshold value data is not limited to table data or a relational expression.

FIG. 11 is a diagram for illustrating relationships between time differences between direct sounds and reflected sounds, and threshold values. For example, threshold value data of predetermined sound volume ratios may be referenced for each value of the time difference between a direct sound and a reflected sound, as illustrated in FIG. 11. Alternatively, threshold value data obtained by, e.g., interpolating or extrapolating from the threshold value data illustrated in FIG. 11 may be referenced.

Furthermore, the threshold value of the sound volume ratio at the time difference (T) calculated by analyzer 1301 is identified from the threshold value data. Moreover, selector 1302 determines whether to select a reflected sound as a reflected sound to be generated based on whether the sound volume ratio (L) of the reflected sound to the direct sound calculated by analyzer 1301 exceeds the threshold value.

Due to performing the selection processing by using the threshold value data of the sound volume ratio that is predetermined for each value of the time difference between a direct sound and a reflected sound, selection processing that considers post-masking or the precedence effect can be achieved. The type, format, storage method, setting method, and the like of the threshold value data will be described in detail later.

Next, in the generation processing of direct sounds and reflected sounds (S103 in FIG. 8), synthesizer 1303 generates and synthesizes the audio signals for direct sounds and the audio signals for reflected sounds that have been selected by selector 1302 as reflected sounds to be generated.

The audio signals for direct sounds are generated by applying the arrival time period (td) and the arrival time sound volume (ld) calculated by analyzer 1301 to the sound data for the sound source objects included in the input signal. Specifically, processing in which the sound data is delayed by the amount of the arrival time period (td) and multiplied by the arrival time sound volume (ld) is performed. The processing to delay the sound data is processing in which the position of the sound data is moved forward or backward on the time axis. Processing in which the sound data is delayed may be applied without causing the sound quality to deteriorate, such as was disclosed in PTL 2.

The audio signals for reflected sounds are, similarly to the direct sounds, generated by applying the arrival time period (tr) and the arrival time sound volume (lr) calculated by analyzer 1301 to the sound data for the sound source objects.

However, the arrival time sound volume (lr) in the generation of reflected sounds differs from the arrival time sound volume of the direct sounds in that the arrival time sound volume of the reflected sounds is a value to which attenuation rate G of the sound volume in the reflection has been applied. G may be an attenuation rate that is applied globally to all frequency bands. Alternatively, in order to reflect the biases of frequency components generated by reflection, the reflectance may be defined for each predetermined frequency band. In this case, the processing to apply the arrival time sound volume (lr) may be performed as frequency equalizer processing, which is processing that involves multiplying each band by the attenuation rate.

In the above example, for each of the direct sounds and the reflected sound candidates, the path length when arriving at the listener is calculated. Furthermore, the arrival time period and the arrival time sound volume are calculated based on each path length. The selection processing of the reflected sound candidates is then performed based on the time differences and the sound volume ratios of these.

Note that as a different example, the selection processing may be performed based on the path lengths when each of the direct sound and the reflected sound arrive at the listener, and the calculation of the arrival time period and the arrival time sound volume of each of the direct sound and the reflected sound and the calculation of the time difference and the sound volume ratio may be omitted. In this case, threshold values according to path length differences may be determined beforehand with respect to path length ratios. Then, selection processing may be performed based on whether the path length ratio calculated is greater than or equal to the threshold value according to the path length difference calculated. This makes it possible to perform selection processing based on path length differences that correspond to time differences, while reducing the amount of computation.

Furthermore, a parameter that indicates sound propagation speed or a parameter that has an impact on the sound propagation speed parameter may be used in addition to the path length difference.

### (Details of Selection Processing)

The selection processing that determines whether reflected sounds are generated will be explained in detail.

The selection of a reflected sound is performed by comparing, with the sound volume ratio (L) calculated by analyzer 1301, the threshold value determined for the sound volume ratio, which is the ratio of the reflected sound arrival time sound volume to the direct sound arrival time sound volume, at the time difference (T) between the direct sound and the reflected sound. For example, of threshold values of sound volume ratios that were determined beforehand for each value of a time difference between a direct sound and a reflected sound, the threshold value of the sound volume ratio at the time difference (T) between the direct sound and the reflected sound calculated by analyzer 1301 is referenced. Then, determination of whether the reflected sound is selected as a reflected sound to be generated is made based on whether the sound volume ratio (L) calculated by analyzer 1301 exceeds the threshold value.

The time difference (T) may be any of, for example, the difference in the times at which each of a direct sound and a reflected sound arrive at the listening position, the time difference between the time periods taken when each of a direct sound and a reflected sound arrive at the listening position, or the time difference between the time point when emission of a direct sound stops and the time point when a reflected sound arrives at the listening position. Here, the direct sound end time may be determined by adding the duration of a direct sound to the arrival time of the direct sound.

The threshold value data may be determined based on the minimum time difference at which the perception of the listener is able to detect the divergence of two sounds due to an action of the auditory nerve or a cognitive effect in the brain, and more specifically due to the precedence effect, described later, the temporal masking phenomenon, described later, or a combination of both. Specific numerical values may be derived from research results into the temporal masking effect, the precedence effect, the echo detection limit, etc. that are already known, or may be determined by an auditory test performed with the premise of application in the virtual space.

FIG. 12A, FIG. 12B, and FIG. 12C are diagrams for illustrating examples of threshold value data setting methods. As illustrated in FIG. 12A, FIG. 12B, and FIG. 12C, the threshold value data represents the boundaries (threshold values) determining whether reflected sound is perceived or not perceived, in a graph having a horizontal axis that indicates the time difference between direct sound and reflected sound and a vertical axis that indicates the sound volume ratio of the reflected sound to the direct sound.

The threshold value data may be expressed by an approximation formula that includes the time difference between direct sound and reflected sound as a variable. Furthermore, as illustrated in FIG. 11, the threshold value data may may be stored in the domain of memory 1404 as an arrangement of an index of time differences between direct sounds and reflected sounds, and threshold values corresponding to the index.

Note that when the height of a line parallel to the horizontal axis in Example 4 in FIG. 12C (the minimum audible limit) is used as the threshold value, what is compared to the threshold value is not the sound volume ratio (L) of a reflected sound to a direct sound, but the sound volume of the reflected sound itself. The reason for this is that the threshold value indicates the sound volume of the boundary demarcating whether a sound is perceivable to the listener, and is a threshold value for determining a sound having a lower sound volume than the threshold value to be a sound that is not to be reproduced. In other words, the threshold value corresponding to the minimum audible limit is not a threshold value with respect to the ratio of the sound volume of a reflected sound to the sound volume of a direct sound.

When the minimum audible limit is used as the threshold value, the threshold value is constant regardless of the time difference (T); thus, the time difference (T) need not be calculated.

Note that when a plurality of reflected sounds are generated in the analysis processing (S101 in FIG. 8), the selection processing may be performed on all of the reflected sounds, or the selection processing may be performed on only the reflected sounds having high evaluation values based on the evaluation values derived for each reflected sound by means of a preset evaluation method. Here, the evaluation value of a reflected sound corresponds to the sensory level of importance of the reflected sound. Note that the evaluation value being high corresponds to the evaluation value being large, and these expressions may be used interchangeably.

Selector 1302 may calculate an evaluation value for each reflected sound by an evaluation method set beforehand based on, for example, the sound volume of the sound source, the visual properties of the sound source, the positionality of the sound source, the visual properties of the reflection object (the obstacle object), the geometrical relationship between the direct sound and the reflected sound, and/or the like.

Specifically, the evaluation value may become higher as the sound volume of the sound source is greater. Furthermore, in order to cause visual positioning and acoustic positioning to match each other, the evaluation value may be high when a sound source object or a reflection object (obstacle object) is visible from the listener, or when the positionality of a sound source object is high.

Moreover, the size of the arrival angle formed by a direct sound and a reflected sound and the difference between the arrival time periods of a direct sound and a reflected sound greatly affect the grasping of the space. Thus, the evaluation value may be high when the size of the angle formed by the arrival of a direct sound and the arrival of a reflected sound is large, or when the difference between the arrival time periods of a direct sound and a reflected sound is large.

The sound volume information on the sound source may indicate the reference sound volume determined for each content, a temporal transition of sound volume, or both.

For example, when the virtual space is a virtual conference room and the direct sound is a speaking voice, the sound volume transitions intermittently over short periods of time. In other words, sound portions and silent portions occur alternately. Furthermore, when the virtual space is a concert hall and the direct sound is the performance of a musical piece, the sound volume is maintained over a certain duration of time. Moreover, when the virtual space is a battlefield and the direct sound is an explosion sound, the sound volume becomes large for only an instant and then continues to be silent or in a quiet state thereafter.

In this way, the sound volume information on the sound source may include not only information on the reference sound volume corresponding to the volume setting when the sound is radiated into the virtual space, but also information on the transition of the sound magnitude.

The information on the transition may be expressed by data indicating frequency characteristics in chronological order. The information on the transition may be expressed by data indicating the duration of a sound interval. The information on the transition may be expressed by data indicating the chronological order of durations of sound intervals and durations of silent intervals. The information on the transition may be expressed by, for example, data that enumerates, in chronological order, a plurality of sets of a duration for which the amplitude of the sound signal can be considered stationary (can be considered approximately constant) and the amplitude value of said signal during that duration.

The information on the transition may be expressed by data of a duration during which the frequency characteristics of the sound signal can be considered stationary. The information on the transition may be expressed by, for example, data that enumerates, in chronological order, a plurality of sets of a duration for which the frequency characteristics of the sound signal can be considered stationary and the frequency characteristics during that duration.

Furthermore, efforts to use temporal transitions in the frequency characteristics of signals for the acoustic processing of virtual spaces have been conventionally widely performed (PTL 1, etc.). When considering such conventional techniques, it goes without saying that the above-described sets may be sets that include durations of time in which the frequency characteristics are constant and those frequency characteristics.

The geometrical relationships may be positional relationships between a sound source, the listener, and a reflection object in a virtual space. The path lengths of each of the direct sound and the reflected sound arriving can be geometrically calculated based on these relationships. Therefore, using the relationship that sound volume is inversely proportional to distance, it is possible to calculate the reference sound volume of a reflected sound with respect to the reference sound volume of a direct sound.

A reflection coefficient of the reflection object may be used for calculation of the reference sound volume of a reflected sound. Furthermore, a generally used typical value may be used as the reflection coefficient. On the other hand, when special conditions are present, such as the reflection object being covered by a sound-absorbing material or the like, a specially assigned reflection coefficient may be used as the reflection coefficient of the reflection object.

Each reflected sound may be evaluated based on the sound volume of the reflected sound. The sound volume of the reflected sound may, as described above, be determined from the geometrical relationship between the direct sound and the reflected sound, and an indicator assigned to the reflection object. The reflected sound may be evaluated by comparing that sound volume with a predetermined threshold value.

Furthermore, information that indicates a temporal transition in the sound volume of the sound source may be reflected in the evaluation. For example, in a case in which the information that indicates a temporal transition in the sound volume of the sound source indicates the duration of a sound interval, the reflected sound evaluation value may be maintained as-is when the time is within the sound interval. On the other hand, when the time is outside of the sound interval, processing to reduce or make zero the evaluation value of the reflected sound may be performed, even if the reference sound volume of the reflected sound exceeds the threshold value.

Alternatively, the information that indicates a temporal transition in the sound volume of the sound source may be data that lists, in chronological order, a plurality of sets of a duration during which it is considered that the amplitude of the sound signal is largely constant and amplitude values of the signal during that period. In that case, processing may be performed such that reflected sounds are evaluated by changing the reference sound volume of the reflected sounds in coordination with changes in the amplitude values in the data.

Furthermore, both the information on the reference sound volume and the information on the temporally transitioning sound volume may be used as the information indicating the sound volume of a direct sound. For example, an evaluation value can be calculated based on the information on the reference sound volume, and then the evaluation value can be corrected by using the information on the transitioning sound volume.

In the evaluation of reflected sounds, all of the methods described above may be performed, or only some of the methods may be performed. For example, reflected sounds may be evaluated using a plurality of evaluation methods, or reflected sounds may be evaluated using one evaluation method.

When reflected sounds are evaluated using a plurality of evaluation methods, whether to select each reflected sound may be determined based on an evaluation value comprehensively determined by the plurality of evaluation methods, or may be determined based on the evaluation value of each of the plurality of evaluation methods.

When whether to select each reflected sound is determined based on each of the plurality of evaluation methods, audio signal processing device 1001 may select a sound when all of the plurality of evaluation results based on the plurality of evaluation methods indicate selecting the sound. Alternatively, audio signal processing device 1001 may select a sound when any one of the plurality of the evaluation results based on the plurality of evaluation methods indicates selecting the sound.

Furthermore, for example, an order of priority may be assigned to the first to third evaluation methods. When it is assessed by the first evaluation method that a sound is not to be selected, audio signal processing device 1001 may then make a final assessment that the sound is not to be selected, without depending on the assessment results in the second and third evaluation methods. Moreover, when, although it has been assessed by one of the second and third evaluation methods that a sound is not to be selected, it has been assessed by the other of the second and third evaluation methods that the sound is to be selected, audio signal processing device 1001 may make a final assessment that the sound is to be selected.

Furthermore, the selection processing and the evaluation processing may be performed independently of each other, or only one of these may be performed. Moreover, the evaluation processing may be performed only on reflected sounds that have been determined to be selected in the selection processing, and whether to select each reflected sound may be redetermined in the evaluation processing. Alternatively, the evaluation processing may be performed only on reflected sounds that have been determined to not be selected in the selection processing, and whether to select each reflected sound may be redetermined in the evaluation processing.

The selection processing described above can be interpreted as processing in which a reflected sound is selected in accordance with the nature of a direct sound. For example, in processing in which a reflected sound is selected in accordance with the nature of a direct sound, the threshold value used in selection of the reflected sound is set or adjusted in accordance with the nature of the direct sound. Alternatively, the evaluation value used in the selection of a reflected sound may be calculated based on one or more of, for example, the sound volume of the sound source, the visual properties of the sound source, the positionality of the sound source, the visual properties of the reflection object (the obstacle object), the geometrical relationship between the direct sound and the reflected sound, and/or the like.

Furthermore, the processing in which a reflected sound is selected based on the nature of a direct sound is not limited to processing in which the threshold value is set or adjusted in accordance with the nature of the direct sound and processing in which the evaluation value used for selection of the reflected sound to be processed is calculated, and other processes may be performed. Furthermore, even when performing the processing in which the threshold value is set or adjusted in accordance with the nature of the direct sound or the processing in which the evaluation value used in selection of the reflected sounds to be processed is calculated, the processing may be partially changed, or new processing may be added.

Note that setting the threshold value may include adjusting the threshold value, changing the threshold value, and the like.

### (Threshold Value Setting Method)

The threshold value data used in the selection processing may be set with reference to the value of an echo detection limit based on a known precedence effect or a masking threshold value based on the post-masking effect.

The precedence effect is a phenomenon in which, when sounds are heard from two locations, it is perceived that the sound source is present at the location from which the first sound was heard. If two short sounds fuse together to be heard as one sound, the position (localization position) from which the overall sound is heard is, for the most part, determined by the position of the first sound. The echo detection limit is a phenomenon that occurs due to the precedence effect, and is the minimum time difference at which the listener's perception detects the divergence of two sounds.

In Example 2 of FIG. 12C, the horizontal axis corresponds to the arrival time period of reflected sound (echo), and specifically corresponds to the delay time period from the arrival time of direct sound to the arrival time of reflected sound. The vertical axis corresponds to the sound volume ratio of detectable reflected sound to direct sound, and specifically corresponds to the threshold value that determines whether reflected sound that has arrived with a delay time period is detectable.

FIG. 13 is a diagram for illustrating an example of a threshold value setting method. The horizontal axis in FIG. 13 corresponds to the arrival time period of reflected sound, and specifically corresponds to the time differences (T) between direct sound and reflected sound. The vertical axis in FIG. 13 corresponds to the sound volume of reflected sound. Specifically, the vertical axis in FIG. 13 may correspond to the sound volume (sound volume ratios) of reflected sound determined in relation to direct sound, or may correspond to the sound volume of reflected sound determined absolutely without depending on the sound volume of the direct sound.

For example, when, as illustrated in FIG. 9, the listener and an obstacle object are comparatively far from each other, the arrival time period of the reflected sound becomes longer, and, as illustrated in C in FIG. 13, the threshold value is set to be low. As a result, in the case of FIG. 9, the reflected sound is generated. On the other hand, when, as illustrated in FIG. 10, the listener and the obstacle object are comparatively close to each other, the arrival time period of the reflected sound is shorter than that in the case of FIG. 9, and as illustrated in B in FIG. 13, the threshold value is set to be high. As a result, in the case of FIG. 10, the reflected sound is not generated.

Furthermore, the threshold value data may be stored in memory 1404, obtained from memory 1404 at the time of the selection processing, and used in the selection processing.

FIG. 14 is a flowchart for illustrating an example of selection processing. First, selector 1302 specifies a reflected sound detected by analyzer 1301 (S201). Selector 1302 then detects the sound volume ratio (L) of the reflected sound to the direct sound, and the time difference (T) between the direct sound and the reflected sound (S202 and S203).

The time difference (T) may be any of, for example, the time difference between the time periods each of the direct sound and the reflected sound take to arrive at the listening position, the time difference between the direct sound arrival time and the reflected sound arrival time, and the time difference between the time when emission of the direct sound ends and the time when the reflected sound arrives at the listening position. Here, an example will be described based on the time difference between the direct sound arrival time and the reflected sound arrival time.

Specifically, based on: the position information on the sound source object and the listener; and the position information and geometry information on the obstacle object, selector 1302 calculates the difference between the length of the path of the direct sound and the length of the path of the reflected sound. By dividing the difference between the lengths by the speed of sound, selector 1302 then detects the time difference (T) between the time when the direct sound arrives at the listener's position and the time when the reflected sound arrives at the listener's position.

The sound volume when arriving at the listener attenuates, with respect to the sound volume of the sound source, in proportion to the distance to the listener (in inverse proportion to the distance). Therefore, the sound volume of the direct sound is obtained by dividing the sound volume of the sound source by the length of the path of the direct sound. The sound volume of the reflected sound is obtained by dividing the sound volume of the sound source by the length of the path of the reflected sound, and then further multiplying by the attenuation rate assigned to the virtual obstacle object. Selector 1302 detects the sound volume ratio by calculating the ratio between these sound volumes.

Furthermore, using the threshold value data, selector 1302 specifies the threshold value corresponding to the time difference (T) (S204). Selector 1302 then assesses whether the sound volume ratio (L) detected is greater than or equal to the threshold value (S205).

When the sound volume ratio (L) is greater than or equal to the threshold value ("Yes" in S205), selector 1302 selects the reflected sound as a reflected sound to be generated (S206). When the sound volume ratio (L) is less than the threshold value ("No" in S205), selector 1302 skips selecting the reflected sound as a reflected sound to be generated (S207). That is, in this case, selector 1302 determines the reflected sound to be a reflected sound that is not to be generated.

Subsequently, selector 1302 assesses whether there are any unspecified reflected sounds (S208). If there are unspecified reflected sounds ("Yes" in S208), selector 1302 repeats the above-described processing (S201 to S207). If there are no unspecified reflected sounds ("No" in S208), selector 1302 ends the processing.

This selection processing may be performed on all of the reflected sounds generated in the analysis processing, or may be performed on only the reflected sounds for which the above-described evaluation value is high.

### (Details of Threshold Value Storage Method)

The threshold value data pertaining to the present embodiment is stored in memory 1404 of audio signal processing device 1001. The format and type of the threshold value data to be stored may be any format and any type. When threshold values having a plurality of formats and a plurality of types are stored, in the selection processing, the format and the type of the threshold values to be used in the selection processing of the reflected sounds may be decided. The method for determining which items of threshold value data to use in the selection processing will be described later.

Furthermore, a plurality of formats and a plurality of types of threshold value data may be stored in combination. The combined threshold value data may be read from the spatial information manager (1201, 1211) to set the threshold values to be used in the selection processing. Note that the threshold value data to be stored in memory 1404 may be stored in spatial information manager (1201, 1211).

For example, the threshold value data may be stored as threshold values at each time difference, so as to plot a line between the threshold values as illustrated in [Example 1] and [Example 2] of FIG. 12C.

Furthermore, the threshold value data may be stored as table data in which, as illustrated in FIG. 11, the threshold values and the time differences (T) are associated with each other. In other words, the threshold value data may be stored as table data that includes the time differences (T) as an index. Naturally, the threshold values illustrated in FIG. 11 are examples, and the threshold values are not limited to the examples in FIG. 11. Furthermore, the threshold values may be approximated by functions that include the time differences (T) as variables, and coefficients of the functions may be stored, without storing the threshold values themselves. Moreover, a plurality of approximation expressions may be combined and stored.

For example, the threshold value data may be expressed by the following equation, where timeDiff denotes the time difference (T) and gainThresh denotes the threshold value.
[Math. 1] $gainThresh = \left\{\begin{matrix}- 0.10 ∗ timeDiff - 17.5 , if 1.0 < timeDiff < 10.0 \\ - 0.55 ∗ timeDiff - 13.0 , if 10.0 \leq timeDiff < 20.0 \\ - 0.60 ∗ timeDiff - 12.0 , if 20.0 \leq timeDiff < 30.0 \\ - 0.80 ∗ timeDiff - 6.0 , if 30.0 \leq timeDiff \leq 40.0\end{matrix}\right.$

The threshold value is defined only by a time range in which the precedence effect is expected to occur. When a time difference is outside the time range (a value less than or equal to 1 ms or greater than 40 ms in terms of Equation 1 above), a determination is not made based on gainThresh and, as described later, a determination may be made based only on a threshold value indicating the smallest sound volume to be reproduced in a virtual space. For example, outside the time range, a reflected sound may be selected as a sound to be processed, regardless of the precedence effect. Alternatively, outside the time range, a reflected sound may be selected as a sound to be processed, regardless of the precedence effect, when the reflected sound has at least the smallest sound volume.

Experiments conducted by the inventors clarified that it is desirable that a threshold value be approximated by a convex upward function in a time range in which the precedence effect is expected to occur. Equation 1 above is an example of an approximation expression generated based on the experiments.

FIG. 15 is a diagram for illustrating an auditory test of the precedence effect using leading and lagging sounds. Specifically, FIG. 15 shows, for example, a first virtual loudspeaker, a second virtual loudspeaker, a listener, and a listener's avatar.

In the auditory test, the first virtual loudspeaker is a virtual loudspeaker that outputs direct sounds that are leading sounds in a virtual space. A direct sound is a sound heard in an ordinary scene such as a speech or music. The second virtual loudspeaker is a virtual loudspeaker that outputs reflected sounds that are lagging sounds in a virtual space. A reflected sound is a sound obtained by performing delay processing and attenuation processing on the direct sound.

Moreover, first HRTF is a head-related transfer function when a sound outputted from the first virtual loudspeaker reaches the listener's avatar. Second HRTF is a head-related transfer function when a sound outputted from the second virtual loudspeaker reaches the listener's avatar. The head-related transfer function (HRTF) disclosed in NPL 2 is used for each of first HRTF and second HRTF.

By applying various values sequentially to each of the amount of delay and the amount of attenuation used to generate a reflected sound, a sound volume ratio and a time difference between the sound outputted from the first virtual loudspeaker and the sound outputted from the second virtual loudspeaker are set sequentially.

FIG. 16 is a diagram for illustrating experimental parameters in a horizontal plane direction. FIG. 17 is a diagram for illustrating experimental parameters in a vertical plane direction. As shown in FIG. 16 and FIG. 17, the experimental parameters include a plurality of variations. In addition, the sound volume ratio among the experimental parameters in the horizontal plane direction is set according to the time difference. Specifically, since it is expected that a threshold value of the sound volume ratio decreases with an increase in the time difference and the threshold value of the sound volume ratio increases with a decrease in the time difference, an experimental range is narrowed to avoid unnecessary experiments.

The listener who is a subject hears a sound reaching the listener's avatar, using headphones. In each of a case in which the second virtual loudspeaker is ON and a case in which the second virtual loudspeaker is OFF, the listener hears a sound and answers whether it is possible to distinguish the difference between ON and OFF. Here, the expression "possible to distinguish the difference" includes being possible to recognize that the tone (including an impression level) of a direct sound has been changed by a reflected sound and hearing the direct sound and the reflected as separate sounds.

As a result of the experiments, the inventors found out that a boundary as to whether it is possible to distinguish the difference between ON and OFF can be expressed as, for example, Equation 1 (gainThresh) above.

As shown by Equation 1 above, the boundary is an upwardly convex curved line (a broken line) in a time range in which the precedence effect is expected to occur. This experimental result is consistent with the fact that this phenomenon is based on the precedence effect. To put it another way, it is expected that the precedence effect does not occur when a time difference between a leading sound and a lagging sound exceeds approximately 40 msec, and this expectation dovetails with the experimental result showing that the threshold value attenuates sharply with the increase in the time difference.

Additionally, a domain for representing the boundary may be only a time range in which the precedence effect is expected to occur. Accordingly, when the boundary is represented by an equation, it is possible to represent the equation of the boundary using a combination of fewer equations. In addition, when the boundary is represented by a line (an aggregate of points linked at short intervals: table data), it is possible to represent the line of the boundary using a small memory size.

The boundary did not relate significantly to the position of each of the virtual loudspeakers. Accordingly, Equation 1 does not include an azimuth factor. However, the azimuth factor may be incorporated to control the selection of a reflected sound more precisely. For example, an equation similar to Equation 1 may be set for each of azimuths. Alternatively, an azimuth term may be added to Equation 1.

Information on a relational expression that indicates the relationship between time differences (T) and threshold values may be stored in memory 1404. In other words, an expression that includes the time difference (T) as a variable may be stored. The threshold values of the time differences (T) may be approximated by a straight line or a curved line, and a parameter that indicates the geometrical shape of the straight line or the curved line may be stored. For example, when the geometrical shape is a straight line, the start point and the slope for expressing the straight line may be stored.

Furthermore, the threshold value data may be stored having the type and format thereof defined for each nature of direct sound. Moreover, parameters for adjusting threshold values based on the nature of the direct sound and using the threshold values in the selection processing may be stored. Processing to adjust threshold values in accordance with the nature of the direct sound and use the threshold values in the selection processing is described later, as a variation of the threshold value setting method.

As an example in which a plurality of types of threshold value data are stored in combination, as illustrated in [Example 3] in FIG. 12C, for each time difference (T), the larger value of the masking threshold value and the echo detection limit threshold value may be stored. As illustrated in [Example 4] in FIG. 12C, for each time difference (T), the larger value of the minimum sound volume for reproduction in a virtual space and the echo detection limit threshold value may be stored.

The combination of the plurality of types of the threshold value data is not limited to these. For example, in a plurality of items of threshold value data, information on the maximum value may be stored for each time difference (T).

Furthermore, in the above description, the information on threshold values has time period items as a one-dimensional index. The information on threshold values may have a two-dimensional or three-dimensional index that further includes variables related to the direction of arrival.

FIG. 18 is a diagram for illustrating relationships between directions of direct sounds, directions of reflected sounds, time differences, and threshold values. For example, as illustrated in FIG. 18, threshold values pre-calculated in accordance with the relationship between the direct sound direction (θ), the reflected sound direction (γ), the time difference (T), and the sound volume ratio (L) may be stored.

The direct sound direction (θ) corresponds to the angle, with respect to the listener, of the direction of arrival of a direct sound. The reflected sound direction (γ) corresponds to the angle, with respect to the listener, of the direction of arrival of a reflected sound. Here, the direction in which the listener is facing is defined as 0 degrees. The time difference (T) corresponds to the difference between the arrival time period of a direct sound to the listening position and the arrival time period of a reflected sound to the listening position. The sound volume ratio (L) corresponds to the sound volume ratio of the arrival time sound volume of a reflected sound to the arrival time sound volume of a direct sound.

Naturally, the threshold values illustrated in FIG. 18 are examples, and the threshold values are not limited to the examples in FIG. 18. Furthermore, in FIG. 18, mainly threshold values when the angle (θ) of the direct sound arrival direction is 0 degrees are exemplified. However, threshold values when the direct sound arrival direction (θ) is not 0 degrees are also stored in memory 1404.

Further, in the above description, the threshold values are stored in an arrangement that has the angle (θ) of the direct sound arrival direction and the angle (γ) of the reflected sound arrival direction as independent variables or indexes. However, the angle (θ) of the direct sound arrival direction and the angle (γ) of the reflected sound arrival direction need not be used as independent variables.

For example, the angular difference between the angle (θ) of the direct sound arrival direction and the angle (γ) of the reflected sound arrival direction may be used. This angular difference corresponds to the angle formed between the direct sound arrival direction and the reflected sound arrival direction, and may be expressed as the arrival angle between a direct sound and a reflected sound.

FIG. 19 is a diagram for illustrating relationships between angular differences, time differences, and threshold values. For example, threshold values pre-calculated by using, as a variable, the angular difference (Φ) between the angle (θ) of the direct sound arrival direction and the angle (γ) of the reflected sound arrival direction may be stored as in the example illustrated in FIG. 19. Naturally, the threshold values illustrated in FIG. 19 are examples, and the threshold values are not limited to the examples in FIG. 19.

In the example in FIG. 19, the number of variables used for deriving threshold values may be reduced. Thus, it is possible to reduce the number of threshold values stored in memory 1404. Therefore, it is possible to decrease the amount of data stored in memory 1404.

Furthermore, when the angular difference (Φ) between the angle (θ) of the direct sound arrival direction and the angle (γ) of the reflected sound arrival direction is used, the threshold value data may be stored in a two-dimensional arrangement. Moreover, in the selection processing, the difference between the angle (θ) of the direct sound arrival direction and the angle (γ) of the reflected sound arrival direction may be calculated by using a three-dimensional arrangement.

The method for selecting reflected sounds using threshold values based on the directions of arrival will be described later.

### (First Variation of Threshold Value Setting Method)

In the examples in FIG. 12A, FIG. 12B, and FIG. 12C, threshold values in a plurality of formats and of a plurality of types may be stored in the spatial information manager (1201, 1211). Then, of the threshold values having a plurality of formats and a plurality of types, the format and the type of the threshold values to be used in the selection processing of the reflected sounds may be decided. Specifically, as illustrated in Example 3 of FIG. 12C, in the time differences (T) corresponding to the reflected sound arrival times, the largest threshold value may be adopted.

Moreover, as illustrated in Example 4, the masking threshold value, the echo detection limit threshold value, and a threshold value indicating the minimum sound volume for reproduction in the virtual space may be stored. Then, the largest threshold value at the time difference (T) corresponding to the reflected sound arrival time may be adopted.

### (Second Variation of Threshold Value Setting Method)

As another example of the threshold value setting method, a method for setting threshold values in accordance with the nature of direct sounds will be described.

FIG. 20 is a block diagram for illustrating another configuration example of renderer 1300 illustrated in FIG. 7. Renderer 1300 in FIG. 20 is different from renderer 1300 in FIG. 7 in the respect that renderer 1300 in FIG. 20 includes threshold value adjuster 1304. The description other than threshold value adjuster 1304 is the same as the matters described regarding FIG. 7, and has thus been omitted.

Threshold value adjuster 1304 selects, from the threshold value data, threshold values that are to be used by selector 1302, based on information indicating the nature of an audio signal. Alternatively, threshold value adjuster 1304 may adjust the threshold values included in the threshold value data, based on the information indicating the nature of the audio signal.

The information indicating the nature of the audio signal may be included in the input signal. Then, threshold value adjuster 1304 may obtain the information indicating the nature of the audio signal from the input signal. Alternatively, analyzer 1301 may derive the nature of the audio signal by analyzing the audio signal included in the input signal accepted by analyzer 1301, and output the information indicating the nature of the audio signal to threshold value adjuster 1304.

The information indicating the nature of the audio signal may be obtained before starting the rendering processing, or may be obtained each time during rendering.

Furthermore, threshold value adjuster 1304 need not be included in audio signal processing device 1001; another transmission device may have the role of threshold value adjuster 1304. In this case, analyzer 1301 or selector 1302 may obtain, from the other transmission device via communication I/F 1403, the information indicating the nature of the audio signal, the threshold value data corresponding to the nature, or information for adjusting the transmission value data in accordance with the nature.

FIG. 21 is a flowchart for illustrating another example of the selection processing. FIG. 22 is a flowchart for illustrating yet another example of the selection processing. In FIG. 21 and FIG. 22, the threshold value is set in accordance with the nature of the direct sound. Specifically, in FIG. 21, threshold value adjuster 1304 identifies a threshold value from the threshold value data, based on the time difference (T) and the nature of the audio signal. In FIG. 22, threshold value adjuster 1304 adjusts, based on the nature of the audio signal, the threshold value identified from the threshold value data based on the time difference (T).

Hereinafter, the operations of each example will be described. Note that description has been omitted for processes that are shared with the example in FIG. 14.

First, an example of the processing illustrated in FIG. 21 will be described. Here, the threshold value data is stored beforehand in memory 1404 for each nature of direct sound. Accordingly, a plurality of items of threshold value data corresponding to a plurality of natures are stored beforehand in memory 1404. Then, threshold value adjuster 1304 identifies, from the plurality of items of threshold value data, the threshold value data to be used in the selection processing of reflected sounds.

For example, threshold value adjuster 1304 obtains the nature of a direct sound based on the input signal (S211). Threshold value adjuster 1304 may obtain the nature of the direct sound that is associated with the input signal. Threshold value adjuster 1304 may then identify the threshold value corresponding to the time difference (T) and the nature of the direct sound (S212).

Furthermore, as illustrated in FIG. 22, threshold value adjuster 1304 may adjust the threshold value identified by selector 1302, based on the nature of the direct sound (S221).

In any of these cases, the information indicating the nature of the audio signal, the information for adjusting the threshold value in accordance with the nature of the audio signal, or both of these may be included in the input signal. Threshold value adjuster 1304 may adjust the threshold value using one or both of these.

Furthermore, the information indicating the nature of the audio signal, the information for adjusting the threshold value, or both of these may be transmitted by another input signal aside from the input signal that includes the audio signal. In this case, information for associating the other input signal aside from the input signal may be included in the input signal that includes the audio signal, or information for associating the other input signal with the input signal may be stored in memory 1404 together with the information on threshold values.

In the examples in FIG. 21 and FIG. 22, the threshold value used in selecting each reflected sound is set in accordance with the nature of the direct sound, that is, the nature of the audio signal. Threshold value data preset for each nature may be used, as in FIG. 21, or the threshold value may be adjusted in accordance with the nature of the audio signal, as in FIG. 22. Furthermore, threshold value data parameters may be adjusted in accordance with the nature of the audio signal.

Moreover, the operations performed by threshold value adjuster 1304 may be performed by analyzer 1301 or selector 1302. For example, analyzer 1301 may obtain the nature of the audio signal. Furthermore, selector 1302 may set threshold values in accordance with the nature of the audio signal.

Next, the relationship between the nature of the audio signal and the threshold value will be described.

Two short sounds that arrive at the listener's ears in succession are heard as one sound if the time period interval between the two short sounds is sufficiently short. This phenomenon is referred to as the precedence effect. The precedence effect is known to only occur with respect to unconnected sounds, that is, transient sounds (NPL 1). Thus, when an audio signal indicates a stationary sound, the echo detection limit may be set lower than when the audio signal indicates a non-stationary sound.

In other words, the threshold value set low in accordance with the characteristics of this precedence effect when, for example, a direct sound is a stationary sound. Furthermore, the threshold value may be set lower as the stationarity is greater.

An example of processing when the nature of the audio signal is stationary will be explained. First, threshold value adjuster 1304 or analyzer 1301 assesses the stationarity based on the amount of variation in a frequency component of an audio signal accompanying the passage of time. For example, when the amount of variation is small, it is assessed that the stationarity is high. Conversely, when the amount of variation is great, it is assessed that the stationarity is low. As a result of the assessment, a graph indicating the level of stationarity may be set, or a parameter indicating the stationarity in accordance with the amount of variation may be set.

Next, threshold value adjuster 1304 adjusts the threshold value data or the threshold values based on information indicating the stationarity, such as the graph or the parameter indicating the stationarity of the audio signal, and sets the adjusted threshold value data or threshold values as threshold value data or threshold values to be used by selector 1302.

Alternatively, a parameter for setting the threshold value data in accordance with the information indicating direct sound stationarity may be stored beforehand in memory 1404. In this case, threshold value adjuster 1304 may assess the stationarity of the audio signal and set the threshold value data to be used in the selection of reflected sounds, based on the information indicating stationarity and the parameter.

Alternatively, a plurality of parameters for threshold value data may be stored beforehand in memory 1404, corresponding to a plurality of patterns of direct sound stationarity. In this case, threshold value adjuster 1304 may assess the stationarity of the audio signal, select the threshold value data parameter based on the pattern of direct sound stationarity, and set the threshold value data to be used in the selection of reflected sounds, based on the threshold value data parameter.

Note that the stationarity of an audio signal may be assessed based on the amount of variation of the frequency component of the audio signal, each time an audio signal is inputted.

Alternatively, the stationarity of an audio signal may be assessed based on information indicating stationarity that is preassociated with the audio signal. In other words, the information indicating audio signal stationarity may be associated with the audio signal and pre-stored in memory 1404. Analyzer 1301 may, each time an audio signal is inputted, obtain information indicating stationarity that is associated with the audio signal. Threshold value adjuster 1304 may then adjust the threshold values based on the information indicating stationarity that is associated with the audio signal.

As another example of threshold values being set in accordance with the nature of the audio signal, when an audio signal indicates short sounds (clicking sounds, etc.), the application scope of the echo detection limit may be set shorter than when an audio signal indicates long sounds. This processing is based on the characteristics of the precedence effect.

It is known that due to the precedence effect, two short sounds that arrive at the listener's ears in succession are heard as one sound if the time period interval between the two short sounds is sufficiently short. The upper limit of this time period interval is dependent on the length of the sounds. For example, the upper limit of this time period interval is about 5 ms for clicking sounds, but for complex sounds such as a human voice or music, the upper limit may be 40 ms (NPL 1).

In accordance with this precedence effect, for example, in the case of a sound for which the duration of a direct sound is short, threshold values for short time period lengths are set. Furthermore, threshold values for shorter time period lengths are set as the duration of the direct sound is shorter.

Threshold values for short time period lengths being set means that within a range in which the time difference (T) between a direct sound and a reflected sound is small, threshold values corresponding to an echo detection limit based on the characteristics of the precedence effect are set. Threshold values corresponding to the echo detection limit based on the characteristics of the precedence effect are not set outside of this range. In other words, outside of this range, threshold values are low. Thus, threshold values for short time period lengths being set for short sounds can correspond to low threshold values being set for short sounds.

As another example of threshold values being set in accordance with the nature of direct sounds, when a direct sound is an intermittent sound (such as speech), threshold values may be set lower than when a direct sound is a continuous sound (such as music).

For example, when a direct sound corresponds to speech, sound portions and silent portions repeat, and in the silent portions, only the post-masking effect occurs as the masking effect. On the other hand, when the direct sound is a continuous sound such as musical content, the masking effects that occur include both the post-masking effect and a simultaneous masking effect that results from sound occurring at that time. Consequently, the overall masking effect is greater in the case of music, etc. than in the case of speech, etc.

In accordance with masking effect characteristics such as those described above, threshold values may be set higher in the case of music, etc. than in the case of speech, etc. Conversely, threshold values may be set lower in the case of speech, etc. than in the case of music, etc. That is, threshold values may be set to be low when a direct sound has numerous intermittent portions.

As described above, the information indicating the nature of a direct sound may be information indicating the stationarity, intermittency, duration, etc. of the direct sound. Furthermore, the information indicating the nature of a direct sound may be any combination of these. Furthermore, the information indicating the nature of a direct sound may be information indicating the time variation of one of these, or may be information indicating the time variation of any combination of these. That is, the information indicating the nature of a direct sound may be information indicating the time variation of the direct sound.

For example, as indicated in the description of the stationarity assessment, the information indicating the nature of a direct sound may be chronological data on the frequency characteristics. Here, the frequency characteristics may be expressed in a commonly used form such as a gain value per frequency band, a Fourier series with respect to a time axis signal, a linear predictive coding (LPC) coefficient or cepstral coefficient for determining a frequency envelope, or the like.

Furthermore, the information indicating the nature of a direct sound may be, as information indicating the intermittency of direct sound, information (an amplitude envelope outline) enumerating, in chronological order, a plurality of sets of: the duration for which the amplitude of a signal is stationary; and the amplitude value of the signal for that duration. Here, the amplitude value may be expressed as a ratio with respect to the reference sound volume.

Furthermore, the information indicating the nature of a direct sound may be information on the frequency characteristics of the direct sound. For example, the information indicating the nature of a direct sound may be information indicating the stationarity of the frequency characteristics of the direct sound. Specifically the information indicating the nature of a direct sound may be information (a spectrogram outline) enumerating, in chronological order, a plurality of sets of: a duration for which the variation in frequency characteristics is small; and the frequency characteristics of the signal for the duration. Here, the sound volume used as the reference for the frequency characteristics may be the reference sound volume.

For example, the information indicating the time variation of a direct sound may be information indicating a direct sound envelope. The information indicating the time variation of a direct sound may be used when the "minimum audible limit" described in "Example 4" of FIG. 12C is the threshold limit. The signal compared to the minimum audible limit is the sound volume of a reflected sound.

The sound volume of a reflected sound is obtained by geometrical calculation from information on the positions of the sound source, the listener, and the reflection object. Specifically, the reference sound volume of the reflected sound is obtained with respect to the reference sound volume of the sound source. By adjusting the reference sound volume of the reflected sound using, as the information on the nature of a direct sound, information on the sound magnitude transition of the sound source, the sound volume of the reflected sound at each moment can be accurately determined. This is because the variation in the sound volume of the sound source is reflected in the variation in the sound volume of the reflected sound.

By comparing the sound volume of a reflected sound with the threshold value after adjusting the sound volume of the reflected sound, the reflected sounds that are auditorily necessary can be appropriately selected with more accuracy.

It goes without saying that naturally, the same result can be obtained by, without adjusting the reference sound volume of a reflected sound, adjusting the threshold value based on the inverse of the information on the sound magnitude transition of the sound source, and comparing the adjusted threshold value to the reference sound volume of the reflected sound. That is, the reference sound volume of a reflected sound may be adjusted using the information on the sound magnitude transition of the sound source, or the threshold value may be adjusted using the information on the sound magnitude transition of the sound source. The adjustment of the reference sound volume of a reflected sound and the adjustment of a threshold value correspond to each other.

Depending on the composition of the surface of an object that reflects sound, the reflectance of sound (the attenuation rate accompanying the reflection) is different for each frequency band. Accordingly, as described later, the reflectance (attenuation rate) of sound may be associated with each frequency band, for an object that reflects sound. Whether to select the reflected sound can be more accurately assessed based on such reflectance information and spectrogram information. For example, processing such as the following is performed.

Specifically, for example, it is indicated by spectrogram information that a high-frequency component is more dominant than a low-frequency component at a certain time interval. Furthermore, for example, it is indicated by sound reflectance information that the reflectance is very low at the high-frequency component, compared to the low-frequency component.

In this case, there is a possibility that even if the amplitude of the sound source signal on the time axis is high, the sound volume of the reflected sound will be low, the sound volume of the reflected sound being obtained by multiplying, by the attenuation rate for each frequency band indicated by the reflectance information, the frequency component indicated by the spectrogram information. Thus, the reflected sound will not be selected.

As described above, the information indicating the nature of a direct sound may be information indicating the time variation of the direct sound. For example, the information indicating the nature of a direct sound may indicate a value obtained by analyzing the direct sound at a predetermined time length.

Specifically, the information indicating the nature of a direct sound may be information obtained by calculating the average energy or the average amplitude of the direct sound for each predetermined time length. Furthermore, the information indicating the nature of a direct sound may be information obtained by calculating the energy or average amplitude of the direct sound for each short time analysis length, and calculating the weighted average of the energy or the average amplitude for each long time analysis length that is longer than the short time analysis length.

More specifically, for example, the information indicating the time variation of a direct sound may be information obtained by calculating the energy or the average amplitude of the direct sound for each predetermined short time length (for example, 5 ms; hereinafter, time length frames are expressed as analysis frames). Furthermore, the information indicating the time variation of a direct sound may be information represented by a weighted average of the energy or average amplitude calculated using the past N - 1 analysis frames.

When the energy of the n-th analysis frame is expressed by E(n), information I(n) indicating the nature of the direct sound is determined in accordance with the following equation.
[Math. 2] $I \left(n\right) = a \left(0\right) ⋅ E \left(n\right) + {\sum }_{i = 1}^{N - 1} a \left(i\right) ⋅ E \left(n-i\right)$

Here, parameter a(i) denotes a weighting factor. Typically, a(i) is set such that a(i) ≥ 0 and the sum of a(i) is 1. However, the method for setting a(i) is not limited thereto.

Note that information I(n) indicating the nature of a direct sound is calculated each time 5 ms of direct sound is imported. That is to say, the time variation of information I(n) indicating the nature of a direct sound can be calculated with low delay. Thus, this method is suitably applied to an application requiring real-time performance.

Furthermore, information I(n) indicating the nature of a direct sound may be determined in accordance with the following equation.
[Math. 3] $I \left(n\right) = b \left(0\right) ⋅ E \left(n\right) + {\sum }_{i = 1}^{N - 1} b \left(i\right) ⋅ I \left(n-i\right)$

Here, parameter b(i) denotes a weighting factor. Typically, b(i) is set such that b(i) ≥ 0 and the sum of b(i) is 1. However, the method for setting b(i) is not limited thereto.

In this equation, information I(n) indicating the nature of a direct sound is recursively determined. Thus, the average energy for a long time length can be calculated with a small amount of computation.

Equation 2 and Equation 3 above can be considered to be filters in which E(n) is the input signal and I(n) is the output signal. In this case, Equation 2 is a moving average (MA) model filter and Equation 3 is an autoregressive (AR) model filter, and both of these have the characteristics of a low-pass filter. Furthermore, an ARMA model filter, in which both of these are combined, may be used.

Note that the method for deriving the information indicating the time variation of a direct sound is not limited to the above-described equations or filters, and other well-known methods may be used. As described above, the information indicating the time variation of a direct sound indicates a value obtained by analyzing a direct sound at a predetermined time length. A direct sound may be analyzed from perspectives other than average energy.

Furthermore, as described above, the information indicating the nature of a direct sound may be information on the frequency characteristics of the direct sound. The information on the frequency characteristics of a direct sound may be information calculated by using the frequency characteristics of the direct sound. For example, the information on the frequency characteristics of a direct sound may be information obtained as the average energy of a low-frequency component, by averaging the low-frequency component of the direct sound at a predetermined analysis length.

Specifically, the low-frequency component of a direct sound can be determined by applying, to a direct sound contained in an analysis frame length, a filter having low-pass characteristics. From the energy or average amplitude of this low-frequency component, the information indicating the nature of a direct sound can be derived, similarly to Equation 2 described above.

When the energy of the low-frequency component of the n-th analysis frame is expressed by E_{L}(n), information I(n) indicating the nature of the direct sound can be determined in accordance with the following equation.
[Math. 4] $I \left(n\right) = c \left(0\right) ⋅ {E}_{L} \left(n\right) + {\sum }_{i = 1}^{N - 1} c \left(i\right) ⋅ {E}_{L} \left(n-i\right)$

Here, parameter c(i) denotes a weighting factor. Typically, c(i) is set such that c(i) ≥ 0 and the sum of c(i) is 1. However, the method for setting c(i) is not limited thereto.

Note that information I(n) indicating the nature of direct sound is calculated each time 5 ms of direct sound is imported. That is to say, the time variation of information I(n) indicating the nature of a direct sound can be calculated with low delay. Thus, this method is suitably applied to an application requiring real-time performance.

Furthermore, similarly to Equation 3, information I(n) indicating the nature of a direct sound can be determined in accordance with the following equation.
[Math. 5] $I \left(n\right) = d \left(0\right) ⋅ {E}_{L} \left(n\right) + {\sum }_{i = 1}^{N - 1} d \left(i\right) ⋅ I \left(n-i\right)$

Here, parameter d(i) denotes a weighting factor. Typically, d(i) is set such that d(i) ≥ 0 and the sum of d(i) is 1. However, the method for setting d(i) is not limited thereto.

In this equation, information I(n) indicating the nature of a direct sound is recursively determined. Thus, the average energy for a long time length can be calculated with a small amount of computation.

Equation 4 and Equation 5 above can be considered to be filters in which E(n) is the input signal and I(n) is the output signal. In this case, Equation 4 is a moving average (MA) model filter and Equation 5 is an autoregressive (AR) model filter, and both of these have the characteristics of a low-pass filter. Furthermore, an ARMA model filter, in which both of these are combined, may be used.

In the above description, a filter having low-pass characteristics was used in the method for determining the low-frequency component of a direct sound, but the method for determining the low-frequency component of a direct sound is not limited thereto. Furthermore, the method for deriving the information indicating the time variation of direct sound is not limited to the above-described equations or filters, and other well-known methods may be used. Furthermore, the spectrum of a direct sound can be calculated by applying frequency conversion to the direct sound. The energy or average amplitude of the low-frequency component of the spectrum can then be calculated.

Furthermore, in the above description, the MA model or the AR model is used for deriving the information indicating the time variation of a direct sound. The coefficients of these models may be predetermined fixed values, or may be variable values, which are values that temporally vary.

Furthermore, the relationship between the analysis frame length and the interval at which the information update threads are created may be as described below.

For example, when the time length of an analysis frame is TA (msec) and the interval at which information update threads are created is TU (msec), the value of N in (Equation 2) and (Equation 4), described above, in the MA filter may be approximately a value given by TU/TA. Furthermore, b(i) and d(i) (1 ≤ i < N) in (Equation 3) and (Equation 5), described above, in the AR filter may be a value that results in the time constant of the filter being about TU (msec).

The reason for this setting is that within the information update interval period, convergence of the filter is expected.

On the other hand, when, in the information indicating the time variation of a direct sound with the above-described setting, the value varies too sharply, I(n) may be precalculated. Furthermore, precalculated I(n) may be applied to the selection processing of reflected sounds. For example, in the processing of the t-th time frame, I(t + tau) may be used. Here, tau is a value defined in accordance with the characteristics of filter convergence. When the convergence is slow, the value of tau is large in comparison to when the convergence is fast.

Furthermore, as the information indicating the characteristics of a direct sound, information on auditory masking (frequency masking) calculated from the direct sound may be used. The auditory masking information indicates a threshold value of an amplitude value at a frequency region masked by a direct sound. Processing in which the amplitude values of reflected sounds in the same frequency range are compared to the threshold value, and a reflected sound having an amplitude value lower than the threshold value is not selected may be performed. The amplitude value of a reflected sound in a frequency range may be obtained by analyzer 1301 as information indicating the characteristics of a reflected sound.

When threshold values to be used in selecting reflected sounds are thus set in accordance with the nature of direct sound, it is possible to appropriately select reflected sounds that are auditorily necessary, and auditory characteristics can be effectively reflected in three-dimensional sound reproduction system 1000. Processing to detect the nature of direct sound, processing to determine threshold values in accordance with the nature, and processing to adjust the threshold values in accordance with the nature may be performed during the rendering processing, or may be performed before starting the rendering processing.

For example, these processes may be performed, for example, during virtual space creation (during software creation), when starting processing of the virtual space (when launching the software or starting rendering), or when there is an occurrence of an information update thread that periodically occurs in processing of the virtual space. Furthermore, the time of virtual space creation may be when the virtual space is built before starting acoustic processing, may be when information (spatial information) on the virtual space is obtained, or may be when software is obtained.

Here, in the information update thread, processing to update the spatial information managed by the spatial information manager (1201, 1211) is performed.

The role of the information update thread is, for example, processing to update, based on the position and orientation of the VR goggles worn by the listener, the position and orientation of the listener's avatar positioned in the virtual space, updating of the positions of objects that have moved within the virtual space, and the like. Such processing is covered within a processing thread that launches relatively infrequently, at approximately tens of Hz.

Processing to update the information indicating the nature of a direct sound may be performed by such a processing thread that is created infrequently. The reason for this is that the nature of a direct sound varies less frequently than audio processing frames for audio output occur. This makes it possible to relatively reduce the computational load of the processing. Furthermore, when the information is updated at an unduly high frequency, there is a risk of pulsive noise being generated. Updating the information at a low frequency also makes it possible to avoid such a risk.

### (Third Variation of Threshold Value Setting Method)

As another example of a threshold value setting method, threshold values may be set in accordance with computation resources (CPU capability, memory resources, PC performance, remaining level of battery, etc.) for processing reproduction of the virtual space. More specifically, sensor 1405 of audio signal processing device 1001 detects the amount of computation resources, and when the amount of computation resources is low, the threshold values are set to be high. Since consequently, the sound volume of a greater number of reflected sounds falls below the threshold values, the number of reflected sounds on which binaural processing is to be performed can be reduced, whereby the amount of computation can be reduced.

Alternatively, when the signal processing is performed by equipment that is driven by a storage battery, such as a smartphone or VR goggles, it is expected that priority is given to allowing processing to be performed for a longer duration, and computation resources are used economically. In such a case, it is not necessary to detect the amount or remaining level of computation resources, and the threshold values may be set to be high.

### (Fourth Variation of Threshold Value Setting Method)

As another example of a threshold value setting method, by including a threshold value setter, not illustrated, in audio signal processing device 1001 or audio presentation device 1002, threshold values can be set by the manager of the virtual space or the listener.

For example, an "energy-saving mode", in which there are few reflected sounds to be heard and the amount of computation is low, or a "high-performance mode", in which there are many reflected sounds to be heard and the amount of computation is high, may be selectable by the listener to whom audio presentation device 1002 is equipped. Alternatively, the mode may be selectable by the manager who manages three-dimensional sound reproduction system 1000 or by the creator of the three-dimensional sound content. Furthermore, not the mode, but the threshold values or the threshold value data may be directly selectable.

### (First Variation of Operations of Renderer)

FIG. 23 is a flowchart for illustrating a first variation of operations of audio signal processing device 1001. FIG. 23 illustrates mainly the processes performed by renderer 1300 of audio signal processing device 1001. In this variation, sound volume compensation processing is added to the operations of renderer 1300.

For example, analyzer 1301 obtains data (the input signal) (S301). Next, analyzer 1301 analyzes the data (S302). Next, selector 1302 assesses whether to select reflected sounds based on the analysis results (S303). Next, synthesizer 1303 performs sound volume compensation processing based on the reflected sounds that were not selected (S304). Next, synthesizer 1303 performs acoustic processing on the direct sounds and the reflected sounds (S305). Synthesizer 1303 then outputs the direct sounds and the reflected sounds as audio (S306).

The above-described processes (S301 to S306) other than the sound volume compensation processing (S304) are processes that are shared with the other examples described above; thus, explanation thereof has been omitted.

The sound volume compensation processing is performed in accordance with the reflected sounds that were not selected in the selection processing. For example, due to not selecting a reflected sound in the selection processing, an absence emerges in the sound volume sensation. The sound volume compensation processing reduces the incongruity that accompanies this absence in the sound volume sensation. As an example of compensating the sound volume sensation, the following two methods are disclosed. Either of these two methods may be used.

First, a method in which the sound volume sensation is compensated for by raising the sound volume of a direct sound will be described. Synthesizer 1303 raises the sound volume of the direct sound by the amount of the sound volume of a reflected sound that was not selected, and generates the direct sound. Accordingly, the sound volume sensation lost due to the reflected sound not being generated is compensated for.

At the time of raising the sound volume, synthesizer 1303 may raise the sound volume of each frequency component in accordance with the frequency characteristics of the reflected sound. In order to make such processing possible, an attenuation rate of the sound volume attenuated by the reflection object may be assigned to each of predetermined frequency bands. This makes it possible to derive the frequency characteristics of the reflected sound.

Next, a method in which the sound volume sensation is compensated for by causing a reflected sound to be synthesized in a direct sound will be described. In this method, synthesizer 1303 adds, to a direct sound, a reflected sound that was not selected and generates the direct sound to compensate for the sound volume sensation that results from the reflected sound not being generated. The sound volume (amplitude), frequency, delay, and the like of the reflected sound that was not selected are reflected in the generated direct sound.

In the case of the method for raising the sound volume of the direct sound, while the amount of computation for the compensation processing is extremely slight, only the sound volume is compensated for. In the case of the method of causing a reflected sound to be synthesized in a direct sound, the amount of computation for the compensation processing is large compared to the method of raising the sound volume of the direct sound, but the characteristics of the reflected sound are more accurately compensated for.

Since in both cases, only the direct sound is generated and the reflected sound is not generated, the total amount of computation is reduced. In particular, since the amount of computation required for binaural processing, which includes processing to implement a head-related transfer function (HRTF), is reduced, the total amount of computation is greatly reduced. The reason for this is that the amount of computation required for binaural processing is much greater than the amount of processing required for the above-described compensation processing.

Note that when the reason for a reflected sound not being selected is that the sound volume of the reflected sound is less than the masking threshold value, the sound volume sensation is not lost; thus, the reflected sound may be simply removed without performing compensation processing.

### (Second Variation of Operations of Renderer)

FIG. 24 is a flowchart for illustrating a second variation of operations of audio signal processing device 1001. FIG. 24 illustrates mainly the processes performed by renderer 1300 of audio signal processing device 1001. In this variation, left-right sound volume difference adjustment processing is added to the operations of renderer 1300.

For example, analyzer 1301 analyzes the input signal (S401). Next, analyzer 1301 detects the direction of arrival of sounds (S402). Next, selector 1302 adjusts the difference in sound volume between the sounds perceived by the left and right ears (S403). Furthermore, selector 1302 adjusts the difference in the arrival time periods (delay) between the sounds perceived by the left and right ears (S404). Selector 1302 assesses whether to select reflected sounds based on information on the adjusted sounds (S405).

The above-described processes (S401 to S405) other than the left-right sound volume difference adjustment processing (S403) and the delay adjustment (S404) are processes that are shared with the other examples described above; thus, explanation thereof has been omitted.

FIG. 25 is a diagram for illustrating an arrangement example of an avatar, a sound source object, and an obstacle object. For example, in a case in which the front direction of the listener is 0 degrees, when, as in FIG. 25, the polarities (for example, positivenegative) of the direction of arrival (θ) of the direct sound and the direction of arrival (γ) of the reflected sound are different, the sound volume difference that occurs between the ears is corrected.

Specifically, when the polarities of θ and γ are different, the ear which mainly (first) perceives the sound is different for each of the direct sound and the reflected sound. In this case, as the left-right sound volume difference adjustment processing (S403), selector 1302 adjusts the sound volume of the direct sound in accordance with the position of the ear that mainly perceives the reflected sound. For example, by multiplying the sound volume when the direct sound arrives at the listener by (1.0 - 0.3 sin(θ))(0 ≤ θ ≤ 180), selector 1302 causes attenuation of the sound volume when the direct sound arrives at the listener.

By calculating the sound volume ratio of the sound volume of the reflected sound to the sound volume of the direct sound, corrected as described above, and comparing the calculated sound volume ratio with threshold values, selector 1302 assesses whether to select reflected sounds. Accordingly, the sound volume difference that occurs between the ears is corrected, the sound volume of direct sounds that affect reflected sounds is more accurately derived, and the assessment of whether to select reflected sounds is more accurately performed.

Furthermore, in addition to the left-right sound volume difference adjustment processing (S403), selector 1302 may, as a delay adjustment (S404), delay the arrival time period of a direct sound in accordance with the positions of the ears at which a reflected sound is perceived. Specifically, selector 1302 may delay the arrival time period of a direct sound by adding, to the arrival time period of the direct sound, (a (sinθ + θ)/c)ms (where a is the radius of the head and c is the speed of sound).

### (Third Variation of Operations of Renderer)

A method for setting threshold values in accordance with directions of arrival will be described.

FIG. 26 is a flowchart for illustrating yet another example of the selection processing. Description has been omitted for processes that are shared with the example in FIG. 14. In the example in FIG. 26, selector 1302 selects reflected sounds by using threshold values in accordance with directions of arrival.

Specifically, from the direct sound arrival path (pd), the reflected sound arrival path (pr), and avatar orientation information D, each calculated by analyzer 1301, selector 1302 calculates the direct sound arrival direction (θ) and the reflected sound arrival direction (γ), each defined using the orientation of an avatar as reference. In other words, selector 1302 detects the direct sound arrival direction (θ) and the reflected sound arrival direction (γ) (S231). The orientation of the avatar corresponds to the orientation of the listener. Avatar orientation information D may be included in the input signal.

By using three indexes including the time difference (T), in addition to the direct sound arrival direction (θ) and the reflected sound arrival direction (γ), selector 1302 identifies, from a three-dimensional arrangement such as that illustrated in FIG. 18, the threshold values to be used in the selection processing (S232).

As an example, a method for setting threshold values to be used in selection processing when, as in FIG. 25, an avatar, a sound source object, and an obstacle object are arranged will be described.

Position information on the avatar, the sound source object, and the obstacle object, and avatar orientation information D are obtained from the input information. The direction (θ) of the direct sound and the direction (γ) of the sound image of the reflected sound when the orientation of the avatar is determined to be 0 degrees are calculated by using these items of position information and orientation information D. In the case of FIG. 25, the direction (θ) of the direct sound is about 20 degrees, and the direction (γ) of the sound image of the reflected sound is about 265 degrees (-95 degrees).

Next, referencing the threshold value data stored in the three-dimensional arrangement illustrated in FIG. 18, a threshold value is identified from an arrangement domain that corresponds to the values of the two directions (θ) and (γ), and the value of the time difference (T) calculated by analyzer 1301. When there is no index that corresponds to the values of (θ), (γ), and (T) that were calculated, the threshold value corresponding to the index that is closest may be identified.

As another method, threshold values may be identified by performing processing such as interpolation or extrapolation, based on one or more threshold values that correspond to one or more indexes that are closest to the values of (θ), (γ), and (T) that were calculated. For example, a threshold value corresponding to (20 degrees, 265 degrees, T) may be identified based on the four threshold values corresponding to the four indexes of (0 degrees, 225 degrees, T), (0 degrees, 270 degrees, T), (45 degrees, 225 degrees, T), and (45 degrees, 270 degrees, T).

Selection processing based on the difference between the direct sound arrival direction angle (θ) and the reflected sound arrival direction angle (γ) will be described.

For example, as illustrated in FIG. 19, threshold value data having, as a two-dimensional index arrangement: the angular difference (Φ) between the direct sound arrival direction (θ) and the reflected sound arrival direction (γ); and the time difference (T) may be pre-created and set. In this case, the angular difference (Φ) and the time difference (T) are referenced in the selection processing. Alternatively, the angular difference (Φ) between the angle (θ) of the direct sound arrival direction and the angle (γ) of the reflected sound arrival direction may be calculated in the selection processing, and the angular difference (Φ) calculated may be used to identify the threshold value.

Alternatively, threshold value data having, as an index arrangement, a combination of the angular difference (Φ), the direct sound arrival direction (θ), and the time difference (T), or a combination of the angular difference (Φ), the reflected sound arrival direction (γ), and the time difference (T) may be set.

Alternatively, as illustrated in FIG. 18, threshold value data having, as a three-dimensional index arrangement, values of (θ), (γ), and (T) may be set.

### (Fourth Variation of Operations of Renderer)

The processing performed by the above-described analyzer 1301, selector 1302, and synthesizer 1303 may, for example, be performed as pipeline processing as described in PTL 3.

FIG. 27 is a block diagram for illustrating a configuration example for renderer 1300 to perform pipeline processing.

Renderer 1300 in FIG. 27 includes reverberation processor 1311, early reflection processor 1312, distance attenuation processor 1313, selector 1314, generator 1315, and binaural processor 1316. These constituent elements may be configured as a plurality of the constituent elements of renderer 1300 illustrated in FIG. 7, or may be configured as at least a part of the plurality of constituent elements of audio signal processing device 1001 illustrated in FIG. 5.

Pipeline processing refers to dividing the processing for applying acoustic effects into a plurality of processes and executing each of the plurality of processes one by one in order. The plurality of processes include, for example, signal processing on the audio signal, generation of parameters used for signal processing, and the like.

Renderer 1300 may perform reverberation processing, early reflection processing, distance attenuation processing, binaural processing, and the like as pipeline processing. However, these types of processing are examples, and the pipeline processing may include processes other than these, or may not include a part of these processes. For example, the pipeline processing may include diffraction processing and occlusion processing. Furthermore, for example, the reverberation processing may be omitted when unneeded.

Furthermore, each process may be expressed as a stage. Moreover, the audio signals of the reflected sounds and the like generated as the result of the processes may be expressed as rendering items. The plurality of stages and the order of these stages in the pipeline processing are not limited to the example illustrated in FIG. 27.

Here, the parameters (the arrival paths, the arrival time periods, and the sound volume ratios pertaining to direct sounds and reflected sounds) used in the selection processing are calculated in one of the plurality of stages for generating the rendering items. In other words, the parameters used for selecting the reflected sounds are calculated as a part of the pipeline processing for generating the rendering items. Note that it is not necessary for all of the stages to be performed by renderer 1300. For example, a part of the stages may be omitted, or may be performed by an element other than renderer 1300.

The reverberation processing, the early reflection processing, the distance attenuation processing, the selection processing, the generation processing, and the binaural processing that may be included as stages in the pipeline processing will be described. In each stage, the metadata included in the input signal may be analyzed, and the parameters used for generating the reflected sounds may be calculated.

In the reverberation processing, reverberation processor 1311 generates an audio signal indicating reverberation sound or the parameters used in generating the audio signal. Reverberation sound is a sound that arrives at the listener as reverberation after the direct sound. As one example, the reverberation sound is a sound that arrives at the listener at a relatively late stage (for example, approximately 100 to 200 ms after the arrival of the direct sound) after the early reflected sound (to be described later) arrives at the listener, and after undergoing more reflections (for example, several tens of times) than the early reflected sound.

Reverberation processor 1311 refers to the audio signal and spatial information included in the input signal, and calculates reverberation sound by using, as a function for generating reverberation sound, a predetermined function prepared beforehand.

Reverberation processor 1311 may generate reverberation sound by applying a known reverberation generation method to the audio signal included in the input signal. One example of a known reverberation generation method is the Schroeder method, but the known reverberation generation method is not limited to the Schroeder method. Furthermore, reverberation processor 1311 uses the shape and an acoustic property of a sound reproduction space indicated by the spatial information when applying the known reverberation generation method. In this way, reverberation processor 1311 can calculate parameters for generating reverberation sound.

In the early reflection processing, early reflection processor 1312 calculates parameters for generating early reflection sounds based on the spatial information. The early reflected sound is reflected sound that arrives at the listener at a relatively early stage (for example, approximately several tens of ms after the arrival of the direct sound) after the direct sound from the sound source object arrives at the listener, and after undergoing one or more reflections.

Early reflection processor 1312 references, for example, the audio signal and metadata, and calculates the path, from reflection objects, of reflected sound that arrives at the listener after being reflected by the reflection objects. For example, in calculation of the path, the shape of the three-dimensional sound field (space), the size of the three-dimensional sound field, the positions of reflection objects such as structures, the reflectance of reflection objects, and the like may be used.

Early reflection processor 1312 may calculate the path of the direct sound. The information of said path may be used as a parameter for early reflection processor 1312 to generate the early reflected sound, and may be used as a parameter for selector 1314 to select reflected sounds.

In the distance attenuation processing, distance attenuation processor 1313 calculates the sound volume of the direct sound and the reflected sound that arrive at the listener, based on the lengths of the paths of the direct sound and the reflected sound. The sound volume of the direct sound and the reflected sound that arrive at the listener attenuate, with respect to the sound volume of the sound source, in proportion to the distance of the path to the listener (in inverse proportion to the distance). Thus, distance attenuation processor 1313 is able to calculate the sound volume of the direct sound by dividing the sound volume of the sound source by the length of the direct sound path, and is able to calculate the sound volume of the reflected sound by dividing the sound volume of the sound source by the length of the path of the reflected sound.

In the selection processing, selector 1314 selects the reflected sounds to be generated, based on the parameters calculated before the selection processing. One of the selection methods of the present disclosure may be used for selection of the reflected sounds to be generated.

The selection processing may be performed on all of the reflected sounds, or may be performed only on the reflected sounds having high evaluation values based on the evaluation processing, as described above. In other words, the reflected sounds having low evaluation values may be assessed as not selected, without performing the selection processing. For example, reflected sounds for which the sound volume is extremely low may be considered to be reflected sounds having low evaluation values, and may be assessed as not selected.

Furthermore, for example, the selection processing may be performed on all of the reflected sounds. Then, the evaluation values of the reflected sounds selected in the selection processing may be assessed, and the reflected sounds having low assessed evaluation values may be reassessed as not selected.

The selection processing and the evaluation processing may each be performed independently, or may be performed in combination with each other. When the selection processing and the evaluation processing are performed in combination with each other, either of the two processes may be performed first.

In the generation processing, generator 1315 generates direct sounds and reflected sounds. For example, generator 1315 generates direct sounds based on the direct sound arrival times and arrival time sound volume, from the audio signal included in the input signal. Furthermore, for each reflected sound selected in the selection processing, generator 1315 generates the reflected sound based on the reflected sound arrival time and the arrival time sound volume, from the audio signal included in the input signal.

In the binaural processing, binaural processor 1316 performs signal processing so that the audio signal of the direct sound is perceived as sound arriving at the listener from the direction of the sound source object. Furthermore, binaural processor 1316 performs signal processing so that the reflected sounds selected by selector 1314 are perceived as sounds arriving at the listener from the reflection object.

For example, based on the position and orientation of the listener in the sound space, binaural processor 1316 performs processing to apply an HRIR DB so that sound arrives at the listener from the position of the sound source object or the position of the obstacle object.

Note that HRIR (Head-Related Impulse Responses) is the response characteristic when one impulse is generated. Specifically, HRIR is the response characteristic obtained by converting from an expression in the frequency domain to an expression in the time domain by Fourier transforming the head-related transfer function, in which the change in sound caused by surrounding objects including the auricle, the head, and the shoulders is expressed as a transfer function. The HRIR DB is a database including such information.

Furthermore, the position and orientation of the listener in the sound space are, for example, the position and orientation of a virtual listener in a virtual sound space. The position and orientation of the virtual listener in the virtual sound space may change in accordance with movement of the head of the listener. Furthermore, the position and orientation of the virtual listener in the virtual sound space may be determined based on information obtained from sensor 1405.

The program(s), spatial information, HRIR DB, threshold value data, other parameters, and/or the like used in the above-described processing are obtained from memory 1404 included in audio signal processing device 1001, or from outside of audio signal processing device 1001.

Furthermore, the pipeline processing may contain other processes. Moreover, renderer 1300 may contain a processor that is not illustrated, for performing another process included in the pipeline processing. For example, renderer 1300 may include a diffraction processor and an occlusion processor.

The diffraction processor executes processing to generate an audio signal indicating sound including diffracted sound caused by an obstacle object between the listener and the sound source object in a three-dimensional sound field (space). Diffracted sound is sound that, when an obstacle object is present between the sound source object and the listener, arrives at the listener from the sound source object by going around the obstacle object.

The diffraction processor references, for example, the audio signal and metadata, and calculates the path by which diffracted sound arrives at the listener from the sound source object by detouring around the obstacle object, and generates diffracted sound based on the calculated path. In the calculation of the path, the sound source object in the three-dimensional sound field (space), the positions of the listener and the obstacle object, the shape and size of the obstacle object, and the like may be used.

When a sound source object is present on the other side of an obstacle object, the occlusion processor generates an audio signal for a sound that passes from the sound source object through the obstacle object and is audible therethrough, based on spatial information and information on the material, etc. of the obstacle object.

### (Sound Source Object Example)

As described above, in the position information assigned to the sound source object, a "point" in the virtual space indicates the position of a sound source object. In other words, as described above, the sound source is defined as a "point sound source".

On the other hand, a sound source in a virtual space may be defined as an object that has a length, size, shape, and the like, i.e., as a sound source that is not a point sound source, but a spatially extended sound source. In this case, the distance between the listener and the sound source, and the direction of arrival of the sound are not determined. Consequently, reflected sounds originating from such a sound source may be limited to being selected by selector 1302 without performing analysis by analyzer 1301, or regardless of the analysis result. By doing so, it is possible to avoid the sound quality degradation that might occur by not selecting the reflected sound.

Alternatively, a representative point such as the center of gravity of the object may be determined, and the processing of the present disclosure may be applied on the assumption that sound is generated from that representative point. In this case, the threshold value may be adjusted in accordance with information on the spatial extension of the sound source.

### (Examples of Direct Sound and Reflected Sound)

For example, direct sound is sound that has not been reflected by a reflection object, and reflected sound is sound that has been reflected by a reflection object. Direct sound may be sound that has arrived at the listener from a sound source without being reflected by a reflection objection, and reflected sound may be sound that has arrived at the listener from a sound source due to being reflected by a reflection object.

Furthermore, each of direct sound and reflected sound are not limited to being sound that has arrived at the listener, and may each be sound that will arrive at the listener. For example, direct sound may be sound that has been outputted from a sound source, or to put it differently, a sound source sound.

FIG. 28 is a diagram for illustrating transmission and diffraction of a sound. As illustrated in FIG. 28, a direct sound may not arrive at the listener due to the presence of an obstacle object between the sound source object and the listener. In this case, a sound that arrives at the listener after being emitted from the sound source object and passing through the obstacle object may be considered to be a direct sound. Furthermore, a sound that arrives at the listener after being emitted from the sound source object and diffracted by the obstacle object may be considered to be a reflected sound.

Furthermore, the two sounds compared in the selection processing are not limited to a direct sound and a reflected sound based on sound emitted from one sound source. For example, the selection of a sound may be performed by performing a comparison between two reflected sounds based on a sound emitted from one sound source. In this case, the direct sound in the present disclosure may be understood to be the sound that reaches the listener first, and the reflected sound in the present disclosure may be understood to be the sound that reaches the listener afterward.

### (Example Structure of Bitstream)

The bitstream includes, for example, an audio signal and metadata. The audio signal is sound data in which sound is expressed, and indicates, e.g., information on the frequency and intensity of sound. Furthermore, metadata includes spatial information on the sound space, which is the space of the sound field.

For example, the spatial information is information on the space in which the listener who hears sound based on the audio signal is positioned. Specifically, the spatial information is information about a predetermined position (localization position) in the sound space (for example, a three-dimensional sound field) for localizing the sound image of the sound at that predetermined position, that is, for causing the listener to perceive the sound as arriving from a direction that corresponds to the predetermined position. The spatial information includes, for example, sound source object information and position information indicating the position of the listener.

The sound source object information is information on a sound source object that generates sound based on the audio signal. In other words, the sound source object information is information on an object (a sound source object) that reproduces the audio signal, and is information on a virtual sound source object located in a virtual sound space. Here, the virtual sound space may correspond to real-world space in which an object that generates sound is located, and the sound source object in the virtual sound space may correspond to an object that generates sound in a real-world space.

The sound source object information may indicate, for example, the position of the sound source object located in the sound space, the orientation of the sound source object, the directivity of the sound emitted by the sound source object, whether the sound source object belongs to an animate thing, whether the sound source object is a mobile body, and the like. For example, the audio signal is associated with one or more sound source objects indicated by the sound source object information.

The bitstream includes, for example, metadata (control information) and an audio signal.

The audio signal and metadata may be contained in a single bitstream or may be separately contained in a plurality of bitstreams. Furthermore, the audio signal and metadata may be contained in a single file or may be separately contained in a plurality of files.

The bitstream may exist for each sound source or may exist for each playback time. Even in a case in which bitstreams exist for each playback time, a plurality of bitstreams may be processed in parallel simultaneously.

Metadata may be assigned to each bitstream, or may be collectively assigned to a plurality of bitstreams as information for controlling the plurality of bitstreams. In this case, the plurality of bitstreams may share the metadata. Furthermore, the metadata may be assigned for each playback time.

When a plurality of bitstreams or a plurality of files exist, information indicating a relevant bitstream or a relevant file may be contained in one or more bitstreams or one or more files. Alternatively, information indicating a relevant bitstream or a relevant file may be contained in each of all of the bitstreams or each of all of the files.

Here, the relevant bitstream or the relevant file is, for example, a bitstream or file that may be used simultaneously during acoustic processing. Furthermore, a bitstream or file that collectively describes the information indicating the relevant bitstream or the relevant file may be included.

Here, the information indicating the relevant bitstream or the relevant file may be, for example, an identifier indicating a relevant bitstream or a relevant file. Furthermore, the information indicating the relevant bitstream or the relevant file may be, for example, a file name indicating a relevant bitstream or a relevant file, a uniform resource locator (URL), a uniform resource identifier (URI), or the like.

In this case, an obtainer identifies and obtains a relevant bitstream or a relevant file based on the information indicating the relevant bitstream or the relevant file. Furthermore, the information indicating the relevant bitstream or the relevant file may be included in a bitstream or a file, and the information indicating the relevant bitstream or the relevant file may be included in a different bitstream or a different file.

Here, the file including the information indicating the relevant bitstream or the relevant file may be, for example, a control file such as a manifest file used in content distribution.

Note that the entire metadata or part of the metadata may be obtained from somewhere other than a bitstream of the audio signal. For example, either one of metadata for controlling an acoustic sound or metadata for controlling a video may be obtained from somewhere other than from a bitstream, or both may be obtained from somewhere other than from a bitstream.

Furthermore, the metadata for controlling a video may be included in the bitstream obtained by three-dimensional sound reproduction system 1000. In this case, three-dimensional sound reproduction system 1000 may output the metadata for controlling a video to a display device that displays images or a stereoscopic video reproduction device that reproduces stereoscopic videos.

### (Examples of Information Included in Metadata)

The metadata may be information used for describing a scene expressed in the sound space. As used herein, the term "scene" refers to a collection of all elements that represent three-dimensional video and acoustic events in the sound space, which are modeled in three-dimensional sound reproduction system 1000 using metadata.

Thus, the metadata may include not only information for controlling acoustic processing, but also information for controlling video processing. The metadata may include only one among the information for controlling acoustic processing or the information for controlling video processing, or may include both.

Three-dimensional sound reproduction system 1000 generates virtual acoustic effects by performing acoustic processing on the audio signal using the metadata included in the bitstream and additionally obtained interactive listener position information. Early reflection processing, obstacle processing, diffraction processing, occlusion processing, and reverberation processing may be performed as acoustic effects, and other acoustic processing may be performed using the metadata. For example, an acoustic effect such as a distance decay effect, localization, or a Doppler effect may be added.

In addition, information for switching between on and off of all or one or more of the acoustic effects, and priority information pertaining to a plurality of processes for the acoustic effects may be added to the metadata.

As an example, the metadata includes information about a sound space including a sound source object and an obstacle object and information about a localization position for localizing the sound image at a predetermined position in the sound space (that is, causing the listener to perceive the sound as arriving from a predetermined direction).

Here, an obstacle object is an object that can influence a sound emitted by a sound source object and perceived by the listener, by, for example, blocking or reflecting the sound between the sound source object and the listener. The obstacle object can include an animal or a movable body such as a machine, in addition to a stationary object. The animal may be a person or the like.

Furthermore, when a plurality of sound source objects are present in a sound space, another sound source object may be an obstacle object for a certain sound source object. In other words, non-sound-emitting objects such as building materials or inanimate objects, and sound source objects that emit sound can both be obstacle objects.

The metadata includes information indicating all or part of the shape of the sound space, the shapes and positions of obstacle objects in the sound space, the shapes and positions of sound source objects in the sound space, and the position and orientation of the listener in the sound space.

The sound space may be either a closed space or an open space. Furthermore, the metadata may include information indicating the reflectance of each obstacle object that can reflect sound in the sound space. For example, the floor, walls, ceiling, and the like constituting the boundaries of the sound space can be included in the obstacle objects.

The reflectance is an energy ratio between a reflected sound and an incident sound, and may be set for each sound frequency band. Of course, the reflectance may be uniformly set, irrespective of the sound frequency band. Note that when the sound space is an open space, for example, parameters such as a uniformly set attenuation rate, diffracted sound, and early reflected sound may be used.

The metadata may include information other than reflectance as a parameter with regard to an obstacle object or a sound source object. For example, the metadata may include information on the material of an object as a parameter related to both of a sound source object and a non-sound-emitting object. Specifically, the metadata may include information such as diffusivity, transmittance, and sound absorption rate.

For example, information on a sound source object may include information indicating, for example, sound volume, a radiation property (directivity), a reproduction condition, the number and types of sound sources of one object, and a sound source region of an object. The reproduction condition may determine whether a sound is, for example, a sound that is continuously being emitted or is emitted at an event. The sound source region of an object may be determined by the relative relationship between the position of the listener and the position of the object, or may be determined using the object as a reference.

For example, when the sound source region is determined by the relative relationship between the position of the listener and the position of the object, it is possible to cause the listener to perceive sound A from the right side of the object and sound B from the left side of the object, the right side and the left side being as seen from the listener.

Furthermore, when the sound source region is determined using the object as a reference, it is possible to fix what sound is emitted from what region of the object, using the object as a reference. For example, it is possible, when the listener sees the object from the front, to cause the listener to perceive a high sound from the right side of the object and a low sound from the left side of the object. Furthermore, it is possible, when the listener sees the object from the rear, to cause the listener to perceive a low sound from the right side of the object and a high sound from the left side of the object.

Metadata related to the space may include the time period until early reflected sound, the reverberation time period, the ratio of direct sound to diffuse sound, and the like. When the ratio between a direct sound and a diffuse sound is zero, the listener can be caused to perceive only the direct sound.

### (Identification and Use of Threshold Value)

For example, as stated above, the threshold value of the sound volume ratio between the direct sound and the reflected sound is identified from the time difference between the direct sound and the reflected sound. The identification of the threshold value may be performed by selector 1302, threshold value adjuster 1304, or another constituent element. For example, the identification of the threshold value may be performed by a threshold value identifier or a threshold value identifying device. The threshold value identifier or the threshold value identifying device may be included in selector 1302 or threshold value adjuster 1304, or may be a constituent element or a device different from selector 1302 and threshold value adjuster 1304.

Specifically, the threshold value identifier or the threshold value identifying device may include an obtainer and an identifier. The obtainer obtains a time difference between a leading sound such as a direct sound and a lagging sound such as a reflected sound. The identifier identifies a threshold value of a sound volume ratio between the direct sound and the reflected sound from the time difference between the direct sound and the reflected sound, and outputs the threshold value. Audio signal processing device 1001 may operate as the threshold value identifying device. Additionally, a plurality of constituent elements included in the threshold value identifier or the threshold value identifying device may be implemented by, for example, processor 1402 and memory 1404.

The threshold value identifying device may identify a threshold value using Equation 1 above. In this case, a time difference is a time difference between the arrival time of a leading sound and the arrival time of a lagging sound generated in response to the leading sound. The threshold value corresponds to a boundary as to whether the lagging sound is impacted by the precedence effect produced by the leading sound. The identifier identifies, as the threshold value, a sound volume ratio corresponding to the time difference on a boundary line in a region including a first axis of the time difference and a second axis of the sound volume ratio, the boundary line being defined as a line indicating the boundary.

Here, a domain of the boundary line on the first axis corresponds to a time range in which the precedence effect occurs. When the first axis is a horizontal axis and the second axis is a vertical axis, the boundary line is a downward-sloping, upwardly convex curved line in the domain.

FIG. 29 is a graph showing threshold values. Specifically, the threshold values identified using Equation 1 above are plotted. The horizontal axis corresponds to a time difference (ms) between the arrival time of a direct sound and the arrival time of a reflected sound, and the vertical axis corresponds to a sound volume ratio (dB) between the sound volume of the direct sound and the sound volume of the reflected sound. The boundary line shown in the graph indicates a boundary as to whether a lagging sound is impacted by the precedence effect produced by a leading sound, that is, a borderline (a threshold value) as to whether the reflected sound is perceived.

For example, the threshold value identifying device holds information about the graph shown in FIG. 29 in an internal memory, and identifies a threshold value, based on the information held in the internal memory. It is possible to use the threshold value for the following purposes. The threshold value identifying device may perform the following processing for using the threshold value, or audio signal processing device 1001 may perform the following processing for using the threshold value.

FIG. 30 is a diagram for illustrating a first use example of threshold values. Since reflected sounds located below the boundary line are not perceived, the reflected sounds are not selected (i.e., deactivated). In contrast, since reflected sounds located above the boundary line are perceived, the reflected sounds are selected (i.e., activated). The present use example corresponds to the example described with reference to, for example, FIG. 14.

FIG. 31 is a diagram for illustrating a second use example of threshold values. In this example, a threshold value is used to determine which reflected sound among a plurality of reflected sounds generated in the virtual space is to be selected.

For example, when a time difference between a direct sound and an i-th reflected sound among the plurality of reflected sounds is denoted by D(i) and a sound volume ratio between the direct sound and the i-th reflected sound is denoted by G(i), a distance between a point (D(i), G(i)) and a boundary line is derived. Then, N reflected sounds are selected (i.e., activated) in order of decreasing distance from the boundary line in the upward direction. The other reflected sounds are not selected (i.e., deactivated).

N reflected sounds may be selected from the plurality of reflected sounds located above the boundary line in order of decreasing distance. Alternatively, a positive sign may be assigned to a distance when the point (D(i), G(i)) is located above the boundary line, a negative sign may be assigned to a distance when the point (D(i), G(i)) is located below the boundary line, and N reflected sounds may be selected in order of decreasing distance.

The above processing makes it possible to select reflected sounds in order of decreasing perceptual priority. Accordingly, for example, even when the computer power of a computing unit that creates a virtual space is low, reflected sounds to be selected are reduced, and the amount of computation is reduced, it is possible to select a perceptually effective reflected sound.

FIG. 32 is a diagram for illustrating a third use example of threshold values. In this example, in applying (selecting) a reflected sound to be used to create a virtual space, a threshold value is used to inform whether a reflected sound to be applied (selected) is of a perceptual value.

For example, a time difference between a reflected sound to be applied and a direct sound is denoted by D(i), and a sound volume ratio between the reflected sound to be applied and the direct sound is denoted by G(i). When a point (D(i), G(i)) is located below the boundary line, since a reflected sound is not perceived even if the reflected sound is applied, it is possible to inform that the reflected sound is of no value. Alternatively, when the time difference between the reflected sound and the direction is specified, the sound volume of a reflected sound effective to the time difference may be informed.

When a reflected sound is newly applied as a sound effect in a virtual space, audio signal processing device 1001 may indicate to a manager whether the reflected sound to be applied is of perceptual value as above. Alternatively, audio signal processing device 1001 may indicate to the manager whether a reflected sound generated according to the settings of an object etc. in the virtual space is of perceptual value.

FIG. 33 is a diagram for illustrating a fourth use example of threshold values. In this example, in applying (selecting) a reflected sound to be used to create a virtual space, a threshold value is used to inform whether a reflected sound to be applied (selected) is a reflected sound that compresses dynamic range.

For example, when the number of reflected sounds to be applied increases, a total amplitude of a plurality of sounds generated in a virtual space increases. Generally, the plurality of sounds generated in the virtual space are eventually downmixed to right-left two-channel signals and heard using headphones etc. Accordingly, when a plurality of reflected sounds are applied excessively, a total amplitude of signals resulting from downmixing leads to an overflow.

By using a threshold value, it is possible to quantitatively inform, among a plurality of perceptually effective reflected sounds, a reflected sound that compresses the dynamic range only when a small number of reflected sounds are applied and a reflected sound that does not compress the dynamic range even when a large number of reflected sounds are applied.

When a reflected sound is newly applied as a sound effect in a virtual space, audio signal processing device 1001 may indicate to the manager whether the reflected sound to be applied compresses the dynamic range as above. Alternatively, audio signal processing device 1001 may indicate to the manager whether a reflected sound generated according to the settings of an object etc. in the virtual space compresses the dynamic range.

### (Basic Operation Examples)

FIG. 34 is a flowchart for illustrating a first basic operation example of audio signal processing device 1001. For example, in audio signal processing device 1001, processor 1402 that operates as a circuit performs the operations shown in FIG. 34 using memory 1404.

Specifically, processor 1402 obtains sound space information on a sound space (S1401). Next, processor 1402 obtains, based on the sound space information, a sound volume ratio between a sound volume of a direct sound and a sound volume of a reflected sound, the direct sound being generated from a sound source in the sound space, the reflected sound being generated in the sound space in response to the direct sound (S1402). In addition, processor 1402 obtains information on additional processing (S1403). Subsequently, processor 1402 controls whether to select the reflected sound, based on the information on the additional processing and the sound volume ratio (S1404).

Accordingly, audio signal processing device 1001 makes it possible to appropriately control whether to select the reflected sound, based on the information on the additional processing and the sound volume ratio between the direct sound and the reflected sound. In other words, it is possible to appropriately control whether to select the reflected sound generated in response to the direct sound generated from the sound source in the sound space. Thus, it is possible to appropriately reduce the amount of computation and the computational load.

For example, processor 1402 may adjust the sound volume ratio according to the information on the additional processing. Then, processor 1402 may control whether to select the reflected sound, based on the sound volume ratio adjusted. Accordingly, audio signal processing device 1001 makes it possible to appropriately control whether to select the reflected sound, based on the sound volume ratio into which the impact of the additional processing is incorporated.

Moreover, for example, processor 1402 may calculate a time at which a sound emitted from the sound source arrives as the reflected sound. Then, processor 1402 may control whether to select the reflected sound, based on and the time calculated, the information on the additional processing, and the sound volume ratio. Accordingly, audio signal processing device 1001 makes it possible to more appropriately select a reflected sound having a large degree of influence on the listener's perception, based on the arrival time of the reflected sound, the information on the additional processing, and the sound volume ratio between the direct sound and the reflected sound.

Furthermore, for example, processor 1402 may calculate a time difference between an arrival time of the direct sound and an arrival time of the reflected sound, based on the sound space information. Then, processor 1402 may control whether to select the reflected sound, based on the time difference calculated, the information on the additional processing, and the sound volume ratio.

Accordingly, audio signal processing device 1001 makes it possible to more appropriately select a reflected sound having a large degree of influence on the listener's perception, based on the time difference between the arrival time of the direct sound and the arrival time of the reflected sound, the information on the additional processing, and the sound volume ratio between the direct sound and the reflected sound. Thus, audio signal processing device 1001 makes it possible to more appropriately select the reflected sound having the large degree of influence on the listener's perception, based on the precedence effect.

Moreover, for example, processor 1402 may calculate a time difference between an end time of the direct sound and an arrival time of the reflected sound, based on the sound space information. Then, processor 1402 may control whether to select the reflected sound, based on the time difference calculated, the information on the additional processing, and the sound volume ratio.

Accordingly, audio signal processing device 1001 makes it possible to more appropriately select a reflected sound having a large degree of influence on the listener's perception, based on the time difference between the end time of the direct sound and the arrival time of the reflected sound, the information on the additional processing, and the sound volume ratio between the direct sound and the reflected sound. Thus, audio signal processing device 1001 makes it possible to more appropriately select the reflected sound having the large degree of influence on the listener's perception, based on a post-masking effect.

Furthermore, for example, the additional processing may be processing involving increasing or decreasing an amplitude of the reflected sound. Additionally, the information on the additional processing may be information indicating an amount of increase or decrease in amplitude in the processing involving the increasing or decreasing the amplitude of the reflected sound. Processor 1402 may adjust the sound volume ratio according to the amount of increase or decrease in amplitude. Then, processor 1402 may control whether to select the reflected sound, based on the sound volume ratio adjusted.

Accordingly, audio signal processing device 1001 makes it possible to appropriately adjust the sound volume ratio according to the amplitude that is increased or decreased by the additional processing. In addition, audio signal processing device 1001 makes it possible to appropriately control whether to select the reflected sound, based on the sound volume ratio adjusted by the additional processing.

Moreover, for example, the additional processing may be processing involving increasing or decreasing a delay of the reflected sound. Additionally, the information on the additional processing may be information indicating an amount of increase or decrease in delay in the processing involving the increasing or decreasing the delay of the reflected sound. Processor 1402 may adjust the sound volume ratio according to the amount of increase or decrease in delay. Then, processor 1402 may control whether to select the reflected sound, based on the time difference adjusted and the sound volume ratio.

Accordingly, audio signal processing device 1001 makes it possible to appropriately adjust the time difference according to the delay that is increased or decreased by the additional processing. In addition, audio signal processing device 1001 makes it possible to appropriately control whether to select the reflected sound, based on the time difference adjusted by the additional processing.

Furthermore, for example, the additional processing may be processing not applied to the direct sound. Accordingly, audio signal processing device 1001 makes it possible to apply the additional processing to the reflected sound without applying the additional processing to the direct sound. In other words, audio signal processing device 1001 makes it possible to apply, to the reflected sound, the additional processing not applied to the direct sound. Thus, audio signal processing device 1001 makes it possible to apply, to the reflected sound, the additional processing suitable for the reflected sound.

Moreover, for example, the additional processing may be filter processing that auditorily enhances sound diffusion. Accordingly, audio signal processing device 1001 makes it possible to appropriately control whether to select the reflected sound, based on information on the filter processing that auditorily enhances the sound diffusion and the sound volume ratio between the direct sound and the reflected sound.

Furthermore, for example, when the information on the additional processing indicates that the additional processing is not to be performed, the sound volume ratio need not be adjusted. Accordingly, audio signal processing device 1001 makes it possible to appropriately control whether to adjust the sound volume ratio, based on whether the additional processing is to be performed.

Moreover, for example, when the information on the additional processing indicates that the additional processing is not to be performed, the time difference need not be adjusted. Accordingly, audio signal processing device 1001 makes it possible to appropriately control whether to adjust the time difference, based on whether the additional processing is to be performed.

FIG. 35 is a flowchart for illustrating a second basic operation example of audio signal processing device 1001. For example, in audio signal processing device 1001, processor 1402 that operates as a circuit performs the operations shown in FIG. 35 using memory 1404.

Specifically, processor 1402 obtains sound space information on a sound space (S1501). Next, processor 1402 determines whether a sound source in the sound space is a point sound source, based on the sound space information (S1502).

Here, when the sound source is determined to be the point sound source (Yes in S1502), processor 1402 obtains a sound volume ratio between a sound volume of a direct sound and a sound volume of a reflected sound, the direct sound being generated from the sound source, the reflected sound being generated in the sound source in response to the direct sound (S1503). Additionally, processor 1402 calculates a time difference between arrival time of the direct sound and arrival time of the reflected sound, based on the sound space information (S1504). Next, processor 1402 controls whether to select the reflected sound, based on the sound volume ratio and the time difference (S1505).

On the other hand, when the sound source is determined not to be the point sound source (No in S1502), processor 1402 selects the reflected sound regardless of the sound volume ratio and the time difference (S1506).

Accordingly, even when a distance between the listener and the sound source is not determined and it is difficult to appropriately calculate the sound volume ratio and the time difference between the direct sound and the reflected sound, audio signal processing device 1001 makes it possible to select the reflected sound regardless of the sound volume ratio and the time difference. Thus, audio signal processing device 1001 makes it possible to suppress audio degradation that can occur when the sound source is not the point sound source.

FIG. 36 is a flowchart for illustrating a third basic operation example of audio signal processing device 1001. For example, in audio signal processing device 1001, processor 1402 that operates as a circuit performs the operations shown in FIG. 36 using memory 1404.

Specifically, processor 1402 obtains a time difference between an arrival time of a leading sound and an arrival time of a lagging sound generated in response to the leading sound (S1601). Next, processor 1402 identifies a threshold value of a sound volume ratio of a sound volume of the lagging sound to a sound volume of the leading sound, based on the time difference, and outputs the threshold value, the threshold value corresponding to a boundary as to whether the lagging sound is impacted by a precedence effect produced by the leading sound (S1602).

In identifying the threshold value, on a boundary line in a region including a first axis of the time difference and a second axis of the sound volume ratio, the sound volume ratio corresponding to the time difference obtained is identified as the threshold value, the boundary line being defined as a line indicating the boundary as to the lagging sound is impacted by the precedence effect. Here, a domain of the boundary line on the first axis corresponds to a time range in which the precedence effect occurs.

Accordingly, audio signal processing device 1001 makes it possible to appropriately identify the threshold value corresponding to the boundary of the precedence effect, based on a relationship between the time difference between the leading sound and the lagging sound and the sound volume ratio between the leading sound and the lagging sound. Additionally, audio signal processing device 1001 makes it possible to efficiently identify the threshold value for the time range in which the precedence effect occurs.

For example, when the first axis is a horizontal axis and the second axis is a vertical axis, the boundary line may be a downward-sloping, upwardly convex curved line in the domain. Accordingly, audio signal processing device 1001 makes it possible to appropriately identify the threshold value, based on the characteristics of the boundary such that the sound volume ratio decreases with an increase in the time difference and the rate of decrease of the sound volume ratio is higher than the rate of increase of the time difference. Thus, audio signal processing device 1001 makes it possible to provide an appropriate threshold value for determining whether the lagging sound is impacted by the precedence effect.

Moreover, for example, the boundary line may be defined by an equation including the time difference as a variable. In addition, the threshold value may be calculated based on the equation. Accordingly, audio signal processing device 1001 makes it possible to efficiently identify the threshold value, based on the equation. Thus, audio signal processing device 1001 makes it possible to efficiently provide the threshold value.

Here, although, in audio signal processing device 1001, processor 1402 that operates as the circuit performs the operations shown in FIG. 36 using memory 1404, in another device such as the threshold value identifying device, a circuit may perform the operations shown in FIG. 36 using a memory. Then, the threshold value identified may be provided to audio signal processing device 1001 or the other device.

In the above-described examples, memory 1404 may store, for example, programs, bitstreams, audio space information, or threshold value data (boundary data). Moreover, in operation, processor 1402 may refer to, for example, information stored in memory 1404 or obtain information from memory 1404. Furthermore, processor 1402 may store, for example, information obtained by operation, in memory 1404.

### (Supplement)

Note that the aspects understood based on the present disclosure are not limited to the embodiment, and various changes may be performed.

For example, a process performed by a certain constituent element in the embodiment may be performed by another constituent element instead of the specific constituent element. Furthermore, the order of a plurality of processes may be changed, or a plurality of processes may be performed in parallel.

Moreover, ordinals such as first and second used for description may be interchanged, removed, or newly assigned as appropriate. These ordinals do not necessarily correspond to meaningful orders, and may be used to distinguish between elements.

Furthermore, for example, in comparisons between threshold values, "greater than or equal to" a threshold value and "greater than" a threshold value may be read interchangeably. Similarly, "less than or equal to" a threshold value and "less than" a threshold value may be read interchangeably. Moreover, for example, there may be cases in which the terms "time period" and "time" are read interchangeably.

Furthermore, in a process for selecting one or more sounds to be processed from a plurality of sounds, no sounds need be selected as a sound to be processed if no sounds that satisfy the conditions exist. In other words, a case in which no sounds to be processed are selected may be included in the process for selecting one or more sounds to be processed from a plurality of sounds.

Furthermore, at least one of a first element, a second element, or a third element can correspond to the first element, the second element, or any combination of these.

In addition, for example, in the embodiment, the case in which the aspects that are understood based on the present disclosure are implemented as an acoustic processing device, an encoding device, or a decoding device has been described. However, the aspects that are understood based on the present disclosure are not limited thereto, and may be implemented as software for executing the acoustic processing method, the encoding method, or the decoding method.

For example, a program for executing the above-described acoustic processing method, encoding method, or decoding method may be stored beforehand in ROM. Then, a CPU may operate according to this program.

Furthermore, a program for executing the above-described acoustic processing method, encoding method, or decoding method may be stored on a computer-readable recording medium. Then, a computer may record, in computer RAM, the program stored on the recording medium, and operate according to this program.

Moreover, each of the above-described constituent elements may be expressed typically as a large-scale integration (LSI), which is an integrated circuit (IC) having an input terminal and an output terminal. These may take the form of individual chips, or all or one or more constituent elements of the embodiment may be encapsulated in a single chip. Depending upon the level of integration, the LSI may be expressed as an IC, a system LSI, a super LSI, or an ultra LSI.

Furthermore, such IC is not limited to an LSI, and a dedicated circuit or a general-purpose processor may be used. Alternatively, a field programmable gate array (FPGA) that allows for programming after the manufacture of an LSI, or a reconfigurable processor that allows for reconfiguration of the connection and the setting of circuit cells inside an LSI may be employed. Furthermore, when a circuit integration technology that replaces LSIs comes along owing to advances in semiconductor technology or to a separate derivative technology, the constituent elements should naturally be integrated using that technology. The adaptation of biotechnology, and the like are also conceivable as possibilities.

Moreover, an FPGA, a CPU, or the like may, by means of wireless communication or wired communication, download all or a part of the software for executing the acoustic processing method, the encoding method, or the decoding method described in the present disclosure. Furthermore, all or a part of software for updating may be downloaded by means of wireless communication or wired communication. Moreover, an FPGA, a CPU, or the like may execute the digital signal processing described in the present disclosure by storing the downloaded software in memory and operating based on the stored software.

At this time, the machine that includes the FPGA, the CPU, or the like may be connected wirelessly or in a wired manner to a signal processing device, or may be connected to a signal processing server over a network. Accordingly, this machine and the signal processing device or the signal processing server may perform the acoustic processing method, the encoding method, or the decoding method described in the present disclosure.

For example, the acoustic processing device, the encoding device, or the decoding device in the present disclosure may include an FPGA, a CPU, or the like. Furthermore, the acoustic processing device, the encoding device, or the decoding device may include: an interface for acquiring, from an external source, the software for causing the FPGA, the CPU, or the like to operate; and memory for storing the acquired software. The FPGA, the CPU, or the like may perform the signal processing described in the present disclosure by operating based on the stored software.

A server may provide the software related to the acoustic processing, the encoding processing, or the decoding processing of the present disclosure. Furthermore, a terminal or a machine may operate as the acoustic processing device, the encoding device, or the decoding device described in the present disclosure by installing the software. Note that the terminal or the machine may install the software by connecting to a server over a network.

Furthermore, the software may be installed on the terminal or the machine by means of another device that is different from the terminal or the machine obtaining data for installing the software by connecting to a server over a network and providing the data for installing the software to the terminal or the machine. Note that VR software or AR software for causing a terminal or a machine to execute the acoustic processing method described by way of the embodiment may be an example of the software.

Note that in the foregoing embodiment, each constituent element may be configured from dedicated hardware, or may be implemented by executing a software program suitable for each constituent element. Each constituent element may be implemented by means of a program executor such as a CPU or a processor loading and executing a software program recorded on a recording medium such as a hard disk or semiconductor memory.

Thus, the device and the like according to one or more aspects have been described by way of the embodiment, but the aspects understood based on the present disclosure are not limited to the embodiment. The one or more aspects may thus include forms obtained by making various modifications to the above embodiments that can be conceived by those skilled in the art, as well as forms obtained by combining constituent elements in different variations, without materially departing from the spirit of the present disclosure.

### (Addendum)

The following techniques are disclosed by the description of the foregoing embodiment.

### (Technique 1)

An acoustic processing device including: a circuit; and a memory, wherein using the memory, the circuit: obtains sound space information on a sound space; obtains, based on the sound space information, a characteristic regarding a first sound, the first sound being a sound generated from a sound source in the sound space; and controls, based on the characteristic regarding the first sound, whether to select a second sound generated in the sound space in response to the first sound.

### (Technique 2)

The acoustic processing device according to technique 1, wherein the first sound is a direct sound, and the second sound is a reflected sound.

### (Technique 3)

The acoustic processing device according to technique 2, wherein the characteristic regarding the first sound is a sound volume ratio between a sound volume of the direct sound and a sound volume of the reflected sound, and the circuit: calculates the sound volume ratio based on the sound space information; and controls whether to select the reflected sound based on the sound volume ratio.

### (Technique 4)

The acoustic processing device according to technique 3, wherein when the reflected sound is selected, the circuit generates sounds that respectively arrive at both ears of a listener by applying binaural processing to the reflected sound and the direct sound.

### (Technique 5)

The acoustic processing device according to technique 3 or 4, wherein the circuit: calculates a time difference between an end time of the direct sound and an arrival time of the reflected sound, based on the sound space information; and controls whether to select the reflected sound, based on the time difference and the sound volume ratio.

### (Technique 6)

The acoustic processing device according to technique 5, wherein when the sound volume ratio is greater than or equal to a threshold value, the circuit selects the reflected sound, and a first threshold value is greater than a second threshold value, the first threshold value being used as the threshold value when the time difference is a first value, the second threshold value being used as the threshold value when the time difference is a second value that is greater than the first value.

### (Technique 7)

The acoustic processing device according to technique 3 or 4, wherein the circuit: calculates a time difference between an arrival time of the direct sound and an arrival time of the reflected sound, based on the sound space information; and controls whether to select the reflected sound, based on the time difference and the sound volume ratio.

### (Technique 8)

The acoustic processing device according to technique 7, wherein when the sound volume ratio is greater than or equal to a threshold value, the circuit selects the reflected sound, and a first threshold value is greater than a second threshold value, the first threshold value being used as the threshold value when the time difference is a first value, the second threshold value being used as the threshold value when the time difference is a second value that is greater than the first value.

### (Technique 9)

The acoustic processing device according to technique 8, wherein the circuit adjusts the threshold value based on a direction of arrival of the direct sound and a direction of arrival of the reflected sound.

### (Technique 10)

The acoustic processing device according to any one of techniques 2 to 9, wherein when the reflected sound is not selected, the circuit corrects a sound volume of the direct sound based on a sound volume of the reflected sound.

### (Technique 11)

The acoustic processing device according to any one of techniques 2 to 9, wherein when the reflected sound is not selected, the circuit synthesizes the second sound in the direct sound.

### (Technique 12)

The acoustic processing device according to any one of techniques 3 to 9, wherein the sound volume ratio is a sound volume ratio between the sound volume of the direct sound at a first time and the sound volume of the reflected sound at a second time, the second time being different from the first time.

### (Technique 13)

The acoustic processing device according to technique 1 or 2, wherein the circuit sets a threshold value based on the characteristic regarding the first sound, and controls whether to select the second sound based on the threshold value.

### (Technique 14)

The acoustic processing device according to any one of techniques 1, 2, and 13, wherein the characteristic regarding the first sound is one or a combination of two or more of: a sound volume of the sound source; a visual property of the sound source; or a positionality of the sound source.

### (Technique 15)

The acoustic processing device according to any one of techniques 1, 2, and 13, wherein the characteristic regarding the first sound is a frequency characteristic of the first sound.

### (Technique 16)

The acoustic processing device according to any one of techniques 1, 2, and 13, wherein the characteristic regarding the first sound is a characteristic indicating intermittency of an amplitude of the first sound.

### (Technique 17)

The acoustic processing device according to any one of techniques 1, 2, 13, and 16, wherein the characteristic regarding the first sound is a characteristic indicating a duration of a sound portion of the first sound or a duration of a silent portion of the first sound.

### (Technique 18)

The acoustic processing device according to any one of techniques 1, 2, 13, 16, and 17, wherein the characteristic regarding the first sound is a characteristic indicating, in chronological order, a duration of a sound portion of the first sound and a duration of a silent portion of the first sound.

### (Technique 19)

The acoustic processing device according to any one of techniques 1, 2, 13, and 15, wherein the characteristic regarding the first sound is a characteristic indicating variation in a frequency characteristic of the first sound.

### (Technique 20)

The acoustic processing device according to any one of techniques 1, 2, 13, 15, and 19, wherein the characteristic regarding the first sound is a characteristic indicating stationarity of a frequency characteristic of the first sound.

### (Technique 21)

The acoustic processing device according to any one of techniques 1, 2, and 13 to 20, wherein the characteristic regarding the first sound is obtained from a bitstream.

### (Technique 22)

The acoustic processing device according to any one of techniques 1, 2, and 13 to 21, wherein the circuit: calculates a characteristic regarding the second sound; and controls whether to select the second sound based on the characteristic regarding the first sound and the characteristic regarding the second sound.

### (Technique 23)

The acoustic processing device according to technique 22, wherein the circuit: obtains a threshold value indicating a sound volume corresponding to a boundary that demarcates whether a sound is audible; and controls whether to select the second sound based on the characteristic regarding the first sound, the characteristic regarding the second sound, and the threshold value.

### (Technique 24)

The acoustic processing device according to technique 23, wherein the characteristic regarding the second sound is a sound volume of the second sound.

### (Technique 25)

The acoustic processing device according to technique 1 or 2, wherein the sound space information includes information on a position of a listener in the sound space, a plurality of second sounds are generated in the sound space in response to the first sound, the plurality of second sounds each being the second sound, and by controlling whether to select each of the plurality of second sounds based on the characteristic regarding the first sound, the circuit selects, from the first sound and the plurality of second sounds, one or more sounds to be processed to which binaural processing is to be applied.

### (Technique 26)

The acoustic processing device according to technique 25, wherein a timing of obtaining the characteristic regarding the first sound is at least one of: a time of creating the sound space; a start time for processing of the sound space; or a time when an information update thread is created during the processing of the sound space.

### (Technique 27)

The acoustic processing device according to technique 26, wherein the characteristic regarding the first sound is periodically obtained after starting processing of the sound space.

### (Technique 28)

The acoustic processing device according to technique 1 or 2, wherein the characteristic regarding the first sound is a sound volume of the first sound, and the circuit: calculates an evaluation value of the second sound based on the sound volume of the first sound; and controls whether to select the second sound based on the evaluation value.

### (Technique 29)

The acoustic processing device according to technique 28, wherein the sound volume of the first sound has a transition.

### (Technique 30)

The acoustic processing device according to technique 28 or 29, wherein the circuit calculates the evaluation value to increase a likelihood of the second sound being selected as the sound volume of the first sound is greater.

### (Technique 31)

The acoustic processing device according to technique 1 or 2, wherein the sound space information is scene information that includes: information on the sound source in the sound space; and information on a position of a listener in the sound space, a plurality of second sounds are generated in the sound space in response to the first sound, the plurality of second sounds each being the second sound, and the circuit: obtains a signal of the first sound; calculates the plurality of second sounds based on the scene information and the signal of the first sound; obtains the characteristic regarding the first sound from the information on the sound source; and selects, from the plurality of second sounds, one or more second sounds to which binaural processing is not to be applied, by controlling, based on the characteristic regarding the first sound, whether to select each of the plurality of second sounds as a sound to which the binaural processing is not to be applied.

### (Technique 32)

The acoustic processing device according to technique 31, wherein the scene information is updated based on input information, and the characteristic regarding the first sound is obtained in accordance with an update of the scene information.

### (Technique 33)

The acoustic processing device according to technique 31 or 32, wherein the scene information and the characteristic regarding the first sound are obtained from metadata included in a bitstream.

### (Technique 34)

An acoustic processing method including: obtaining sound space information on a sound space; obtaining, based on the sound space information, a characteristic regarding a first sound, the first sound being a sound generated from a sound source in the sound space; and controlling, based on the characteristic regarding the first sound, whether to select a second sound generated in the sound space in response to the first sound.

### (Technique 35)

A program for causing a computer to execute the acoustic processing method according to technique 34.

### (Technique 36)

The acoustic processing device according to any one of techniques 3 to 9 and 12 includes: an adding unit that applies additional processing to the second sound; an adding amount of increase or decrease obtaining unit that obtains an amount of increase or decrease in amplitude in the adding unit; and a sound volume ratio adjusting unit that adjusts the sound volume ratio, based on the amount of increase or decrease obtained by the adding amount of increase or decrease obtaining unit.

### (Technique 37)

The acoustic processing device according to any one of techniques 5 to 9 includes: an adding unit that applies additional processing to the second sound; an adding delay amount obtaining unit that obtains an amount of increase or decrease in delay in the adding unit; and a time difference adjusting unit that adjusts the time difference, based on the amount of increase or decrease obtained by the adding delay amount obtaining unit.

### (Technique 38)

The acoustic processing device according to technique 36 or 37, in which the additional processing is processing not applied to the first sound.

### (Technique 39)

The acoustic processing device according to technique 36 or 37, in which the adding unit is a filtering unit that auditorily enhances sound diffusion.

### (Technique 40)

An acoustic processing device includes a circuit and a memory, wherein using the memory, the circuit: obtains sound space information on a sound space; obtains, based on the sound space information, a sound volume ratio between a sound volume of a direct sound and a sound volume of a reflected sound, the direct sound being generated from a sound source in the sound space, the reflected sound being generated in the sound space in response to the direct sound; obtains information on additional processing; and controls whether to select the reflected sound, based on the information on the additional processing and the sound volume ratio.

### (Technique 41)

The acoustic processing device according to technique 40, in which the circuit: adjusts the sound volume ratio according to the information on the additional processing; and controls whether to select the reflected sound, based on the sound volume ratio adjusted.

### (Technique 42)

The acoustic processing device according to technique 40 or 41, in which the circuit: calculates a time at which a sound emitted from the sound source arrives as the reflected sound; and controls whether to select the reflected sound, based on the time, the information on the additional processing, and the sound volume ratio.

### (Technique 43)

The acoustic processing device according to any one of techniques 40 to 42, in which the circuit: calculates, based on the sound space information, a time difference between an arrival time of the direct sound and an arrival time of the reflected sound; and controls whether to select the reflected sound, based on the time difference, the information on the additional processing, and the sound volume ratio.

### (Technique 44)

The acoustic processing device according to any one of techniques 40 to 42, in which the circuit: calculates, based on the sound space information, a time difference between an end time of the direct sound and an arrival time of the reflected sound; and controls whether to select the reflected sound, based on the time difference, the information on the additional processing, and the sound volume ratio.

### (Technique 45)

The acoustic processing device according to any one of techniques 40 to 44, in which the additional processing is processing involving increasing or decreasing an amplitude of the reflected sound, the information on the additional processing is information indicating an amount of increase or decrease in the amplitude of the reflected sound in the processing involving the increasing or decreasing the amplitude of the reflected sound, and the circuit: adjusts the sound volume ratio according to the amount of increase or decrease in the amplitude of the reflected sound; and controls whether to select the reflected sound, based on the sound volume ratio adjusted.

### (Technique 46)

The acoustic processing device according to technique 43 or 44, in which the additional processing is processing involving increasing or decreasing a delay of the reflected sound, the information on the additional processing is information indicating an amount of increase or decrease in the delay of the reflected sound in the processing involving the increasing or decreasing the delay of the reflected sound, and the circuit: adjusts the time difference according to the amount of increase or decrease in the delay of the reflected sound; and controls whether to select the reflected sound, based on the time difference adjusted and the sound volume ratio.

### (Technique 47)

The acoustic processing device according to any one of techniques 40 to 46, in which the additional processing is processing not applied to the direct sound.

### (Technique 48)

The acoustic processing device according to any one of techniques 40 to 47, in which the additional processing is filter processing that auditorily enhances sound diffusion.

### (Technique 49)

The acoustic processing device according to technique 41 or 45, in which when the information on the additional processing indicates that the additional processing is not to be performed, the sound volume ratio is not adjusted.

### (Technique 50)

The acoustic processing device according to technique 46, in which when the information on the additional processing indicates that the additional processing is not to be performed, the time difference is not adjusted.

### (Technique 51)

An acoustic processing device includes a circuit and a memory, in which using the memory, the circuit: obtains sound space information on a sound space; determines whether a sound source in the sound space is a point sound source, based on the sound space information; when the sound source is determined to be the point sound source, (i) obtains, based on the sound space information, a sound volume ratio between a sound volume of a direct sound and a sound volume of a reflected sound, the direct sound being generated from the sound source, the reflected sound being generated in the sound space in response to the direct sound, (ii) calculates, based on the sound space information, a time difference between an arrival time of the direct sound and an arrival time of the reflected sound, and (iii) controls whether to select the reflected sound, based on the sound volume ratio and the time difference; and when the sound source is determined not to be the point sound source, selects the reflected sound regardless of the sound volume ratio and the time difference.

### (Technique 52)

A threshold value identifying device includes a circuit and a memory, in which using the memory, the circuit: obtains a time difference between an arrival time of a leading sound and an arrival time of a lagging sound generated in response to the leading sound; and identifies a threshold value of a sound volume ratio of a sound volume of the lagging sound to a sound volume of the leading sound, based on the time difference, and outputs the threshold value, the threshold value corresponding to a boundary as to whether the lagging sound is impacted by a precedence effect produced by the leading sound, in identifying the threshold value, on a boundary line in a region including a first axis of the time difference and a second axis of the sound volume ratio, the sound volume ratio corresponding to the time difference is identified as the threshold value, the boundary line being defined as a line indicating the boundary, and a domain of the boundary line on the first axis is a time range in which the precedence effect occurs.

### (Technique 53)

The threshold value identifying device according to technique 52, in which when the first axis is a horizontal axis and the second axis is a vertical axis, the boundary line is a downward-sloping, upwardly convex curved line in the domain.

### (Technique 54)

The threshold value identifying device according to technique 52 or 53, in which the boundary line is defined by an equation including the time difference as a variable, and the threshold value is calculated based on the equation.

### (Technique 55)

An acoustic processing method includes: obtaining sound space information on a sound space; obtaining, based on the sound space information, a sound volume ratio between a sound volume of a direct sound and a sound volume of a reflected sound, the direct sound being generated from a sound source in the sound space, the reflected sound being generated in the sound space in response to the direct sound; obtaining information on additional processing; and controlling whether to select the reflected sound, based on the information on the additional processing and the sound volume ratio.

### (Technique 56)

A program for causing a computer to execute the acoustic processing method according to technique 55.

### [Industrial Applicability]

The present disclosure includes aspects applicable to, for example, an acoustic processing device, an encoding device, a decoding device, or a terminal or equipment that includes any of these.

### [Reference Signs List]

1000 three-dimensional sound reproduction system
1001 audio signal processing device (acoustic processing device)
1002 audio presentation device
1100, 1120, 1500 encoding device
1101, 1113 input data
1102 encoder
1103 encoded data
1104, 1114, 1404, 1503 memory
1110, 1130 decoding device
1111 audio signal
1112, 1200, 1210 decoder
1121 transmitter
1122 transmission signal
1131 receiver
1132 reception signal
1201, 1211 spatial information manager
1202 audio data decoder
1203, 1213, 1300 renderer
1301 analyzer
1302, 1314 selector
1303 synthesizer
1304 threshold value adjuster
1311 reverberation processor
1312 early reflection processor
1313 distance attenuation processor
1315 generator
1316 binaural processor
1401 loudspeaker
1402, 1501 processor
1403, 1502 communication I/F
1405 sensor

## Claims

1. An acoustic processing device comprising:
a circuit; and
a memory,
wherein using the memory, the circuit:
obtains sound space information on a sound space;
obtains, based on the sound space information, a sound volume ratio between a sound volume of a direct sound and a sound volume of a reflected sound, the direct sound being generated from a sound source in the sound space, the reflected sound being generated in the sound space in response to the direct sound;
obtains information on additional processing; and
controls whether to select the reflected sound, based on the information on the additional processing and the sound volume ratio.

2. The acoustic processing device according to claim 1,
wherein the circuit:
adjusts the sound volume ratio according to the information on the additional processing; and
controls whether to select the reflected sound, based on the sound volume ratio adjusted.

3. The acoustic processing device according to claim 1,
wherein the circuit:
calculates a time at which a sound emitted from the sound source arrives as the reflected sound; and
controls whether to select the reflected sound, based on the time, the information on the additional processing, and the sound volume ratio.

4. The acoustic processing device according to claim 1,
wherein the circuit:
calculates, based on the sound space information, a time difference between an arrival time of the direct sound and an arrival time of the reflected sound; and
controls whether to select the reflected sound, based on the time difference, the information on the additional processing, and the sound volume ratio.

5. The acoustic processing device according to claim 1,
wherein the circuit:
calculates, based on the sound space information, a time difference between an end time of the direct sound and an arrival time of the reflected sound; and
controls whether to select the reflected sound, based on the time difference, the information on the additional processing, and the sound volume ratio.

6. The acoustic processing device according to claim 1,
wherein the additional processing is processing involving increasing or decreasing an amplitude of the reflected sound,
the information on the additional processing is information indicating an amount of increase or decrease in the amplitude of the reflected sound in the processing involving the increasing or decreasing the amplitude of the reflected sound, and
the circuit:
adjusts the sound volume ratio according to the amount of increase or decrease in the amplitude of the reflected sound; and
controls whether to select the reflected sound, based on the sound volume ratio adjusted.

7. The acoustic processing device according to claim 4 or claim 5,
wherein the additional processing is processing involving increasing or decreasing a delay of the reflected sound,
the information on the additional processing is information indicating an amount of increase or decrease in the delay of the reflected sound in the processing involving the increasing or decreasing the delay of the reflected sound, and
the circuit:
adjusts the time difference according to the amount of increase or decrease in the delay of the reflected sound; and
controls whether to select the reflected sound, based on the time difference adjusted and the sound volume ratio.

8. The acoustic processing device according to claim 1,
wherein the additional processing is processing not applied to the direct sound.

9. The acoustic processing device according to claim 1,
wherein the additional processing is filter processing that auditorily enhances sound diffusion.

10. The acoustic processing device according to claim 2 or claim 6,
wherein when the information on the additional processing indicates that the additional processing is not to be performed, the sound volume ratio is not adjusted.

11. The acoustic processing device according to claim 7,
wherein when the information on the additional processing indicates that the additional processing is not to be performed, the time difference is not adjusted.

12. An acoustic processing device comprising:
a circuit; and
a memory,
wherein using the memory, the circuit:
obtains sound space information on a sound space;
determines whether a sound source in the sound space is a point sound source, based on the sound space information;
when the sound source is determined to be the point sound source,
(i) obtains, based on the sound space information, a sound volume ratio between a sound volume of a direct sound and a sound volume of a reflected sound, the direct sound being generated from the sound source, the reflected sound being generated in the sound space in response to the direct sound,
(ii) calculates, based on the sound space information, a time difference between an arrival time of the direct sound and an arrival time of the reflected sound, and
(iii) controls whether to select the reflected sound, based on the sound volume ratio and the time difference; and
when the sound source is determined not to be the point sound source, selects the reflected sound regardless of the sound volume ratio and the time difference.

13. A threshold value identifying device comprising:
a circuit; and
a memory,
wherein using the memory, the circuit:
obtains a time difference between an arrival time of a leading sound and an arrival time of a lagging sound generated in response to the leading sound; and
identifies a threshold value of a sound volume ratio of a sound volume of the lagging sound to a sound volume of the leading sound, based on the time difference, and outputs the threshold value, the threshold value corresponding to a boundary as to whether the lagging sound is impacted by a precedence effect produced by the leading sound,
in identifying the threshold value, on a boundary line in a region including a first axis of the time difference and a second axis of the sound volume ratio, the sound volume ratio corresponding to the time difference is identified as the threshold value, the boundary line being defined as a line indicating the boundary, and
a domain of the boundary line on the first axis is a time range in which the precedence effect occurs.

14. The threshold value identifying device according to claim 13,
wherein when the first axis is a horizontal axis and the second axis is a vertical axis, the boundary line is a downward-sloping, upwardly convex curved line in the domain.

15. The threshold value identifying device according to claim 13 or claim 14,
wherein the boundary line is defined by an equation including the time difference as a variable, and
the threshold value is calculated based on the equation.

16. An acoustic processing method comprising:
obtaining sound space information on a sound space;
obtaining, based on the sound space information, a sound volume ratio between a sound volume of a direct sound and a sound volume of a reflected sound, the direct sound being generated from a sound source in the sound space, the reflected sound being generated in the sound space in response to the direct sound;
obtaining information on additional processing; and
controlling whether to select the reflected sound, based on the information on the additional processing and the sound volume ratio.

17. A program for causing a computer to execute the acoustic processing method according to claim 16.
